# EUROPEAN PATENT APPLICATION

(11) **EP 4 514 005 A1**
(43) Date of publication of application: **26.02.2025**
(21) Application number: 23791346.2
(22) Date of filing: 21.04.2023
(51) Int. Cl.: H04W 72/04, H04W 24/10

(54) **SIGNAL TRANSMISSION METHOD AND APPARATUS, TERMINAL, AND NETWORK DEVICE**

(30) Priority: 22.04.2022 CN 202210432358
(71) Applicant: Datang Mobile Communications Equipment Co., Ltd., Beijing 100085 (CN)
(72) Inventor: HUANG, Qiuping, Beijing 100085 (CN); SONG, Lei, Beijing 100085 (CN); LI, Hui, Beijing 100085 (CN); LUO, Yajuan, Beijing 100085 (CN); GAO, Qiubin, Beijing 100085 (CN)
(74) Representative: Studio Torta S.p.A.
(86) International application number: PCT/CN2023/089736
(87) International publication number: WO 2023/202694

(57) **Abstract**

The present disclosure provides a signal transmission method and device, UE, and a network device. The method includes: receiving a transmission configuration indication (TCI) information, where the TCI information is used to indicate at least one first-TCI state; transmitting a first signal according to the TCI information and at least one correspondence relationship. The at least one correspondence relationship includes at least one of the following: a first correspondence relationship between the first-TCI state and UE capabilities, and a second correspondence relationship between the first-TCI state and transmission-related information corresponding to the first signal.

## Description

### CROSS-REFERENCE TO RELATED APPLICATION

The present application is filed based on and claims the priority of Chinese Application No. 202210432358.6 filed on April 22, 2022, the disclosure of which are incorporated in their entireties by reference herein.

### TECHNICAL FIELD

The present disclosure relates to the field of communication technologies, and in particular to a signal transmission method, device, UE and network device.

### BACKGROUND

Currently, in the Third Generation Partnership Projects (3GPP) New Radio (NR) system, UE can be configured with multiple antenna panels (panels), each panel corresponds to a beam direction. Simultaneous transmission of multiple panels can increase data rate, enhance reliability, etc. However, according to the current configuration, at a moment, the base station can only select one panel for uplink resource allocation and scheduling for the UE. There is no corresponding solution for simultaneous transmission of multiple panels at the UE. There is currently no corresponding solution for how to use beam indication signaling to indicate transmission beams of multiple panels.

From the above, there is a problem that the information transmission solution for simultaneous transmission of multiple panels in the related art cannot be accurately implemented.

### SUMMARY

An object of the present disclosure is to provide a signal transmission method, device, UE and network device, which can solve the problem that the information transmission solution for simultaneous transmission of multiple panels in the related art cannot be accurately implemented.

In order to solve the above technical problem, one embodiment of the present disclosure provides a signal transmission method, including:
receiving transmission configuration indication (TCI) information; wherein the TCI information is used to indicate at least one first-TCI state;
transmitting a first signal according to the first TCI information and at least one correspondence relationship;
wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a signal transmission method, including:
determining transmission configuration indication (TCI) information and at least one correspondence relationship;
transmitting first TCI information; wherein the first TCI information is used to indicate at least one first-TCI state;
receiving a first signal corresponding to the first TCI information and the at least one correspondence relationship; wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a signal transmission method, including:
receiving first configuration information; wherein the first configuration information is used to instruct UE to perform measurement reporting related to UE capabilities;
reporting measurement information based on the first configuration information.

In one implementation, one embodiment of the present disclosure further provides a signal transmission method, including:
transmitting first configuration information to UE; wherein the first configuration information is used to instruct the UE to perform measurement reporting related to UE capabilities;
receiving measurement information corresponding to the first configuration information reported by the UE.

In one implementation, one embodiment of the present disclosure further provides a user equipment (UE), including: a transceiver, a memory, a processor and a computer program stored on the memory and executable on the processor; wherein the processor is used to read the computer program in the memory and perform the following operations:
receiving transmission configuration indication (TCI) information; wherein the TCI information is used to indicate at least one first-TCI state;
transmitting a first signal according to the first TCI information and at least one correspondence relationship;
wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a network device, including: a transceiver, a memory, a processor and a computer program stored on the memory and executable on the processor; wherein the processor is used to read the computer program in the memory and perform the following operations:
determining transmission configuration indication (TCI) information and at least one correspondence relationship;
transmitting first TCI information; wherein the first TCI information is used to indicate at least one first-TCI state;
receiving a first signal corresponding to the first TCI information and the at least one correspondence relationship; wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a signal transmission device, including:
a first receiving unit configured to receive transmission configuration indication (TCI) information; wherein the TCI information is used to indicate at least one first-TCI state;
a transmission unit configured to transmit a first signal according to the first TCI information and at least one correspondence relationship;
wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a signal transmission device, including:
a determining unit configured to determine transmission configuration indication (TCI) information and at least one correspondence relationship;
a transmission unit configured to transmit first TCI information; wherein the first TCI information is used to indicate at least one first-TCI state;
a second receiving unit configured to receive a first signal corresponding to the first TCI information and the at least one correspondence relationship; wherein the at least one correspondence relationship includes at least one of the following:
   a first correspondence relationship between the first-TCI state and UE capabilities;
   a second correspondence relationship between the first-TCI state and transmission-related information corresponding to the first signal.

In one implementation, one embodiment of the present disclosure further provides a user equipment (UE), including: a transceiver, a memory, a processor and a computer program stored on the memory and executable on the processor; wherein the processor is used to read the computer program in the memory and perform the following operations:
receiving first configuration information; wherein the first configuration information is used to instruct UE to perform measurement reporting related to UE capabilities;
reporting measurement information based on the first configuration information.

In one implementation, one embodiment of the present disclosure further provides a network device, including: a transceiver, a memory, a processor and a computer program stored on the memory and executable on the processor; wherein the processor is used to read the computer program in the memory and perform the following operations:
transmitting first configuration information to UE; wherein the first configuration information is used to instruct the UE to perform measurement reporting related to UE capabilities;
receiving measurement information corresponding to the first configuration information reported by the UE.

In one implementation, one embodiment of the present disclosure further provides a signal transmission device, including:
a first receiving unit configured to receive first configuration information; wherein the first configuration information is used to instruct UE to perform measurement reporting related to UE capabilities;
a reporting unit configured to report measurement information based on the first configuration information.
In one implementation, one embodiment of the present disclosure further provides a signal transmission device, including:
   a transmission unit configured to transmit first configuration information to UE; wherein the first configuration information is used to instruct the UE to perform measurement reporting related to UE capabilities;
   a second receiving unit configured to receive measurement information corresponding to the first configuration information reported by the UE.

In one implementation, one embodiment of the present disclosure further provides a processor-readable storage medium, including a computer program stored thereon; wherein the computer program is used to cause a processor to perform any one of the above signal transmission methods.

The beneficial effects of the above technical solution of the present disclosure are as follows:
With the signal transmission method described in the embodiment of the present disclosure, a network device transmits at least one first-TCI state for beam indication to UE, and combined with a first correspondence relationship between the first-TCI state and UE capability, and/or a second correspondence relationship between the first-TCI state and transmission-related information corresponding to a first signal, at least one first-TCI state can correspond to different UE capabilities and/or transmission-related information. By using the correspondence relationship, beams can be indicated for different panels and/or TRPs to ensure simultaneous transmission of multiple panels and/or multiple TRPs.

### BRIEF DESCRIPTION OF THE DRAWINGS

FIG. 1 is a schematic diagram showing architecture of a wireless communication system according to an embodiment of the present disclosure;
FIG. 2 is a schematic flowchart of a first implementation mode of a signal transmission method according to an embodiment of the present disclosure;
FIG. 3 is a schematic flowchart of a second implementation mode of a signal transmission method according to an embodiment of the present disclosure;
FIG. 4 is a schematic diagram of a UE according to an embodiment of the present disclosure;
FIG. 5 is a schematic diagram of a network device according to an embodiment of the present disclosure;
FIG. 6 is a schematic diagram of a signal transmission device according to an embodiment of the present disclosure;
FIG. 7 is a schematic diagram of a signal transmission device according to another embodiment of the present disclosure;
FIG. 8 is a schematic flowchart of a third implementation mode of a signal transmission method according to an embodiment of the present disclosure; and
FIG. 9 is a schematic flowchart of a fourth implementation mode of a signal transmission method according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or". The term "plurality" in the embodiments of the present disclosure means two or more, and other quantifiers are similar.

The terms "first" and "second" in the embodiments of the present disclosure are used to distinguish similar objects rather than to describe a specific order or sequence.

"Determining B based on A" in the present disclosure means that the factor A needs to be considered when determining B, and it is not limited to that "B can be determined based on A alone", and it also includes: "determining B based on A and C", "determining B based on A, C and E", "determining C based on A, and further determining B based on C", etc. In addition, it can also include taking A as a condition for determining B, for example, "when A meets a first condition, using a first method to determine B"; for another example, "when A meets a second condition, determining B", etc.; for another example, "when A meets a third condition, determining B based on a first parameter", etc. Of course, it can also include taking A as a condition for determining a factor for determining B, for example, "when A meets a first condition, using a first method to determine C, and further determining B based on C", etc.

"Determining B according to A" in the present disclosure means that the factor A needs to be considered when determining B, and it is not limited to that "B can be determined according to A alone", and it also includes: "determining B according to A and C", "determining B according to A, C and E", "determining C according to A, and further determining B according to C", etc. In addition, it can also include taking A as a condition for determining B, for example, "when A meets a first condition, using a first method to determine B"; for another example, "when A meets a second condition, determining B", etc.; for another example, "when A meets a third condition, determining B based on a first parameter", etc. Of course, it can also include taking A as a condition for determining a factor for determining B, for example, "when A meets a first condition, using a first method to determine C, and further determining B according to C", etc.

"In case of A, performing B" in the present disclosure includes but is not limited to performing the step B as long as condition A is satisfied. It also includes: "in case of meeting conditions A and C, performing B", "in case of meeting conditions A, C and E, performing B", etc.

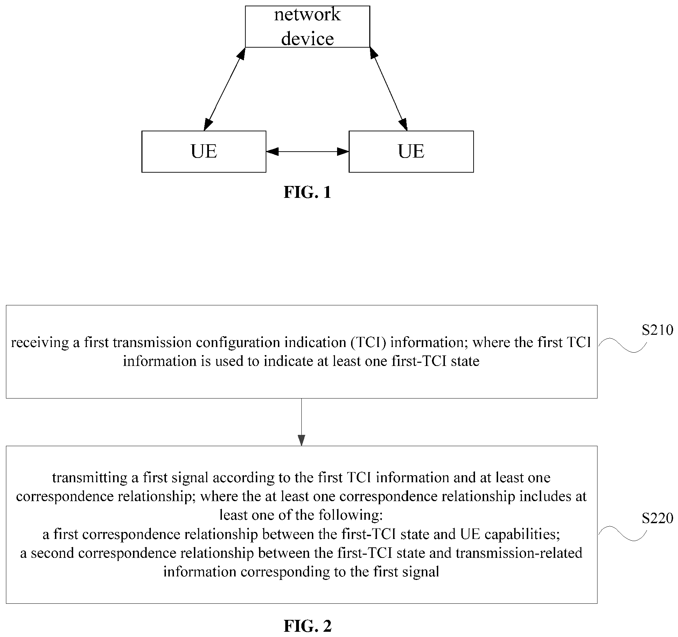

FIG. 1 is a schematic diagram of a wireless communication system to which the signal transmission method described in the embodiment of the present disclosure can be applied. The wireless communication system includes a terminal device and a network device.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiments of the present disclosure may be a base station which includes a plurality of cells providing services for the terminal device. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other. In some network structures, the network device may also be a terminal device having all or part of the aforementioned functions.

The signal transmission method described in the embodiments of the present disclosure is applied to systems including but not limited to the fifth-generation mobile communication (5th-Generation, 5G) system (such as NR systems), 6G system or evolution system of 6G system, or other Orthogonal Frequency Division Multiplexing (OFDM) system, Discrete Fourier Transform-Spread OFDM (DFT-S-OFDM) system, etc.

The application scenarios of the signal transmission method described in the embodiments of the present disclosure include multiple transmission and reception points (TRPs) scenario and single TRP scenario. Its application scenarios include high, medium and low frequency transmission.

In the NR system, for medium and high frequency transmission (especially FR2 band), due to the limited transmission range, uplink and downlink channels are usually transmitted after beamforming to enhance coverage. Beamforming direction can be determined by beam sweeping of uplink and downlink reference signals, for example, performing beam sweeping on Channel State Information (CSI)-Reference Signal (RS) or Sounding Reference Signal (SRS) in different directions, and selecting a direction of a reference signal with the best beam quality for uplink or downlink transmission. When beam directions of different channels are determined, it is necessary to use signaling to indicate beams during channel transmission, that is, beam indication.

Currently, in some protocols, different beam indication signaling is used for different channels, and beam indication is performed independently for each channel. In this way, different channels can use different beams for transmission. However, an important scenario in practical applications is that multiple channels use the same beam direction. For example, Physical Uplink Control Channel (PUCCH) and Physical Uplink Share Channel (PUSCH) also use the same beam direction. When beam reciprocity exists, uplink and downlink channels can also use the same beam direction. At this point, the above independent beam indication method increases system complexity and signaling indication overhead.

In order to overcome the above problems, in some protocols, a method of using one beam indication signaling to indicate multiple channel beams is introduced, which activates a group of Transmission configuration indication (TCI) states through Media Access Control-Control Element (MAC-CE), and then uses DCI to indicate one activated TCI state (that is, TCI state) of them. When uplink and downlink channels are reciprocal, a beam indicated by the beam indication signaling can be used for both the uplink channel and the downlink channel; when energy leakage problems occur due to human body obstruction or UE needs to switch the uplink beam, the uplink channel will use different beams from the downlink channel, then the beam indication signaling needs to indicate an uplink channel beam and a downlink channel beam respectively.

Currently, the above beam indication method cannot be applied to the situation where existing UE configured with multiple antenna panels performs simultaneous transmission of multiple panels/multiple TRPs, as it cannot indicate different beams for different panels, and it cannot achieve dynamic switching between multi-panel multi-TRP transmission, single TRP multi-panel transmission, or single TRP single panel transmission.

In order to solve the above technical problems, one embodiment of the present disclosure provides a signal transmission method, in which a network device transmits at least one first-TCI state for beam indication to UE, and combined with a first correspondence relationship between the first-TCI state and UE capability, and/or a second correspondence relationship between the first-TCI state and transmission-related information corresponding to a first signal, at least one first-TCI state can correspond to different UE capabilities and/or transmission-related information. By using the correspondence relationship, beams can be indicated for different panels and/or TRPs to ensure simultaneous transmission of multiple panels and/or multiple TRPs.

FIG. 2 is a schematic flowchart of a signal transmission method according to an embodiment of the present disclosure. Referring to FIG. 2, the signal transmission method according to one embodiment of the present disclosure, optionally applied to UE, includes:
S210: receiving a first transmission configuration indication (TCI) information; where the first TCI information is used to indicate at least one first-TCI state;
S220: transmitting a first signal according to the first TCI information and at least one correspondence relationship; where the at least one correspondence relationship includes at least one of the following:
   a first correspondence relationship between the first-TCI state and UE capabilities;
   a second correspondence relationship between the first-TCI state and transmission-related information corresponding to the first signal.

By using the signal transmission method according to the embodiment of the present disclosure, according to at least one first-TCI state transmitted by the network device in combination with the at least one correspondence relationship, the UE can determine UE capability and/or transmission-related information corresponding to all or part of TCI states in the at least one first-TCI state; then, based on the UE capability and/or transmission-related information, transmission parameters corresponding to each panel and/or TRP can be determined, thereby achieving simultaneous transmission of multiple panels (single TRP or multiple TRPs). Optionally, each first-TCI state corresponds to one panel. Optionally, different first-TCI states correspond to different panels. Optionally, any two first-TCI states correspond to different panels or TRPs.

The transmission parameters include but are not limited to one or more of the following: precoding matrix, time-domain resource, frequency-domain resource, spatial filter parameter (or transmission beam), transmission layer number, Demodulation Reference Signal (DMRS) port.

In the embodiment of the present disclosure, optionally, the transmission-related information corresponding to the first signal includes transmission-related information used for transmitting the first signal and/or transmission-related information corresponding to transmission of the first signal.

Optionally, the transmission-related information includes one or more of scheduling information, power control parameter, resource set, transmission occasion, transmission repetition, transmission layer, transport block (TB), antenna port, frequency-domain resource and code word.

Optionally, when the transmission-related information includes the power control parameter, the power control parameter may also be a power control parameter set.

Optionally, when the transmission-related information includes the resource set, the resource set includes at least one of SRS resource and SRS resource set.

Optionally, when the transmission-related information includes the transmission repetition, the transmission repetition may also be referred as transmission duplication.

In the embodiment of the present disclosure, the transmission-related information corresponding to the first signal may include scheduling information corresponding to the first signal, power control parameter corresponding to the first signal, resource set corresponding to the first signal, transmission occasion corresponding to the first signal, transmission repetition corresponding to the first signal, transmission layer corresponding to the first signal, transport block (TB) corresponding to the first signal, antenna port corresponding to the first signal, frequency-domain resource corresponding to the first signal and code word corresponding to the first signal.

Optionally, the scheduling information corresponding to the first signal may include scheduling information in a scheduling signaling of the first signal and/or scheduling information used for transmission of the first signal.

Optionally, a transmission occasion is a set of time-frequency resources.

Optionally, all transmission occasions transmit the same transmission block (TB).

Optionally, all transmission occasions correspond to the same transmission layer number and the same time-frequency resource.

Optionally, frequency-domain resources of any two transmission occasions are different.

Optionally, any two transmission occasions correspond to the same transmission layer.

Optionally, any two transmission occasions correspond to different transmission layers.

In some embodiments of the present disclosure, optionally, the second correspondence relationship between the transmission-related information of the first signal and the first-TCI state of the TCI states includes at least one of the following:
the first signal includes multiple transmission occasions at a same moment, and each transmission occasion corresponds to one first-TCI state indicated by the first TCI information; optionally, different transmission occasions correspond to different first-TCI states;
the first signal includes multiple groups of layers, each group of layers corresponds to one first-TCI state indicated by the first TCI information; optionally, different groups of layers correspond to different first-TCI states;

The first signal corresponds to multiple groups of antenna ports, and each group of antenna ports corresponds to one first-TCI state indicated by the first TCI information. Optionally, different groups of antenna ports correspond to different first-TCI states. Optionally, the antenna port is a DMRS port.

The first signal is transmitted in multiple sets of frequency-domain resources at the same moment, and each set of frequency-domain resources corresponds to one first-TCI state indicated by the first TCI information. Optionally, different frequency-domain resources correspond to different first-TCI states.

The first signal corresponds to multiple groups of scheduling information, and each group of scheduling information corresponds to one first-TCI state indicated by the first TCI information. Optionally, different scheduling information corresponds to different first-TCI states.

The first signal includes multiple code words; each code word corresponds to one first-TCI state indicated by the first TCI information. Optionally, different code words correspond to different first-TCI states.

Optionally, when the transmission-related information does not include a transmission occasion, the transmission-related information has an association relationship with the transmission occasion of the first signal. The transmitting a first signal according to the first TCI information and at least one correspondence relationship, includes: determining transmission-related information and TCI state corresponding to each transmission occasion of the first signal according to the first TCI information and the at least one correspondence relationship and the association relationship; and transmitting the first signal at each transmission occasion according to the transmission-related information and TCI state.

By using this implementation, based on the first TCI information and at least one correspondence relationship, it can also determine how many TCI states the transmission of the first signal corresponds to; based on the number of TCI states, it is determined whether it is one or a combination of single-panel transmission, multi-panel transmission, single-TRP transmission, multi-TRP transmission, thereby achieving switching between single panel and multi-panel, switching between single TRP and multi-TRP, etc.

In this example, the UE can determine the TCI state corresponding to one or more panels of the UE according to the first-TCI state and the UE capabilities. Thus, the spatial filter (i.e., the transmission beam) of each panel can be further determined. Optionally, when the TCI state has an association relationship with the transmission-related information corresponding to the first signal, the UE may further determine spatial filter corresponding to the transmission-related information corresponding to each first signal.

In the embodiment of the present disclosure, optionally, the first correspondence relationship between the first-TCI state and the UE capability is the first correspondence relationship between at least one first-TCI state indicated by the first TCI information and the UE capability. Optionally, the first correspondence relationship between the first-TCI state and the UE capability is a first correspondence relationship between some of the first-TCI states in at least one first-TCI state indicated by the first TCI information and the UE capability.

In the embodiment of the present disclosure, optionally, the second correspondence relationship between the first-TCI state and the transmission-related information corresponding to the first signal is a second correspondence relationship between at least one first-TCI state indicated by the first TCI information and the transmission-related information corresponding to the first signal. Optionally, the second correspondence relationship between the first-TCI state and the transmission-related information corresponding to the first signal is a second correspondence relationship between some of first-TCI states in the at least one first-TCI state indicated by the first TCI information and the transmission-related information corresponding to the first signal.

In the embodiment of the present disclosure, optionally, the network device indicates the at least one correspondence relationship to the UE. That is, the UE receives at least one correspondence relationship indicated by the network device. Optionally, the at least one correspondence relationship is indicated through one or more of RRC signaling, MAC CE signaling, and downlink control information (DCI) signaling.

For example, when there is only one type of transmission-related information, the network device may directly indicate the at least one correspondence relationship through one signaling.

For example, when there are multiple types of transmission-related information, one indication manner is that: the network device indicates, through the same indication information, a second correspondence relationship between the first-TCI state and multiple types of transmission-related information.

As another example, when there are multiple types of transmission-related information, the indication manner is that the network device indicates to the UE a fifth relationship between the first-TCI state and one type of the transmission-related information. In this manner, a relationship between other transmission-related information and the first TCI may be determined based on the fifth relationship and a relationship between the other transmission-related information and the one type of the transmission-related information.

For example, the second correspondence relationship is a correspondence relationship between the first-TCI state, precoding matrix indication information and transmission occasion. The network device indicates a correspondence relationship between the first-TCI state and the transmission occasion, and there is also a correspondence relationship between the transmission occasion and the precoding matrix indication information. The UE can obtain a correspondence relationship (i.e., the second correspondence relationship) between the first-TCI state, the transmission occasion and the precoding matrix indication information, based on the correspondence relationship between the first-TCI state and the transmission occasion indicated by the network device, and the correspondence relationship between the transmission occasion and the precoding matrix indication information.

In one implementation of the signal transmission method according to the embodiment of the present disclosure, when the first TCI information indicates at least two first-TCI states, the method further includes:
in a same time unit, transmitting the first signal according to the at least two first-TCI states and the at least one correspondence relationship.

Optionally, the same time unit includes at least one of one or more consecutive frames, one or more consecutive slots, and one or more consecutive symbols.

Optionally, the same time unit is a same moment.

By using this implementation, according to the at least two first-TCI states and the at least one correspondence relationship, the first signal can be transmitted through multiple panels/multiple TRPs at the same time unit.

Optionally, the at least two first-TCI states at least include a first first-TCI state and a second first-TCI state.

Optionally, transmitting the first signal according to the at least two first-TCI states and the at least one correspondence relationship includes: determining spatial filter of the uplink signal according to a reference signal for determining spatial parameter corresponding to the at least two first-TCI states.

Optionally, the first signal includes multiple transmission layers; and the transmitting the first signal according to the at least two first-TCI states and the at least one correspondence relationship includes: when transmitting the first signal, in the same time-frequency domain resource, a layer associated with the first first-TCI state and a layer associated with the second first-TCI state are different layers. Which layers correspond to the first first-TCI state and which layers correspond to the second first-TCI state are determined based on the at least one correspondence relationship.

It is to be noted that in the embodiment of the present disclosure, the first first-TCI state and the second first-TCI state mentioned here are only used to distinguish different first-TCI states, and there is no order of priority.

Optionally, when transmitting the first signal, the first signal is mapped to multiple frequency-domain resources; and the transmitting the first signal according to the at least two first-TCI states and the at least one correspondence relationship includes: when transmitting the first signal, a frequency-domain resource associated with the first first-TCI state and a frequency-domain resource associated with the second first-TCI state are different frequency-domain resources. Which frequency-domain resources correspond to the first first-TCI state and which frequency-domain resources correspond to the second first-TCI state are determined based on the at least one correspondence relationship.

Optionally, the first first-TCI state corresponds to an even-numbered PRB, and the second first-TCI state corresponds to an odd-numbered PRB.

Optionally, the first first-TCI state corresponds to an even-numbered physical resource block group (PRG), and the second first-TCI state corresponds to an odd-numbered PRG. The PRG is a PRB group.

Optionally, the first first-TCI state corresponds to a first half of the frequency-domain resource allocated to the uplink signal, and the second first-TCI state corresponds to a second half of the frequency-domain resource allocated to the uplink signal.

Optionally, a demodulation reference signal (DMRS) port of the first signal corresponds to multiple code division multiplexing (CDM) groups; and the transmitting the first signal according to the at least two first-TCI states and the at least one correspondence relationship includes: according to an association relationship between the DMRS port and the first-TCI state, determining transmission parameters such as precoding matrix and/or spatial filter (i.e., transmission beam) corresponding to the first signal; in the DMRS port of the first signal, a CDM group associated with the first first-TCI state and a CDM group associated with the second first-TCI state are different CDM groups. Which CDM groups correspond to the first first-TCI state and which CDM groups correspond to the second first-TCI state are determined based on the at least one correspondence relationship.

Optionally, the DMRS port of the first signal is indicated by DMRS port indication information sent by the network device. The DMRS port indication information indicates a DMRS port belonging to one or more CDM groups. An antenna port of each CDM group is associated with one TCI state indicated by the TCI indication information. Different CDM groups are associated with different TCI states.

Optionally, the UE also receives scheduling information, and the scheduling information has an association relationship with the CDM group.

Optionally, there are multiple groups of scheduling information, and each group of scheduling information is associated with one CDM group. Optionally, when there are multiple groups of scheduling information and the DMRS port indication information indicates DMRS ports belonging to multiple CDM groups, each group of scheduling information is associated with one CDM group. Optionally, when the DMRS port indication information indicates a DMRS port belonging to one CDM group, one group of scheduling information is associated with the CDM group, and other group scheduling information is ignored.

Optionally, there are multiple groups of scheduling information, one group of scheduling information is associated with all CDM groups, and one group of scheduling information is associated with one CDM group (for example, only the first TPMI/SRI field indicates a layer number, and other TPMI/SRI fields use the layer number indicated by the first TPMI/SRI field.

Optionally, there are multiple groups of scheduling information. When the DMRS port indication information indicates DMRS ports belonging to multiple CDM groups, one group of scheduling information is associated with all CDM groups, and one group of scheduling information is associated with one CDM group. Optionally, when the DMRS port indication information indicates a DMRS port belonging to one CDM group, one group of scheduling information is associated with the CDM group, and other group of scheduling information is ignored.

Optionally, the first signal includes multiple code words; and the transmitting the first signal according to the at least two first-TCI states and the at least one correspondence relationship includes: when transmitting the first signal, a first code word corresponds to the first first-TCI state, and the second code word corresponds to the second first-TCI state. Which code word corresponds to the first first-TCI state and which code word corresponds to the second first-TCI state can be determined according to the at least one correspondence relationship. Optionally, the first code word and the second code word correspond to the same time-frequency resource. Optionally, the first code word and the second code word correspond to different time-frequency resources.

Optionally, the UE also receives scheduling information, and the scheduling information has an association relationship with the CDM group.

Optionally, there are multiple groups of scheduling information, and each group of scheduling information corresponds to one code word. Optionally, one group of scheduling information is associated with one code word (for example, only the first TPMI/SRI field indicates a layer number, and other TPMI/SRI fields uses the layer number indicated by the first TPMI/SRI field). Optionally, part of the scheduling information is associated with one code word, and part of the scheduling information is associated with all code words. Optionally, when transmission of the first signal corresponds to one code word, one group of scheduling information is associated with the code word, and other groups of scheduling information are ignored.

Optionally, the first signal is transmitted based on multiple of precoding matrices; and the transmitting the first signal according to the at least two first-TCI states and the first correspondence relationship includes: when transmitting the first signal, one precoding matrix is associated with the first first-TCI state, and the other precoding matrix is associated with the second first-TCI state. Which precoding matrix corresponds to the first first-TCI state and which precoding matrix corresponds to the second first-TCI state can be determined according to the at least one correspondence relationship.

Optionally, when transmitting the first signal, the first signal has multiple transmission occasions; and the transmitting the first signal according to the at least two first-TCI states and the at least one correspondence relationship includes: when transmitting the first signal, a transmission occasion associated with the first first-TCI state and a transmission occasion associated with the second first-TCI state are different transmission occasions. Which transmission occasion corresponds to the first first-TCI state and which transmission occasion corresponds to the second first-TCI state can be determined according to the at least one correspondence relationship. Optionally, the transmission occasion is a transmission occasion in the frequency-domain. Optionally, the transmission occasion is a transmission occasion in the time domain.

Optionally, transmission of the first signal includes multiple transmission blocks (TB); and the transmitting the first signal according to the at least two first-TCI states and the at least one correspondence relationship includes: when transmitting the first signal, a first TB is associated with the first first-TCI state, and the second TB is associated with the second first-TCI state. Which TB corresponds to the first first-TCI state and which TB corresponds to the second first-TCI state can be determined according to the at least one correspondence relationship.

In some embodiments, optionally, the first TCI information indicates multiple first-TCI states, and the first-TCI states associated with any two transmission occasions/frequency-domain resources/code words/transmission layer groups/DMRS CDM groups/UE capabilities/transmission repetitions/scheduling information/power control parameter groups are different.

Optionally, the first TCI information indicates a first first-TCI state and a second first-TCI state, and the even-numbered transmission occasions among the multiple transmission occasions are associated with the first first-TCI state, and the odd-numbered transmission occasions are associated with the second first-TCI state.

Optionally, the TCI indication information indicates a first first-TCI state and a second first-TCI state, and the multiple transmission occasions are grouped in pairs, the even-numbered groups of transmission occasions are associated with the first first-TCI state, and the odd-numbered groups of transmission occasions are associated with the second first-TCI state.

Optionally, the TCI indication information indicates a first first-TCI state and a second first-TCI state; and the first half of the multiple transmission occasions are associated with the first first-TCI state, and the second half of the multiple transmission occasions are associated with the second first-TCI state.

Optionally, in the step S220, the transmitting the first signal includes sending the first signal or receiving the first signal. That is, the first signal may be an uplink signal or a downlink signal.

For example, some uplink signals include PUSCH signals (may also be called PUSCH transmission, etc.), PUCCH signals (may also be called PUCCH transmission, etc.), uplink DMRS, or SRS and other uplink signals. Some downlink signals include PDSCH signal, PDCCH signal, downlink DMRS, CSI-RS, etc.

Optionally, the first-TCI state is used to indicate a Quasi Co-Location (QCL) relationship. For example, it can be used to indicate types of signals and large-scale parameters that can be used as QCL reference. The QCL relationship includes but is not limited to one or more of the following:
QCL-TypeA: corresponding to large-scale parameter Doppler frequency shift, Doppler spread, average delay, and Doppler spread;
QCL-TypeB: corresponding to large-scale parameter Doppler frequency shift and Doppler spread to obtain channel estimation information;
QCL-TypeC: corresponding to large-scale parameter Doppler frequency shift, measurement information such as average delay, obtaining RSRP;
QCL-TypeD: corresponding to large-scale parameter space Rx parameter-assisted UE beamforming.

Optionally, the first-TCI state is further used to indicate its corresponding power control parameter. After the UE determines the first-TCI state corresponding to a certain transmission-related parameter, the UE can transmit, according to the corresponding power control parameter, the first signal at a transmission occasion corresponding to the transmission-related parameter.

Optionally, in the step S210, at least one first-TCI state indicated by the first TCI information is used for beam indication.

Optionally, at least one first-TCI state indicated by the first TCI information is a TCI state used for uplink transmission, and/or is a TCI state corresponding to transmission of the first signal.

In the embodiment of the present disclosure, optionally, when the first signal is an uplink signal, the first-TCI state is a TCI state for uplink; and when the first signal is a downlink signal, the first-TCI state is a TCI state for downlink. Optionally, the first-TCI state is a TCI state shared by uplink and downlink.

In one embodiment, when the first signal is an uplink signal,
the first TCI information indicates multiple TCI states, a part of the TCI states is the first-TCI state, i.e., the TCI state corresponding to uplink transmission, and the other part of the TCI states is the TCI state corresponding to downlink transmission; or
all TCI states indicated by the first TCI information are the first-TCI states, and are all TCI states used for uplink transmission.

Optionally, the first signal includes at least one of PUCCH and PUSCH.

In one implementation, optionally, in the step S210, receiving the first TCI information includes:

Receiving the first TCI information through one or more signaling among Radio Resource Control (RRC) signaling, MAC-CE signaling and DCI signaling.

In one embodiment, optionally, when the at least one correspondence relationship at least includes the first correspondence relationship, in the first correspondence relationship, the first-TCI state has a correspondence relationship with the UE capability.

Optionally, the UE capability includes transmission capability corresponding to the UE's panel, which, for example, can be determined by a capability value set index reporting (capabilityValueSetIndexReporting). Optionally, the UE capability includes the number of SRS ports and/or the number of multiple-in Multipleout (MIMO) transmission layers supported by the UE.

Optionally, the UE capability includes the number of SRS ports and/or the number of MIMO transmission layers corresponding to one or more of a transmission occasion of PUSCH, a transmission repetition, a code word, an SRS resource set, and a DMRS port group supported by the UE.

In one embodiment of the present disclosure, the first correspondence relationship includes at least one of the following:
the at least one first-TCI state corresponds to UE capabilities in a one-to-one manner;
in case that a third condition is satisfied, the at least one first-TCI state corresponds to a first UE capability indicated by a third indication field in a fourth indication field; where the fourth indication field is a field for indicating the UE capability included in a scheduling signaling corresponding to the first signal;
in case that a fourth condition is satisfied, the at least one first-TCI state corresponds to the UE capabilities in a one-to-one manner, or the at least one first-TCI state corresponds to UE capabilities indicated by the fourth indication field in a one-to-one manner; where the fourth indication field is a field for indicating the UE capability included in a scheduling signaling corresponding to the first signal;
the first condition includes one or more of the following:
   the number of the at least one first-TCI state is one;
   the scheduling signaling corresponding to the first signal includes only one fourth indication field;
   the second condition at least includes one or more of the following:
   the number of the at least one first-TCI state is N;
   the scheduling signaling corresponding to the first signal includes N fourth indication fields, where N is an integer greater than 1.

In another implementation in the embodiment of the present disclosure, optionally, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that the second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, the transmission-related information includes at least one piece of information, and the first transmission-related information is one or more pieces of information in the transmission-related information. For example, the first transmission-related information includes, but is not limited to only including scheduling information.

Taking the first transmission-related information including scheduling information as an example, in case that the above first condition is satisfied, the scheduling information corresponding to the first signal includes scheduling information indicated by a designated field in the scheduling signaling corresponding to the first signal, for example, the designated field is first scheduling information indicated by a first designated field in the scheduling signaling corresponding to the first signal; in case that the above second condition is satisfied, the scheduling information corresponding to the first signal includes scheduling information indicated by the scheduling signaling corresponding to the first signal.

In one implementation in the embodiment of the present disclosure, when the at least one correspondence relationship at least includes the second correspondence relationship, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

In one embodiment, at least one first-TCI state corresponds to the transmission-related information in a one-to-one manner. Optionally, the transmission-related information may include one or more of the above scheduling information, power control parameter, resource set, transmission occasion, transmission repetition, transmission layer, transport block (TB), antenna port, frequency-domain resource and code word.

In one embodiment, in case that the above first condition is satisfied, the at least one first-TCI state corresponds to the first transmission-related information indicated by the first indication field in the second indication field;
in case that the above second condition is satisfied, the at least one first-TCI state corresponds to the first transmission-related information in a one-to-one manner, or the at least one first-TCI state corresponds to the first transmission-related information indicated by the second indication field in a one-to-one manner.

In this implementation, optionally, the first transmission-related information includes, but is not limited to only including scheduling information.

Taking the first transmission-related information corresponding to the first signal including scheduling information as an example to illustrate, when the number of at least one first-TCI state is one (first condition), one first-TCI state corresponds to the scheduling information indicated by the first indication field in the second indication field. For example, the first indication field is the first indication field in the second indication field, and the second indication field is a field for indicating scheduling information included in the scheduling signaling corresponding to the first signal, that is, one first-TCI state corresponds to the first scheduling information in scheduling signaling.

The scheduling signaling corresponding to the first signal includes only one second indication field (first condition), that is, when including only one second indication field for indicating scheduling information, at least one first-TCI state corresponds to the scheduling information indicated by the first indication field in the second indication field, the first indication field is the second indication field. By using this implementation, at least one first-TCI state corresponds to the scheduling information indicated by the first indication field in the scheduling signaling.

When at least one condition (second condition) of the number of the at least one first-TCI state is N and the scheduling signaling corresponding to the first signal includes N second indication fields is satisfied, the at least one first-TCI state corresponds to the scheduling information in a one-to-one manner, and the scheduling information may be multiple or multiple groups of scheduling information configured in advance for the UE; or, the at least one first-TCI state corresponds to scheduling information indicated by the second indication field in the scheduling signaling in a one to one manner, when N is an integer greater than 1.

For example, when the number of first-TCI states is two and the scheduling information indicated by the second indication field in the scheduling signaling corresponding to the first signal is at least two, one TCI state in the first-TCI states corresponds to first scheduling information in the scheduling information corresponding to the first signal, and one TCI state in the first-TCI states corresponds to second scheduling information in the scheduling information corresponding to the first signal;
or, when the number of first-TCI state is one, the one first-TCI state corresponds to the scheduling information indicated by a specific field in the second indication field in the scheduling information corresponding to the first signal, that is, corresponding to one of the scheduling information (such as the first scheduling information in the scheduling information), and other scheduling information is ignored. In this case, optionally, transmission of the first signal corresponds only to the one first-TCI state and one of the scheduling information.

Optionally, the first-TCI state is a TCI state used for uplink transmission, that is, the first-TCI state is a common TCI state used for multiple uplink channels. At this point, the TCI information is information used to indicate TCI state of uplink transmission. The common TCI state is shared by PUSCH transmission and at least part of PUCCH transmission, and may also be shared by part of SRS transmission. When the TCI state indicates a beam, the TCI information indicates a common beam for uplink transmission. The common beam is shared by PUSCH transmission and at least part of PUCCH transmission, and may also be shared by part of SRS transmission.

Optionally, the second-TCI state is a TCI state used for transmission of the first signal. Optionally, the second-TCI state is a TCI state used to indicate a beam for transmission of the first signal. At this point, the first indication information may indicate the TCI state for transmission of the first signal, that is, the TCI state for transmission of the first signal. Specifically, the first indication information may indicate the second state from at least one first-TCI state indicated by the TCI information. That is, the first indication information may indicate a TCI state corresponding to transmission of the first signal from a common TCI state of uplink transmission, for example, indicating one or two TCI states corresponding to transmission of the first signal from multiple common TCI states of uplink transmission. When the TCI state indicates a beam, the first indication information may indicate a beam corresponding to transmission of the first signal from a common beam of uplink transmission, for example, indicating one or two beams corresponding to transmission of the first signal from multiple common beams of uplink transmission.

In the signal transmission method according to the embodiment of the present disclosure, optionally, the method further includes:
receiving first indication information;
determining at least one of at least one second-TCI state and the at least one correspondence relationship, according to the first indication information;
where the first indication information is used to indicate at least one of the following information:
   at least one second-TCI state; where the at least one second-TCI state is a TCI state of the at least one first-TCI state; optionally, the second-TCI state is a TCI state corresponding to transmission of the first signal, indicated from the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and the first indication field in the scheduling signaling corresponding to the first signal, where the first indication field is a designated field in the second indication field, the second indication field is a field for indicating the first transmission-related information in the scheduling signaling corresponding to the first signal; correspondence relationship between the at least one second-TCI state and UE capability.

Exemplarily, the first transmission-related information includes scheduling information. In this embodiment, the scheduling information (such as code words, precoding matrix, SRS resources, frequency-domain resources, transmission occasion, etc.) corresponding to transmission of the first signal, and/or correspondence relationship between the scheduling information corresponding to transmission of the first signal and the second-TCI state, etc., can be determined based on the first indication information.

In one embodiment, optionally, the first indication information is indicated through one or more of RRC signaling, DCI signaling, and MAC-CE signaling.

Optionally, when the first signal is PUCCH, the first indication information is indicated through MAC-CE signaling.

In another embodiment, optionally, the first indication information is carried in signaling for scheduling the first signal.

Optionally, when the first indication information is carried in a field corresponding to the first transmission-related information corresponding to the first signal in the scheduling signaling of the first signal, optionally, in this manner, the first indication information indicates scheduling information corresponding to transmission of the first signal, that is, it can indicate which scheduling information in the scheduling information of the first signal is used for transmitting the first signal and which scheduling information is not used for transmitting the first signal.

Optionally, the number of second-TCI states indicated by the first indication information is at most N, where value of N can be determined according to at least one of the following manners:
N is a predefined value; such as N=2;
determining based on UE capabilities;
indicated by the network device.

In one embodiment, optionally, in the signal transmission method, when the at least one correspondence relationship includes the second correspondence relationship, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

In the signal transmission method according to the embodiment of the present disclosure, at least one second-TCI state used for transmission of the first signal, in the at least one first-TCI state, and/or correspondence relationship between at least one second-TCI state and transmission-related information corresponding to the first signal, can be determined according to the first indication information.

In this embodiment of the present disclosure, optionally, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

In another embodiment of the present disclosure, optionally, when the at least one correspondence relationship includes the second correspondence relationship and the transmission-related information includes resource sets, the second correspondence relationship includes:
M resource sets in the resource sets correspond to the at least one first-TCI state in a one-to-one manner; M is an integer greater than or equal to 1.

In the case where the network device configured M resource sets for the UE, each resource set corresponds to one first-TCI state. Optionally, when the second-TCI state in at least one first-TCI state is indicated by the first indication information, the M resource sets in the resource sets correspond to the at least one second-TCI state in a one-to-one manner.

Optionally, the value of M is one of 1, 2, and 4; the resource set may be, but is not limited to only being an SRS resource set.

Optionally, the resource set is a resource set whose usage type corresponds to transmission mode of the first signal.

For example, taking the resource set being an SRS resource set as an example, when the first signal is PUSCH and a transmission mode of PUSCH is configured as codebook, the usage type is configured as an SRS resource set for codebook, or an SRS resource set for obtaining CSI of codebook-based PUSCH.

Optionally, the method further includes:
receiving resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the case where the second-TCI state in at least one first-TCI state is indicated through the first indication information, the resource set indication information may further be used to indicate:
sixth correspondence relationship between the scheduling information corresponding to the first signal and one or more second-TCI states in the at least one second-TCI state.

Optionally, when the resource set indication information indicates the third correspondence relationship, the third correspondence relationship includes:
the resource set corresponding to transmission of the first signal has a one-to-one correspondence with the second indication field in the scheduling signaling corresponding to the first signal.

By using this embodiment, according to the resource set indication information, correspondence relationship between the resource set corresponding to transmission of the first signal and the transmission-related information (such as scheduling information) used for the transmission of the first signal can also be determined.

Optionally, the at least one correspondence relationship is determined based on the resource set indication information.

For example, when the source set indication information indicates X SRS resource sets as resource sets corresponding to transmission of the first signal, the transmission of the first signal corresponds to X groups of scheduling information, the X groups of scheduling information correspond to the X SRS resource sets in a one-to-one manner, and X is an integer less than or equal to N.

For example, when the SRS resource set indication information indicates one SRS resource set, the transmission of the first signal corresponds to only one group of scheduling information.

For another example, when the SRS resource set indication information indicates N SRS resource sets, the transmission of the first signal corresponds to N groups of scheduling information, and the N groups of scheduling information correspond to N SRS resource sets in a one-to-one manner.

In the embodiment of the present disclosure, according to the above information indicated by the resource set indication information, the correspondence relationship between the scheduling information of the first signal, the TCI state (first-TCI state/second-TCI state) and the resource set can be determined. In one embodiment, optionally, in the signal transmission method, when the resource set indication information indicates resource sets corresponding to transmission of the first signal among the M resource sets, the number of indicated resource sets corresponding to the transmission of the first signal is less than or equal to X;
where M is an integer greater than 1, X is less than M, and the value of X is determined based on one of the following information:
   predefined information;
   UE capabilities;
   network device's indication information.

Optionally, in the signal transmission method, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, the method further includes:
determining the at least one correspondence relationship according to one or more of the following information sent by the network device:
first indication information;
resource set indication information;
TCI state configuration information;
TCI codepoint configuration information;
predefined information;
Network device configuration.

In one embodiment, optionally, the at least one correspondence relationship includes the second correspondence relationship; the transmission-related information is one of a transmission occasion, a transmission repetition, a transport block and a transmission layer; when the first signal corresponds to multiple pieces of transmission-related information, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the case where the second-TCI state in the at least one first-TCI state is indicated by the first indication information, the second correspondence relationship may further include at least one of the following:
each group of transmission-related information corresponding to the first signal corresponds to one second-TCI state, respectively;
each transmission-related information corresponding to the first signal corresponds to one second-TCI state, respectively.

For example, when the first signal respectively includes multiple groups of transmission-related information, and the multiple groups of transmission-related information include at least one of transmission occasions, multiple groups of copies, multiple groups of transport blocks and multiple groups of transmission layers, each group of transmission-related information respectively corresponds to one first-TCI state or corresponds to one second-TCI state, or each transmission-related information of the first signal corresponds to one first-TCI state or corresponds to one second-TCI state respectively.

Optionally, the transmission occasion/copy/TB/transport block (TB) of the first signal has a correspondence relationship with the TCI state (the first-TCI state or the second-TCI state).

Optionally, time-frequency resources that transmit the same data, are called one transmission occasion.

Optionally, copies of the first signal are the same or different redundant versions of the same TB.

Optionally, the protocol directly stipulates or the network device directly indicates the correspondence relationship between the transmission occasion/copy/TB of the first signal and the TCI state (the first-TCI state or the second-TCI state).

For example, the RRC signaling/MAC CE signaling is used to indicate the TCI state corresponding to the transmission occasion/copy/TB of the first signal, or indicate transmission occasion/copy/TB of PUSCH corresponding to the TCI state.

Optionally, the information used to indicate the association relationship is included in the scheduling signaling for scheduling the first signal.

Optionally, the association relationship between the transmission occasion/copy/TB of the first signal and the TCI state may be determined indirectly.

For example, the protocol stipulates or a base station indicates an association relationship between the TCI state and scheduling information of the first signal/code word/CDM group of DMRS port/corresponding SRS resource set/power control parameter/power control parameter set/transmission layer/antenna port/frequency-domain resource; the transmission occasion/copy/TB of the first signal has a correspondence relationship with scheduling information/code word/CDM group of -DMRS port/corresponding SRS resource set/transmission layer/antenna port/frequency domain resource of PUSCH; based on the correspondence relationship, an association relationship between the TCI state and the transmission occasion/copy/TB of the PUSCH can be determined. Optionally, the correspondence relationship is predefined, or configured/indicated by the network device.

Optionally, the transmission layer of the first signal has a correspondence relationship with the TCI state (the first-TCI state or the second-TCI state).

Optionally, transmission layers of the first signal are divided into some groups, one group of transmission layers corresponds to one TCI state, and different transmission layers correspond to different TCI states. One grouping manner is that layers corresponding to one scheduling information of the first signal are one group. For example, there are two transmission pre-coding matrix indications (TPMI) in the scheduling information of the first signal, layers corresponding to the first TPMI are one group, and layers corresponding to the second TPMI are one group. For another example, there are two sounding reference signal (SRS) resource indications (SRI) in the scheduling information of the first signal; layers corresponding to the first SRI are one group, and layers corresponding to the second SRI are one group. Another grouping manner is that layers corresponding to one code word of the first signal are one group, and different code words correspond to different groups. For example, the first signal is scheduled with two code words, layers corresponding to one code word correspond to one TCI state, and layers corresponding to the other code word correspond to another TCI.

Optionally, the association relationship between the transmission layer of the first signal and the TCI state is directly agreed through the protocol or directly indicated by the network device.

For example, RRC signaling/MAC CE signaling indicates TCI state corresponding to the transmission layer of the first signal, or indicates corresponding transmission layer of the first signal for the TCI state.

Optionally, the information used to indicate the association relationship is included in the scheduling signaling for scheduling the first signal.

Optionally, the association relationship between the transmission layer of the first signal and the TCI state can be indirectly determined.

For example, the protocol stipulates or the base station indicates the association relationship between TCI state and scheduling information/code word/CDM group of DMRS port/corresponding SRS resource set/power control parameter/power control parameter set/transmission occasion/copy/TB/antenna port/frequency-domain resource of the first signal. The transmission layer of the first signal has a correspondence relationship with scheduling information/code word/CDM group of DMRS port/corresponding SRS resource set/transmission occasion/copy/TB/antenna port/frequency-domain resource of PUSCH. Based on the correspondence relationship, the association relationship between the transmission layer of the first signal and the TCI state can be determined. Optionally, the correspondence relationship is predefined, or configured/indicated by the base station.

In one embodiment, optionally, when the at least one correspondence relationship includes the second correspondence relationship, the transmission-related information includes an antenna port, and the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states; optionally, when a second-TCI state in at least one first-TCI state is indicated by the first indication information, in the multiple antenna port CDM groups corresponding to the first signal, each CDM group corresponds to one second-TCI state; for example, antenna ports of the same CDM group are associated with the same first-TCI state or second-TCI state, and antenna ports of different CDM groups are associated with different first-TCI states or second-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups; for example, only the first TPMI/SRI field indicates the layer number, and other TPMI/SRI fields use the layer number indicated by the first TPMI/SRI field.

In one embodiment, optionally, the method further includes:
receiving port indication information sent by the network device, where the port indication information is used to indicate an antenna port corresponding to the first signal.

In this embodiment, the DMRS port corresponding to the first signal has a correspondence relationship with the TCI state (the first-TCI state or the second-TCI state), or the CDM group of the DMRS of the first signal has an association relationship with the TCI state.

Optionally, DMRS ports corresponding to the first signal are divided into some groups, one group corresponds to one TCI state, and different groups correspond to different TCI states. One grouping manner is that DMRS ports corresponding to a group of scheduling information of the first signal are grouped. For example, there are two TPMIs in the scheduling information of the first signal, DMRS ports corresponding to the first TPMI are grouped, and DMRS ports corresponding to the second TPMI are grouped. For another example, there are two SRIs in the scheduling information of the first signal, DMRS ports corresponding to the first SRI are grouped, and DMRS ports corresponding to the second SRI are grouped. Another grouping manner is that DMRS ports corresponding to a code word of the first signal are grouped, and the DMRS ports corresponding to different code words correspond to different groups. For example, the first signal is scheduled with 2 code words, DMRS ports corresponding to one code word correspond to one TCI state, and DMRS ports corresponding to the other code word correspond to another TCI.

Optionally, DMRS ports associated with different TCI states belong to different CDM groups.

For example, RRC signaling/MAC CE signaling is used to indicate the TCI state corresponding to the DMRS port corresponding to the first signal/the DMRS CDM group of the first signal, or indicates for the TCI state, DMRS CDM group of the DMRS port/PUSCH corresponding to the first signal corresponding to the TCI state.

Optionally, the protocol directly agrees or the network device directly indicates the association relationship between the TCI state and DMRS CDM group of the DMRS port corresponding to the first signal/DMRS CDM group of the first signal.

For example, when DMRS in two DMRS CDM groups are indicated for the first signal, the two CDM groups are each associated with one TCI state.

Optionally, the information used to indicate the association relationship is included in the scheduling signaling for scheduling the first signal.

Optionally, the association relationship between the TCI state and the DMRS CDM group of the DMRS port/PUSCH corresponding to the first signal, can be determined indirectly.

For example, the protocol stipulates or a base station indicates an association relationship between the TCI state and scheduling information/code word/CDM group of DMRS port/corresponding SRS resource set/power control parameter/power control parameter set/transmission occasion/copy/TB/transmission layer/frequency-domain resource of the first signal. The DMRS port corresponding to the first signal/DMRS CDM group of the first signal has a correspondence relationship with scheduling information/code word/CDM group of DMRS port/corresponding SRS resource set/transmission occasion/copy/TB/transmission layer/frequency domain resource of the first signal. Based on the correspondence relationship, the association relationship between the TCI state and the DMRS port corresponding to the first signal/the DMRS CDM group of the first signal, can be determined. Optionally, the correspondence relationship is predefined, or configured/indicated by the network device.

In one embodiment, optionally, when the at least one correspondence relationship includes the second correspondence relationship, the transmission-related information includes a frequency-domain resource, and the first signal is mapped to multiple groups of frequency-domain resources, the second correspondence relationship includes:
each group of frequency-domain resources to which the first signal is mapped corresponds to one first-TCI state.

Optionally, when the second-TCI state of at least one first-TCI state is indicated by the first indication information, each group of frequency-domain resources to which the first signal is mapped may respectively correspond to one second-TCI state.

By using this implementation, optionally, the frequency-domain resource corresponding to the first signal has a correspondence relationship with the TCI state (the first-TCI state or the second-TCI state).

Optionally, even-numbered PRBs correspond to one TCI state, and odd-numbered PRBs correspond to another TCI state.

Optionally, even-numbered PRGs correspond to one TCI state, and odd-numbered PRGs correspond to another TCI state.

The first half of the frequency-domain resource allocated to the first signal corresponds to one TCI state, and the second half corresponds to another TCI state.

Optionally, the protocol directly stipulates or the base station directly indicates the association relationship between the frequency-domain resource corresponding to the first signal and the TCI state.

For example, RRC signaling/MAC CE signaling indicates TCI state corresponding to the frequency domain resource corresponding to the first signal, or indicates for the TCI state, the frequency domain resource corresponding to the first signal corresponding to the TCI state. Optionally, the information used to indicate the association relationship is included in the scheduling signaling for scheduling the first signal.

Optionally, the association relationship between the frequency domain resource corresponding to the first signal and the TCI state can be indirectly determined.

For example, the protocol stipulates or the base station indicates the association relationship between TCI state and scheduling information/code word/CDM group of DMRS port/corresponding SRS resource set/power control parameter/power control parameter set/transmission occasion/copy/TB/transmission layer/DMRS port of the first signal. The frequency domain resource corresponding to the first signal has a correspondence relationship with scheduling information/code word/CDM group of DMRS port/corresponding SRS resource set/transmission occasion/copy/TB/transmission layer/DMRS port of the first signal. Based on the correspondence relationship, the association relationship between the frequency domain resource corresponding to the first signal and the TCI state can be determined. Optionally, the correspondence relationship is predefined, or configured/indicated by the base station.

In another embodiment, optionally, in the signal transmission method, the at least one correspondence relationship includes the second correspondence relationship, the transmission-related information is a code word, and the first signal includes multiple code words, the second correspondence relationship includes:
each code word of the first signal corresponds to one first-TCI state, respectively.

Optionally, in the case where the second-TCI state of at least one first-TCI state is indicated by the first indication information, each code word of the first signal may respectively correspond to one second-TCI state.

In another implementation, optionally, the second correspondence relationship further includes:
multiple groups of scheduling information corresponding to transmission of the first signal correspond to multiple code words of the first signal in a one-to-one manner.

Optionally, the association relationship between the code word of the first signal and the TCI state is directly agreed through the protocol or directly indicated by the network device.

For example, RRC signaling/MAC CE signaling is used to indicate the corresponding TCI state for the code word of the first signal, or to indicate for the TCI state, the code word of the first signal corresponding to the TCI state. Optionally, the information used to indicate the association relationship is included in the scheduling signaling for scheduling the first signal.

Optionally, the association relationship between the code word of the first signal and the TCI state can be determined indirectly.

For example, the protocol stipulates or the base station indicates the association relationship between TCI state and scheduling information/CDM group of DMRS port/corresponding SRS resource set/power control parameter/power control parameter set/transmission occasion/copy/TB/transmission layer/DWRS port/frequency-domain resource of the first signal. The frequency-domain resource corresponding to the first signal has a correspondence relationship with scheduling information/CDM group of DMRS port/corresponding SRS resource set/transmission occasion/copy/TB/transmission layer/DWRS port/frequency-domain resource of the first signal. Based on the correspondence relationship, the association relationship between the code word of the first signal and the TCI state can be determined. Optionally, the correspondence relationship is predefined, or configured/indicated by the base station.

In another embodiment, optionally, in the signal transmission method, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

In another embodiment, optionally, when the at least one correspondence relationship includes the second correspondence relationship, and the transmission-related information includes power control parameters, the second correspondence relationship includes:
each first-TCI state indicated by the first TCI information corresponds to a group of power control parameters.

Optionally, when the second-TCI state of the at least one first-TCI state is indicated by the first indication information, each second-TCI state indicated by the first TCI information corresponds to one group of power control parameters respectively.

Optionally, the power control parameters include at least one of the following:
path loss reference signal indication parameter;
closed-loop power control parameter;
open loop power control parameter;
path loss compensation parameter;
target received power parameter.

Optionally, the association relationship between the power control parameter corresponding to the first signal and the first-TCI state/second-TCI state is directly agreed through the protocol or directly indicated by the network device.

For example, at least one of RRC signaling and MAC CE signaling is used to indicate first-TCI state/second-TCI state corresponding to the power control parameter corresponding to the first signal, or, indicate for the first-TCI state/second-TCI state, the power control parameter corresponding to the first signal corresponding to the first-TCI state/second-TCI state.

Optionally, when the second correspondence includes an indication of an association relationship between the TCI state and the power control parameter corresponding to the first signal, the second corresponding relationship may be included in the scheduling signaling for scheduling the first signal.

Optionally, the association relationship between the TCI state and the power control parameter corresponding to the first signal can be indirectly determined.

For example, the protocol stipulates or the base station indicates the association relationship between TCI state and scheduling information/code word/CDM group of DMRS port/corresponding SRS resource set/transmission occasion/copy/transmission layer/antenna port/frequency-domain resource/UE capability information of the first signal. The power control parameter/power control parameter set of the first signal has a correspondence relationship with scheduling information/code word/CDM group of DMRS port/corresponding SRS resource set/transmission occasion/copy/transmission layer/antenna port/frequency-domain resource/UE capability information of the first signal. Based on the correspondence relationship, the association relationship between the power control parameter of the first signal and the TCI state (the first-TCI state or the second-TCI state) can be determined.

In another embodiment, optionally, the signal transmission method further includes:
determining a transmission power of the first signal on the corresponding first target transmission parameter according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

In another implementation, optionally, the at least one correspondence relationship further includes:
each TCI state indicated by the first TCI information is associated with a reference signal used to indicate spatial relationship.

The method further includes:
determining a transmission beam of the first signal on a corresponding second target transmission parameter according to a reference signal corresponding to the TCI state associated with the second target transmission parameter of the first signal;
where the second target transmission parameter includes transmission occasion and/or frequency-domain resource.

In another embodiment, optionally, in the signal transmission method, the transmitting the first signal according to the first TCI information and at least one correspondence relationship includes:
according to the first TCI information and at least one correspondence relationship, transmitting the first signal in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

In this embodiment of the present disclosure, optionally, the method further includes:
determining the at least one correspondence relationship based on predefined information or one or more of the following information sent by the network device:
first indication information;
resource set indication information;
TCI state configuration information;
TCI codepoint configuration information;
network device configuration information.

In one embodiment, optionally, the above at least one correspondence relationship may be indicated through the first indication information.

Optionally, the first indication information indicates at least one of the following information:
at least one second-TCI state, where the at least one second-TCI state is a TCI state in the at least one first-TCI state;
correspondence relationship between the at least one second-TCI state and transmission-related information;
a field for indicating first transmission-related information in the scheduling signaling corresponding to the first signal;
correspondence relationship between the at least one second-TCI state and a second indication field in the scheduling signaling corresponding to the first signal; where the second indication field is a field for indicating first transmission-related information, in the scheduling signaling corresponding to the first signal;
correspondence relationship between the at least one second-TCI state and a first indication field in the scheduling signaling corresponding to the first signal; where the first indication field is a designated field in the second indication field, and the second indication field is a field for indicating the first transmission-related information in the scheduling signaling corresponding to the first signal; correspondence relationship between the at least one second-TCI state and the UE capability.

The at least correspondence relationship can be obtained according to one or more items of the above information indicated by the first indication information.

Optionally, the first indication information is carried through one or more of RRC signaling, DCI signaling or MAC-CE signaling. Optionally, the first indication information is carried in signaling for scheduling the first signal.

Content of the at least one correspondence relationship indicated by the first indication information can refer to the above description, and the specific indication method can refer to the description in the following embodiment, which will not be described in detail here.

In one implementation, the above at least one correspondence relationship may be indicated through resource set indication information.

Optionally, the resource set indication information indicates at least one of the following information:
a resource set corresponding to transmission of the first signal among M resource sets;
a field for indicating scheduling information corresponding to transmission of the first signal, in the scheduling signaling corresponding to the first signal;
third correspondence relationship between a resource set corresponding to transmission of the first signal and a second indication field in the scheduling signaling corresponding to the first signal, where the second indication field is a field for indicating transmission-related information field;
a fourth correspondence relationship between scheduling information corresponding to the first signal and one or more first-TCI states in the at least one first-TCI state;
a fifth correspondence relationship between a field corresponding to the scheduling information corresponding to transmission of the first signal in the scheduling signaling of the first signal and a resource set.

The at least one correspondence relationship can be obtained according to one or more items of the above information indicated by the resource set indication information.

Optionally, the resource set indication information is SRS resource set indication information. Through at least one of the above indicated information, an association relationship between scheduling information of PUSCH and the TCI state and/or the SRS resource set can be indicated.

Optionally, the SRS resource set indication information further indicates which scheduling information in the scheduling information PUSCH transmission corresponds to, that is, which scheduling information in the scheduling signaling is used and which scheduling information is not used.

In one implementation, optionally, at least one correspondence relationship may be indicated through TCI state configuration information.

For example, transmission-related information associated with the TCI state such as scheduling information, can be configured in the TCI state configuration information.

For example, the TCI state configuration information includes a parameter that indicates which scheduling information in the scheduling information of the first signal the TCI state is associated with. For example, when a value of this parameter is 0, it indicates that the TCI state is associated with the first scheduling information; when the bit is 1, it indicates that the TCI state is associated with the second scheduling information.

In one implementation, optionally, at least one correspondence relationship may be indicated through TCI codepoint configuration information.

For example, the TCI state corresponding to the TCI codepoint is associated with which transmission-related information, such as scheduling information, may be configured in the codepoint configuration information.

Optionally, a TCI codepoint activation signaling may also be used to indicate that TCI state corresponding to an activated TCI codepoint is associated with which transmission-related information.

In another embodiment, at least one correspondence relationship may be determined through protocol agreement or by sending network device configuration information.

For example, according to the protocol agreement, when the first TCI information or the first indication information indicates two TCI states, the first scheduling information in the scheduling information of the first signal is associated with the first TCI state among the two TCI states; the second scheduling information in the scheduling information of the first signal is associated with the second TCI state among the two TCI states.

For another example, the protocol stipulates that when the first TCI information or the first indication information indicates one TCI state, the first scheduling information in the scheduling signaling of the first signal is associated with the first TCI state, and the second scheduling information in the scheduling information of the first signal is ignored. In this case, optionally, transmission of the first signal only corresponds to the first TCI state and the first scheduling information.

Optionally, information used to indicate the at least one correspondence relationship is included in the scheduling signaling for scheduling the first signal.

The following takes the first signal being a physical uplink shared channel (PUSCH) as an example to describe in detail the signal transmission method of the embodiment of the present disclosure. It is to be noted that the signal transmission method of the embodiment of the present disclosure is also applicable to a physical uplink control channel (PUCCH).

### Embodiment 1

A base station uses radio resource control (RRC) signaling, downlink control information (DCI) signaling or first medium access control (MAC)-control element (CE) signaling to send first TCI information which is used to indicate for UE, P first-TCI states for uplink transmission, where P is greater than or equal to 1.

Optionally, the P first-TCI states are used for transmission of PUSCH (first signal).

Optionally, the base station further sends first indication information. Optionally, the first indication information may be second TCI information. The second TCI information is used to indicate TCI state (second-TCI state) corresponding to PUSCH transmission from the P first-TCI states. Optionally, the second TCI information indicates N second-TCI states. N is less than or equal to P.

Optionally, when the PUSCH is PUSCH with configured grant Type 1, the second TCI information is not required, and only the first TCI information is required to indicate the TCI state.

Optionally, the TCI state (first-TCI state or second-TCI state) of PUSCH transmission has a correspondence relationship with the scheduling information of PUSCH.

Optionally, the base station schedules transmission of PUSCH through RRC signaling or DCI signaling, and the scheduling signaling includes multiple groups of scheduling information (for example, multiple groups of transmission pre-coding matrix indication (TPMI) and/or multiple groups of SRS resource indication (SRI) information).

Optionally, the multiple groups of scheduling information correspond to the first-TCI states indicated by the first TCI information in a one-to-one manner.

For example, when P=2, the base station indicates two groups of TPMI and/or SRI for PUSCH through RRC signaling or MAC CE signaling or DCI signaling, the two groups of TPMI and/or SRI correspond to two first-TCI states in a one-to-one manner.

Optionally, the transmission of PUSCH corresponds to multiple groups of scheduling information, and the multiple groups of scheduling information correspond to the second-TCI states indicated by the second TCI information in a one-to-one manner.

For example, when N=2, the base station indicates two groups of TPMI and/or SRI for PUSCH through RRC signaling or MAC CE signaling or DCI signaling, and the two groups of TPMI and/or SRI correspond to two second-TCI states indicated by the second TCI information in a one-to-one manner.

For another example, the PUSCH is a PUSCH with a configured grant. The base station configures two groups of TPMI and SRI for the PUSCH through RRC signaling, and indicates two first-TCIs for uplink transmission through the first TCI information. Then the configured two groups of TPMI and SRI respectively correspond to the two first-TCI states in a one-to-one manner.

Optionally, the correspondence relationship between the scheduling information corresponding to PUSCH transmission and the TCI state depends on the number of TCI states indicated by the second TCI information. For example, when the number of TCI states indicated by the second TCI information is 1, the PUSCH transmission always corresponds to the first group of scheduling information and the TCI state indicated by the second TCI information (second-TCI state); when the number of TCI states indicated by the second TCI information is greater than 1, the PUSCH transmission corresponds to multiple groups of scheduling information and multiple TCI states (second-TCI states) indicated by the second TCI information. Optionally, the network device may send first indication information to indicate the correspondence relationship between the multiple second-TCI states and the multiple scheduling information.

Optionally, the at least one correspondence relationship between the TCI state and the transmission-related information may be indicated by TCI state configuration information, or may be indicated by TCI codepoint configuration information.

Taking transmission-related information including scheduling information as an example, the base station uses a signaling (TCI codepoint configuration information) for activating a TCI codepoint, to indicate which scheduling information is associated with the TCI state (first-TCI state or second-TCI state) corresponding to the TCI codepoint. For example, when a certain bit is 0, it indicates that the first-TCI state of the TCI codepoint is associated with the first scheduling information, and the second-TCI state is associated with the second scheduling information; when the bit is 1, it indicates that the first-TCI state of the TCI codepoint is associated with the second scheduling information, and the second-TCI state is associated with the first scheduling information. For another example, when a certain bit is 0, it indicates that the first-TCI state and the second-TCI state of the TCI codepoint are associated with the first scheduling information; when the bit is 1, it indicates the first-TCI state of the TCI codepoint is associated with the first scheduling information, and the second-TCI state is associated with the second scheduling information.

For another example, the base station configures, in the TCI codepoint configuration information, which scheduling information is associated with the TCI state (the first-TCI state or the second-TCI state) corresponding to the TCI codepoint.

For another example, the base station configures, in the TCI state configuration information, which scheduling information is associated with the TCI state.

For example, the TCI state configuration information includes a parameter that indicates which scheduling information in the PUSCH scheduling information the configured TCI state (the first-TCI state or the second-TCI state) is associated with. For example, when a value of this parameter is 0, it indicates that the TCI state is associated with the first scheduling information; when the bit is 1, it indicates that the TCI state is associated with the second scheduling information.

In another embodiment, optionally, the association relationship between the scheduling information of PUSCH and the TCI state can be directly agreed through a protocol, or directly indicated by the base station.

For example, the association relationship between scheduling information and TCI state can be agreed upon through a protocol. When the first TCI information or the second TCI information indicates two TCI states, the first scheduling information in the scheduling information of PUSCH is associated with a first one of the two TCI states (first-TCI state or second-TCI state), and the second scheduling information in the scheduling information of PUSCH is associated with the second one of the two TCI states.

For another example, the protocol stipulates that when the first TCI indication information/second TCI indication information indicates one TCI state (first-TCI state or second-TCI state), the first scheduling information in the scheduling signaling of PUSCH is associated with the one TCI state. The second scheduling information in the scheduling signaling of PUSCH is ignored. In this case, optionally, the transmission of PUSCH only corresponds to the one TCI state and the first scheduling information.

Optionally, at least one correspondence relationship is indicated in the scheduling signaling for scheduling the PUSCH, such as indicating the correspondence relationship between TCI state and scheduling information.

Optionally, the base station indicates at least one correspondence relationship through the first indication information (which may be the second TCI information), such as indicating the correspondence relationship between scheduling information and TCI state.

Optionally, the first indication information is carried through one or more of RRC signaling, DCI signaling and MAC-CE signaling. Optionally, the first indication information is carried in signaling for scheduling PUSCH.

Optionally, the first indication information further indicates scheduling information corresponding to PUSCH transmission, that is, indicating which scheduling information in the scheduling signaling of PUSCH is used and which scheduling information in the scheduling signaling of PUSCH is not used.

Optionally, the first indication information indicates at most N TCI states.

Optionally, N is a predefined value, for example, N=2.

Optionally, the value of N is determined based on the UE capabilities.

Optionally, N is the value indicated by the base station.

One implementation manner is to define a correspondence relationship between codepoints in TCI indication field (i.e., the first indication information) in DCI and the first-TCI state indicated by the first TCI information. For example, the following mapping relationship is defined. The "00" indicates that PUSCH transmission is associated with the first TPMI/SRI field, and the first-TCI state is used for PUSCH transmission. The "10" indicates that PUSCH transmission is associated with two TPMI/SRI fields, the first TPMI/SRI field corresponds to the first-TCI state, the second TPMI/SRI field corresponds to the second-TCI state, and so on.

| codepoint | SRI/TPMI field | TCI state |
|---|---|---|
| 00 | first SRI/TPMI field (second field is unused) | first one of TCI states |
| 01 | first SRI/TPMI field (second field is unused) | second one of TCI states |
| 10 | first and second SRI/TPMI fields | first one of TCI states, second one of TCI states |
| 11 | first and second SRI/TPMI fields | second one of TCI states, first one of TCI states |

Another example is shown in the following table:

| codepoint | SRI/TPMI field | TCI state |
|---|---|---|
| 00 | first SRI/TPMI field (second field is unused) | first one of TCI states |
| 01 | first SRI/TPMI field (second field is unused) | second one of TCI states |
| 10 | first and second SRI/TPMI field | first one of TCI states, second one of TCI states |
| 11 | reserved | reserved |

Another example is shown in the following table, where when a codepoint 10 is indicated, the first one of TCI states is associated with the first SRI/TPMI field and the second one of TCI states is associated with the second SRI/TPMI field.

| codepoint | SRI/TPMI field | TCI state |
|---|---|---|
| 00 | first SRI/TPMI field (second field is unused) | first one of TCI states |
| 01 | second SRI/TPMI field (second field is unused) | second one of TCI states |
| 10 | first and second SRI/TPMI field | first one of TCI states, second one of TCI states |
| 11 | reserve | reserve |

Another example is shown in the following table, where when a codepoint 10 is indicated, the first one of TCI states is associated with the first SRI/TPMI field and the second one of TCI states is associated with the second SRI/TPMI field; when a codepoint 11 is indicated, the first one of TCI states is associated with the second SRI/TPMI field and the second one of TCI states is associated with the first SRI/TPMI field

| codepoint | SRI/TPMI field | TCI state |
|---|---|---|
| 00 | first SRI/TPMI field (second field is unused) | first one of TCI states |
| 01 | second SRI/TPMI field (second field is unused) | second one of TCI states |
| 10 | first and second SRI/TPMI field | first one of TCI states, second one of TCI states |
| 11 | first and second SRI/TPMI field | first one of TCI states, second one of TCI states |

Another example is to define correspondence relationship between codepoints in a TCI indication field (i.e., second TCI information) in DCI and the TCI state (second-TCI state). Optionally, the first TCI information indicates four first-TCI states: the first one of TCI states, the second one of TCI states, the third one of TCI states, and the fourth one of TCI states. The second TCI information indicates at most two first-TCI states of the four first-TCI states. Optionally, the first one of TCI states and the second one of TCI states cannot be indicated at the same time, and the third one of TCI states and the fourth one of TCI states cannot be indicated at the same time (Optionally, the first and second SRS resource sets are associated with the first panel of the UE, the third and fourth SRS resource sets are associated with the second panel of the UE, the first and third SRS resource sets are associated with the first TRP, and the second and fourth SRS resource sets are associated with the second TRP).

Optionally, a modified encoding method of the second TCI information is as shown in the following table, where "000" indicates that PUSCH transmission is associated with the first TPMI/SRI field, and the first one of TCI states is used for PUSCH transmission. The "100"" indicates that PUSCH transmission is associated with two TPMI/SRI fields, the first one of the four TCI states and the third one of the four TCI states, and the first TPMI/SRI field corresponds to the first one of TCI states, the second TPMI/SRI field corresponds to the third one of TCI states, and so on.

An example is as follows:

| codepoint | SRI/TPMI field | TCI state |
|---|---|---|
| 000 | first SRI/TPMI field (second field is unused) | first one of TCI states |
| 001 | first SRI/TPMI field (second field is unused) | second one of TCI states |
| 010 | first SRI/TPMI field (second field is unused) | third one of TCI states |
| 011 | first SRI/TPMI field (second field is unused) | fourth one of TCI states |
| 100 | first and second SRI/TPMI fields | first one of TCI states, third one of TCI states |
| 101 | first and second SRI/TPMI fields | third one of TCI states, fourth one of TCI states |
| 110 | first and second SRI/TPMI fields | second one of TCI states, third one of TCI states |
| 111 | first and second SRI/TPMI fields | second one of TCI states, fourth one of TCI states |

Another example is as follows:

| codepoint | SRI/TPMI | TCI state |
|---|---|---|
| 000 | first SRI/TPMI field (second field is unused) | first one of TCI states |
| 001 | first SRI/TPMI field (second field is unused) | second one of TCI states |
| 010 | second SRI/TPMI field (first field is unused) | third one of TCI states |
| 011 | second SRI/TPMI field (first field is unused) | fourth one of TCI states |
| 100 | first and second SRI/TPMI fields | first one of TCI states, third one of TCI states |
| 101 | first and second SRI/TPMI fields | first one of TCI states, fourth one of TCI states |
| 110 | first and second SRI/TPMI fields | second one of TCI states, third one of TCI states |
| 111 | first and second SRI/TPMI fields | second one of TCI states, fourth one of TCI states |

Another indication method of the second TCI information is:

| codepoint | TCI state |
|---|---|
| 00 | first SRI/TPMI field: first one of TCI states |
| | second SRI/TPMI field: third one of TCI states |
| 01 | first SRI/TPMI field: first one of TCI states |
| | second SRI/TPMI field: fourth one of TCI states |
| 10 | first SRI/TPMI field: second one of TCI states |
| | second SRI/TPMI field: third one of TCI states |
| 11 | first SRI/TPMI field: second one of TCI states |
| | second SRI/TPMI field: fourth one of TCI states |

Optionally, the first TCI information indicates four first-TCI states: the first one of TCI states, the second one of TCI states, the third one of TCI states, and the fourth one of TCI states. The second TCI information indicates at most two first-TCI states of the four first-TCI states. Optionally, the first and second ones of TCI states cannot be indicated at the same time, the third and fourth ones of TCI states cannot be indicated at the same time, the first and third ones of TCI states cannot be indicated at the same time, and the second and fourth ones of TCI states cannot be indicated at the same time.

Taking the scheduling information being TPMI/SRI as an example, an indication method of the second TCI information is:

| codepoint | TCI state |
|---|---|
| 0 | first SRI/TPMI field: first one of TCI states |
| | second SRI/TPMI field: fourth one of TCI states |
| 1 | first SRI/TPMI field: first one of TCI states |
| | second SRI/TPMI field: third one of TCI states |

Another indication method of the second TCI information is:

| codepoint | TCI state |
|---|---|
| 000 | first SRI/TPMI field: first one of TCI states |
| | second SRI/TPMI field: unused |
| 001 | first SRI/TPMI field: second one of TCI states |
| | second SRI/TPMI field: unused |
| 010 | first SRI/TPMI field: unused |
| | second SRI/TPMI field: third one of TCI states |
| 011 | first SRI/TPMI field: unused |
| | second SRI/TPMI field: fourth one of TCI states |
| 100 | first SRI/TPMI field: first one of TCI states |
| | second SRI/TPMI field: fourth one of TCI states |
| 101 | first SRI/TPMI field: second one of TCI states |
| | second SRI/TPMI field: third one of TCI states |
| 110-111 | unused |

Optionally, the second TCI information is resource set indication information. The base station indicates an association relationship between the scheduling information of PUSCH and the TCI state and/or SRS resource set through the resource set indication information.

Optionally, the resource set indication information further indicates which scheduling information in the scheduling information the transmission of the PUSCH corresponds to, that is, which scheduling information in the scheduling signaling is used and which scheduling information is not used.

Optionally, the SRS resource set has a pre-agreed association relationship with the TCI state/UE panel/UE capabilities.

Optionally, the resource set indication information indicates at most N SRS resource sets.

Optionally, N is a predefined value, for example, N=2.

Optionally, a value of N is determined based on the UE capabilities.

Optionally, N is a value indicated by the base station.

Optionally, the resource set indication information indicates 1 or 2 SRS resource sets from M SRS resource sets configured by the base station.

Optionally, the base station configures M SRS resource sets, and the SRS resource sets have a predefined association relationship with the TCI state. Optionally, each SRS resource set corresponds to one TCI state information. Optionally, M=1. Optionally, M=2; Optionally, M=4.

Optionally, the M SRS resource sets are SRS resource sets whose usage type corresponds to the transmission mode corresponding to the first signal (for example, when the first signal is PUSCH and the transmission mode of PUSCH is configured as codebook, SRS resource sets whose usage is configured as a codebook, or SRS resource sets used for obtaining CSI of codebook-based PUSCH).

One example is to define a correspondence relationship between codepoints in an SRS resource set indication field in DCI and the first-TCI state indicated by the first TCI information. For example, the following mapping relationship is predefined. The "00" indicates that PUSCH transmission is associated with the first TPMI/SRI field and the first SRS resource set, and the first one of TCI states is used for PUSCH transmission. The "10" indicates that PUSCH transmission is associated with two TPMI/SRI fields and 2 SRS resource sets, the first TPMI/SRI field corresponds to the first one of TCI states, and the second TPMI/SRI field corresponds to the second one of TCI states, and so on.

| codepoint | SRS resource set(s) | SRI/TPMI field(s) | TCI state |
|---|---|---|---|
| 00 | s-TRP/s-panel mode with first SRS resource set (TRP1) | first SRI/TPMI field (second field unused) | first one of TCI states |
| 01 | s-TRP/s-panel mode with second SRS resource set (TRP2) | first SRI/TPMI field (second field unused) | second one of TCI states |
| 10 | m-TRP/m-panel mode (TRP1,TRP2) | first and second SRI/TPMI fields | first one of TCI states, second one of TCI states |
| | first SRI/TPMI field: first SRS resource set; | | |
| | second SRI/TPMI field: second SRS resource set | | |
| 11 | m-TRP/m-panel mode (TRP2,TRP1 ); | first and second SRI/TPMI fields | second one of TCI states, first one of TCI states |
| | first SRI/TPMI field: first SRS resource set; | | |
| | second SRI/TPMI field: second SRS resource set | | |

One example is that the system predefines correspondence relationship between codepoints in 3-bit SRS resource set indication field in DCI and the TCI state indicated by the first TCI indication information. For example, the system predefines the following mapping relationship. The "000" indicates that PUSCH transmission is associated with the first TPMI/SRI field and the first SRS resource set, and the first one of TCI states is used for PUSCH transmission. The "100" indicates that PUSCH transmission is associated with two TPMI/SRI fields and the first and third SRS resource sets of four SRS resource sets, the first TPMI/SRI field corresponds to the first one of TCI states, and the second TPMI/SRI field corresponds to the third one of TCI states, and so on.

| codepoint | SRS resource set(s) | SRI/TPMI field(s) | TCI state |
|---|---|---|---|
| 000 | s-TRP mode with first SRS resource set | first SRI/TPMI field (second field is unused) | first one of TCI states |
| 001 | s-TRP mode with second SRS resource set | first SRI/TPMI field (second field is unused) | second one of TCI states |
| 010 | s-TRP mode with third SRS resource set | first SRI/TPMI field (second field is unused) | third one of TCI states |
| 011 | s-TRP mode with fourth SRS resource set | first SRI/TPMI field (second field is unused) | fourth one of TCI states |
| 100 | m-TRP mode with first SRI/TPMI field: first SRS resource set | first and second SRI/TPMI fields | first one of TCI states, third one of TCI states |
| | second SRI/TPMI field: third SRS resource set | | |
| 101 | m-TRP mode with (TRP2,TRP1 ) first SRI/TPMI field: second SRS resource set | first and second SRI/TPMI fields | first one of TCI states, fourth one of TCI states |
| | second SRI/TPMI field: fourth SRS resource set | | |
| 110 | m-TRP mode with first SRI/TPMI field: second SRS resource set | first and second SRI/TPMI fields | first one of TCI states, third one of TCI states |
| | second SRI/TPMI field: third SRS resource set | | |
| 111 | m-TRP mode with first SRI/TPMI field: second SRS resource set | first and second SRI/TPMI fields | second one of TCI states, fourth one of TCI states |
| | second SRI/TPMI field: fourth SRS resource set | | |

Optionally, the association relationship between scheduling information of PUSCH and TCI state can be indirectly determined.

For example, the base station indicates the association relationship between the SRS resource set and the TCI state through the SRS resource set indication information, and scheduling information of PUSCH has an association relationship with the SRS resource set, so that the association relationship between scheduling information of PUSCH and the TCI state can be determined.

For another example, the protocol stipulates the association relationship between the SRS resource set indication information and the TCI state. The base station uses the SRS resource set indication information to indicate the SRS resource set corresponding to scheduling information of PUSCH, so that the association relationship between scheduling information of PUSCH and the TCI state can be determined.

For another example, the protocol stipulates or the base station indicates the association relationship between TCI state and code word/CDM group of DMRS port/power control parameter/power control parameter set/corresponding SRS resource set/transmission occasion/copy/transmission layer/antenna port/frequency-domain resource/UE capability information of PUSCH. The scheduling information of PUSCH has a correspondence relationship with code word/CDM group of DMRS port/power control parameter/power control parameter set/corresponding SRS resource set/transmission occasion/copy/transmission layer/antenna port/frequency-domain resource/UE capability information of PUSCH. Based on the correspondence relationship, the association relationship between the scheduling information of PUSCH and the TCI state can be determined.

An example in which SRS resource sets corresponding to PUSCH have a pre-agreed association relationship with TCI states, is provided.

It is assumed that two SRS resource sets are pre-arranged at a base station and the TCI indication information indicates two TCI states (first-TCI state and second-TCI state). The first SRS resource set is associated with the first-TCI state; and the second SRS resource set is associated with the second-TCI state. If scheduling signaling of PUSCH includes first scheduling information and second scheduling information, the base station may send 2-bit SRS resource set indication information to indicate an association relationship between scheduling information of PUSCH and the SRS resource set, thereby indirectly determining which group of scheduling information is associated with which TCI state.

Taking the scheduling information being TPMI/SRI as an example, an indication method of SRS resource set indication information is:

| Codepoint | SRS resource set(s) |
|---|---|
| 00 | first SRI/TPMI field: first SRS resource set |
| | second SRI/TPMI field: unused |
| 01 | first SRI/TPMI field: unused |
| | second SRI/TPMI field: fourth SRS resource set |
| 10 | first SRI/TPMI field: first SRS resource set |
| | second SRI/TPMI field: second SRS resource set |
| 11 | Reserved |

Another example assumes that the protocol agrees that when the base station configures 4 SRS resource sets and the TCI indication information indicates 2 TCI states, the first and second SRS resource sets are associated with the first-TCI state, and the third and fourth SRS resource sets are associated with the second-TCI state, and the first and second SRS resource sets cannot be indicated at the same time, and the third and fourth SRS resource sets cannot be indicated at the same time (optionally, the first and second SRS resource sets are associated with the first panel of the UE, the third and fourth SRS resource sets are associated with the second panel of the UE, the first and third SRS resource sets are associated with the first TRP, and the second and fourth SRS resource sets are associated with the second TRP). The first scheduling information of PUSCH is associated with the first and/or second SRS resource sets, and the second scheduling information is associated with the third and/or fourth SRS resource sets. The base station may send 2-bit SRS resource set indication information to indicate the UE which group of scheduling information is associated with which SRS resource set, thereby indirectly determining which group of scheduling information is associated with which TCI state.

Taking the scheduling information being TPMI/SRI as an example, one indication method is:

| Codepoint | SRS resource set(s) |
|---|---|
| 00 | first SRI/TPMI field: first SRS resource set |
| | second SRI/TPMI field: third SRS resource set |
| 01 | first SRI/TPMI field: first SRS resource set |
| | second SRI/TPMI field: fourth SRS resource set |
| 10 | first SRI/TPMI field: second SRS resource set |
| | second SRI/TPMI field: third SRS resource set |
| 11 | first SRI/TPMI field: second SRS resource set |
| | second SRI/TPMI field: fourth SRS resource set |

Another example assumes that the base station and the UE agree that when the base station configures 4 SRS resource sets and the TCI indication information indicates 2 TCI states, the first and second SRS resource sets are associated with the first-TCI state, and the third and fourth SRS resource sets are associated with the second-TCI state, and the first and second SRS resource sets cannot be indicated at the same time, the third and fourth SRS resource sets cannot be indicated at the same time, the first and third SRS resource sets cannot be indicated at the same time, the second and fourth SRS resource sets cannot be indicated at the same time. The first scheduling information of PUSCH is associated with the first and/or second SRS resource sets, and the second scheduling information is associated with the third and/or fourth SRS resource sets. Then, the base station can send 1-bit SRS resource set indication information to indicate the UE which group of scheduling information is associated with which SRS resource set, thereby indirectly determining which group of scheduling information is associated with which TCI state.

Taking the scheduling information being TPMI/SRI as an example, one indication method is:

| Codepoint | SRS resource set(s) |
|---|---|
| 0 | first SRI/TPMI field: first SRS resource set |
| | second SRI/TPMI field: fourth SRS resource set |
| 1 | first SRI/TPMI field: second SRS resource set |
| | second SRI/TPMI field: third SRS resource set |

As shown in the above example, the SRS resource set indication information further indicates which scheduling information in the scheduling information PUSCH transmission corresponds to, that is, which scheduling information in the scheduling signaling is used and which scheduling information is not used.

Optionally, the SRS resource set also has an association relationship with UE panel/UE capabilities. The association relationship may be agreed upon in a protocol or configured/indicated by the base station. For example, in two SRS resource sets configured by the base station, the first SRS resource set is associated with the first panel/first UE capability, and the second SRS resource set is associated with the second panel/UE capability.

Optionally, the base station schedules transmission of PUSCH through RRC signaling or DCI signaling. The scheduling signaling includes a group of scheduling information (for example, multiple groups of TPMI and/or SRI information), regardless of the TCI indication information/second TCI indication information indicates one or more TCI states, the transmission of the PUSCH corresponds to the scheduling information.

Optionally, the power control parameter or power control parameter set of PUSCH has a correspondence relationship with the TCI state.

Optionally, the power control parameters include at least one of the following: path loss reference signal indication parameter; closed loop power control parameter; open loop power control parameter; path loss compensation parameter; and target received power parameter.

Optionally, the protocol directly agrees or the base station directly indicates the association relationship between the power control parameter/power control parameter set of PUSCH and the TCI state.

For example, RRC signaling/MAC CE signaling is used to indicate the TCI state corresponding to the power control parameter/power control parameter set of PUSCH, or indicates the power control parameter/power control parameter set of PUSCH corresponding to the TCI state.

Optionally, the information used to indicate the association relationship is included in the scheduling signaling for scheduling the PUSCH.

Optionally, the association relationship between the power control parameter/power control parameter set of PUSCH and the TCI state can be indirectly determined.

For example, the protocol stipulates or the base station indicates the association relationship between TCI state and scheduling information/code word/CDM group of DMRS port/corresponding SRS resource set/transmission occasion/copy/transmission layer/antenna port/frequency-domain resource/UE capability information of PUSCH. The power control parameter/power control parameter set of PUSCH has a correspondence relationship with scheduling information/code word/CDM group of DMRS port/corresponding SRS resource set/transmission occasion/copy/transmission layer/antenna port/frequency-domain resource/UE capability information of PUSCH. Based on the correspondence relationship, the association relationship between the power control parameter/power control parameter set of PUSCH and the TCI state can be determined.

Optionally, the SRS resource set corresponding to PUSCH has a correspondence relationship with the TCI state (Note: some examples and explanations have been given in the previous section on determining the association relationship between scheduling information of PUSCH and TCI state).

Optionally, the protocol directly stipulates or the base station directly indicates the association relationship between the SRS resource set corresponding to PUSCH and the TCI state.

For example, RRC signaling/MAC CE signaling indicates TCI state corresponding to the SRS resource set corresponding to PUSCH, or indicates SRS resource set corresponding to the TCI state.

Optionally, the association relationship is configured in a configuration signaling of the SRS resource set. For example, a TCI parameter is added to the configuration signaling SRS-ResourceSet of the SRS resource set, and the TCI parameter indicates that the SRS resource set is associated with which TCI state indicated by the first TCI indication information. For example, when the value of the TCI parameter is 0, it indicates that when the first TCI indication information indicates two TCI states, the SRS resource set is associated with the first one of TCI states indicated by the first TCI indication information; when the value of the TCI parameter is 1, it indicates that when the first TCI indication information indicates two TCI states, the SRS resource set is associated with the second one of TCI states indicated by the first TCI indication information.

Optionally, the association relationship is configured in a configuration signaling of the SRS resource. For example, a TCI parameter is added to a configuration signaling SRS-Resource of the SRS resource, and the TCI parameter indicates that the SRS resource set is associated with which TCI state indicated by the first TCI indication information. For example, when the value of the TCI parameter is 0, it indicates that when the first TCI indication information indicates two TCI states, the SRS resource set is associated with the first one of TCI states indicated by the first TCI indication information; when the value of the TCI parameter is 1, it indicates that when the first TCI indication information indicates two TCI states, the SRS resource set is associated with the second one of TCI states indicated by the first TCI indication information.

Optionally, the information used to indicate the association relationship is included in the scheduling signaling for scheduling the PUSCH.

Optionally, the association relationship is included in the configuration/indication information of the TCI state or TCI codepoint.

For example, in a signaling for activating a TCI codepoint, the base station indicates which SRS resource set is associated with the TCI state corresponding to the TCI codepoint. For example, when a certain bit is 0, it indicates that the first one of TCI states of the TCI codepoint is associated with the first SRS resource set, and the second one of TCI states is associated with the second SRS resource set; when the bit is 1, it indicates that the first one of TCI states of the TCI codepoint is associated with the second SRS resource set, and the second one of TCI states is associated with the first SRS resource set. For another example, when a certain bit is 0, it indicates that all TCI states of the TCI codepoint are associated with the first SRS resource set; when the bit is 1, it indicates that the first one of TCI states of the TCI codepoint is associated with the first SRS resource set, and the second one of TCI states is associated with the second SRS resource set.

For another example, the base station configures, in the configuration information of the TCI codepoint, which SRS resource set is associated with the TCI state corresponding to the TCI codepoint.

For another example, the base station configures, in the configuration information of the TCI state, which SRS resource sets are associated with the TCI state.

For example, the configuration information of the TCI state includes a parameter indicating that the TCI state is associated with which SRS resource set in scheduling information of PUSCH. For example, when the value of this parameter is 0, it indicates that the TCI state is associated with the first SRS resource set; when the bit is 1, it indicates that the TCI state is associated with the second SRS resource set.

Optionally, a correspondence relationship between the TCI state and codepoint of information used to indicate the correspondence relationship between the SRS resource set corresponding to PUSCH and the TCI state, is defined.

Optionally, there are 2 SRS resource sets corresponding to PUSCH (for example, PUSCH is codebook-based PUSCH, corresponding to 2 SRS resource sets whose usage is configured as codebook), and the first TCI indication information indicates 2 TCI states. An example of a coding method of information for indicating the correspondence relationship between the SRS resource set corresponding to PUSCH and the TCI state is as follows:

| Codepoint | TCI state (s) |
|---|---|
| 0 | first SRS resource set: first TCI state |
| | second SRS resource set: second TCI state |
| 1 | first SRS resource set: second TCI state |
| | second SRS resource set: first TCI state |

Optionally, there are 2 SRS resource sets corresponding to PUSCH, and the first TCI indication information indicates 4 TCI states. An example is as follows:

| Codepoint | TCI state(s) |
|---|---|
| 0 | first SRS resource set: first TCI state |
| | second SRS resource set: third TCI state |
| 1 | first SRS resource set: second TCI state |
| | second SRS resource set: fourth TCI state |

Optionally, there are 2 SRS resource sets corresponding to PUSCH, and the first TCI indication information indicates 4 TCI states. An example is as follows:

| Codepoint | TCI state (s) |
|---|---|
| 00 | first SRS resource set: first TCI state |
| | second SRS resource set: third TCI state |
| 01 | first SRS resource set: first TCI state |
| | second SRS resource set: fourth TCI state |
| 10 | first SRS resource set: second TCI state |
| | second SRS resource set: third TCI state |
| 11 | first SRS resource set: second TCI state |
| | second SRS resource set: fourth TCI state |

Optionally, the association relationship between the SRS resource set corresponding to PUSCH and the TCI state, can be indirectly determined.

For example, the protocol stipulates or the base station indicates the association relationship between TCI state and scheduling information/code word/CDM group of DMRS port/power control parameter/power control parameter set/transmission occasion/copy/transmission layer/antenna port/frequency-domain resource/UE capability information of PUSCH. The SRS resource set corresponding to PUSCH has a correspondence relationship with scheduling information/code word/CDM group of DMRS port/power control parameter/power control parameter set/transmission occasion/copy/transmission layer/antenna port/frequency-domain resource/UE capability information of PUSCH. Based on the correspondence relationship, the association relationship between the SRS resource set corresponding to PUSCH and the TCI state, can be determined. Optionally, the correspondence relationship is predefined, or configured/indicated by the base station.

For example, the SRS resource set has a predefined association relationship with the UE capability, and the UE capability has a predefined association relationship with the TCI state. Based on the association relationships, an association relationship between the SRS resource set and the TCI state can be deduced.

For example, the UE reports two UE capabilities: a first UE capability and a second UE capability. The base station configures four SRS resource sets. The first SRS resource set and the second SRS resource set are associated with the first UE capability, and the third SRS resource set and the fourth SRS resource set are associated with the second UE capability. When the first TCI indication information indicates two TCI states, the first-TCI state is associated with the first UE capability, and the second-TCI state is associated with the second UE capability. Then, the first SRS resource set and the second SRS resource set are associated with the first-TCI state, and the third SRS resource set and the fourth SRS resource set are associated with the second-TCI state.

Optionally, when the SRS resource set has a predefined association relationship with the UE capability, the SRS resource set is configured based on the UE capability.

Optionally, the UE capability information has a correspondence relationship with the TCI state.

Optionally, the UE capability information is multi-panel transmission capability of the UE, such as capabilityValueSetIndexReporting.

Optionally, the UE capability information is SRS port number/MIMO transmission layer number supported by the UE.

Optionally, the UE capability information is SRS port number/MIMO transmission layer number corresponding to one transmission occasion/copy/code word/SRS resource set/DMRS port group of PUSCH supported by the UE.

Optionally, the protocol directly stipulates or the base station directly indicates the association relationship between the UE capability information and the TCI state.

For example, RRC signaling/MAC CE signaling indicates TCI state corresponding to the UE capability information, or indicates for the TCI state, the UE capability information corresponding to the TCI state.

Optionally, the information used to indicate the association relationship is included in the scheduling signaling for scheduling the PUSCH.

Optionally, the association relationship between the UE capability information and the TCI state can be determined indirectly.

For example, the protocol stipulates or the base station indicates the association relationship between TCI state and scheduling information/code word/CDM group of DMRS port/corresponding SRS resource set/power control parameter/power control parameter set/transmission occasion/copy/transmission layer/antenna port/frequency-domain resource of PUSCH. UE capability information has a correspondence relationship with scheduling information/code word/CDM group of DMRS port/corresponding SRS resource set/power control parameter/power control parameter set/transmission occasion/copy/transmission layer/antenna port/frequency-domain resource of PUSCH. Based on the correspondence relationship, the association relationship between the UE capability information and the TCI state can be determined. Optionally, the correspondence relationship is predefined, or configured/indicated by the base station.

Optionally, the association relationship between the UE capability information and the TCI state is included in the configuration/indication information of the TCI state or TCI codepoint.

For example, in a signaling for activating a TCI codepoint, the base station indicates which UE capability information is associated with the TCI state corresponding to the TCI codepoint. For example, when a certain bit is 0, it indicates that the first one of TCI states of the TCI codepoint is associated with the first UE capability information, and the second one of TCI states is associated with the second UE capability information; when the bit is 1, it indicates that the first one of TCI states of the TCI codepoint is associated with the UE capability information, and the second one of TCI states is associated with the UE capability information. For another example, when a certain bit is 0, it indicates that the first one of TCI states and the second one of TCI states of the TCI codepoint are associated with the first UE capability information; when the bit is 1, it indicates that the first one of TCI states of the TCI codepoint is associated with the first UE capability information, and the second one of TCI states is associated with the second UE capability information. For another example, when two bits are 00, it indicates that the TCI state of the TCI codepoint is associated with the first UE capability information; when two bits are 01, it indicates that the TCI state of the TCI codepoint is associated with the second UE capability information; when the two bits are 10, it indicates that the first one of TCI states is associated with the first UE capability information, and the second one of TCI states is associated with the second UE capability information. Optionally, when the two bits are 11, it indicates that the first one of TCI states of the TCI codepoint is associated with the second UE capability information, and the second one of TCI states is associated with the first UE capability information.

For another example, the base station configures, in the configuration information of the TCI codepoint, which UE capability information is associated with the TCI state corresponding to the TCI codepoint.

For another example, the base station configures, in the configuration information of the TCI state, which UE capability information is associated with the TCI state.

For example, the configuration information of the TCI state includes a parameter that indicates that the TCI state is associated with which UE capability information in the UE capability information. For example, when the value of this parameter is 0, it indicates that the TCI state is associated with the first UE capability information; when the bit is 1, it indicates that the TCI state is associated with the second UE capability information.

Optionally, the transmission occasion/copy/TB/transport block (TB) of PUSCH has a correspondence relationship with the TCI state.

Optionally, time-frequency resources that transmit the same data, are called one transmission occasion.

Optionally, copies of PUSCH are the same or different redundant versions of the same TB.

Optionally, the protocol directly stipulates or the network device directly indicates the association relationship between the transmission occasion/copy/TB of PUSCH and the TCI state.

For example, RRC signaling/MAC CE signaling is used to indicate the TCI state corresponding to the transmission occasion/copy/TB of PUSCH, or indicate transmission occasion/copy/TB of PUSCH corresponding to the TCI state.

Optionally, the information used to indicate the association relationship is included in the scheduling signaling for scheduling the PUSCH.

Optionally, the association relationship between the transmission occasion/copy/TB of PUSCH and the TCI state may be determined indirectly.

For example, the protocol stipulates or a base station indicates an association relationship between the TCI state and scheduling information/code word/CDM group of DMRS port/corresponding SRS resource set/power control parameter/power control parameter set/transmission layer/antenna port/frequency-domain resource of PUSCH; the transmission occasion/copy/TB of PUSCH has a correspondence relationship with scheduling information/code word/CDM group of - DMRS port/corresponding SRS resource set/transmission layer/antenna port/frequency domain resource of PUSCH; based on the correspondence relationship, an association relationship between the TCI state and the transmission occasion/copy/TB of the PUSCH can be determined. Optionally, the correspondence relationship is predefined, or configured/indicated by the network device.

Optionally, the transmission layer of PUSCH has a correspondence relationship with the TCI state.

Optionally, transmission layers of PUSCH are divided into some groups, one group of transmission layers corresponds to one TCI state, and different transmission layers correspond to different TCI states. One grouping manner is that layers corresponding to one piece of scheduling information of PUSCH are one group. For example, there are two transmission pre-coding matrix indications (TPMI) in the scheduling information of PUSCH, layers corresponding to the first TPMI are one group, and layers corresponding to the second TPMI are one group. For another example, there are two sounding reference signal (SRS) resource indications (SRI) in the scheduling information of PUSCH; layers corresponding to the first SRI are one group, and layers corresponding to the second SRI are one group. Another grouping manner is that layers corresponding to one code word of PUSCH are one group, and different code words correspond to different groups. For example, the PUSCH is scheduled with two code words, layers corresponding to one code word correspond to one TCI state, and layers corresponding to the other code word correspond to another TCI.

Optionally, the association relationship between the transmission layer of PUSCH and the TCI state is directly agreed through the protocol or directly indicated by the network device.

For example, RRC signaling/MAC CE signaling indicates TCI state corresponding to the transmission layer of PUSCH, or indicates corresponding transmission layer of PUSCH for the TCI state.

Optionally, the information used to indicate the association relationship is included in the scheduling signaling for scheduling PUSCH.

Optionally, the association relationship between the transmission layer of PUSCH and the TCI state can be indirectly determined.

For example, the protocol stipulates or the base station indicates the association relationship between TCI state and scheduling information/code word/CDM group of DMRS port/corresponding SRS resource set/power control parameter/power control parameter set/transmission occasion/copy/TB/antenna port/frequency-domain resource of PUSCH. The transmission layer of PUSCH has a correspondence relationship with scheduling information/code word/CDM group of DMRS port/corresponding SRS resource set/transmission occasion/copy/TB/antenna port/frequency-domain resource of PUSCH. Based on the correspondence relationship, the association relationship between the transmission layer of PUSCH and the TCI state can be determined. Optionally, the correspondence relationship is predefined, or configured/indicated by the base station.

Optionally, the DMRS port corresponding to the PUSCH has a correspondence relationship with the TCI state, or the CDM group of the PUSCH DMRS has an association relationship with the TCI state.

Optionally, the DMRS ports corresponding to PUSCH are divided into some groups, one group corresponds to one TCI state, and different groups correspond to different TCI states. One grouping manner is that DMRS ports corresponding to a group of scheduling information of PUSCH are grouped. For example, there are two TPMIs in the scheduling information of PUSCH, DMRS ports corresponding to the first TPMI are grouped, and DMRS ports corresponding to the second TPMI are grouped. For another example, there are two SRIs in the scheduling information of PUSCH, DMRS ports corresponding to the first SRI are grouped, and DMRS ports corresponding to the second SRI are grouped. Another grouping manner is that DMRS ports corresponding to a code word of PUSCH are grouped, and the DMRS ports corresponding to different code words correspond to different groups. For example, PUSCH is scheduled with 2 code words, DMRS ports corresponding to one code word correspond to one TCI state, and DMRS ports corresponding to the other code word correspond to another TCI.

Optionally, DMRS ports associated with different TCI states belong to different CDM groups.

For example, RRC signaling/MAC CE signaling is used to indicate the TCI state corresponding to the DMRS port corresponding to PUSCH/the DMRS CDM group of PUSCH, or indicates for the TCI state, DMRS CDM group of the DMRS port/PUSCH corresponding to PUSCH corresponding to the TCI state.

For example, when DMRS in two DMRS CDM groups are indicated for PUSCH, the two CDM groups are each associated with one TCI state.

Optionally, the information used to indicate the association relationship is included in the scheduling signaling for scheduling PUSCH.

Optionally, the association relationship between the TCI state and the DMRS CDM group of the DMRS port/PUSCH corresponding to PUSCH, can be determined indirectly.

For example, the protocol stipulates or a base station indicates an association relationship between the TCI state and scheduling information/code word/CDM group of DMRS port/corresponding SRS resource set/power control parameter/power control parameter set/transmission occasion/copy/TB/transmission layer/frequency-domain resource of PUSCH. The DMRS port corresponding to PUSCH/DMRS CDM group of PUSCH has a correspondence relationship with scheduling information/code word/CDM group of DMRS port/corresponding SRS resource set/transmission occasion/copy/TB/transmission layer/frequency domain resource of PUSCH. Based on the correspondence relationship, the association relationship between the TCI state and the DMRS port corresponding to PUSCH/the DMRS CDM group of PUSCH, can be determined. Optionally, the correspondence relationship is predefined, or configured/indicated by the network device.

Optionally, the frequency-domain resources corresponding to PUSCH have a correspondence relationship with the TCI state.

Optionally, even-numbered PRBs correspond to one TCI state, and odd-numbered PRBs correspond to another TCI state.

Optionally, even-numbered PRGs correspond to one TCI state, and odd-numbered PRGs correspond to another TCI state.

The first half of the frequency-domain resource allocated to PUSCH corresponds to one TCI state, and the second half corresponds to another TCI state.

Optionally, the protocol directly stipulates or the base station directly indicates the association relationship between the frequency-domain resource corresponding to PUSCH and the TCI state.

For example, RRC signaling/MAC CE signaling indicates TCI state corresponding to the frequency domain resource corresponding to PUSCH, or indicates for the TCI state, the frequency domain resource corresponding to PUSCH corresponding to the TCI state. Optionally, the information used to indicate the association relationship is included in the scheduling signaling for scheduling the PUSCH.

Optionally, the association relationship between the frequency domain resource corresponding to PUSCH and the TCI state can be indirectly determined.

For example, the protocol stipulates or the base station indicates the association relationship between TCI state and scheduling information/code word/CDM group of DMRS port/corresponding SRS resource set/power control parameter/power control parameter set/transmission occasion/copy/TB/transmission layer/DMRS port of PUSCH. The frequency domain resource corresponding to PUSCH has a correspondence relationship with scheduling information/code word/CDM group of DMRS port/corresponding SRS resource set/transmission occasion/copy/TB/transmission layer/DMRS port of PUSCH. Based on the correspondence relationship, the association relationship between the frequency domain resource corresponding to PUSCH and the TCI state can be determined. Optionally, the correspondence relationship is predefined, or configured/indicated by the base station.

Optionally, the code word of PUSCH has a correspondence relationship with the TCI state.

Optionally, the association relationship between the code word of PUSCH and the TCI state is directly agreed through the protocol or directly indicated by the network device.

For example, RRC signaling/MAC CE signaling is used to indicate the corresponding TCI state for the code word of PUSCH, or to indicate for the TCI state, the code word of PUSCH corresponding to the TCI state. Optionally, the information used to indicate the association relationship is included in the scheduling signaling for scheduling PUSCH.

An example indicating the association relationship between the code word of PUSCH and the TCI state is:

| Codepoint | TCI state(s) |
|---|---|
| 00 | first CW: first TCI state |
| | second CW: unused |
| 01 | first CW: unused |
| | second CW: second TCI state |
| 10 | first CW: first TCI state |
| | second CW: second TCI state |
| 11 | Reserved |

Optionally, the association relationship between the code word of PUSCH and the TCI state can be indirectly determined.

For example, the protocol stipulates or the base station indicates the association relationship between TCI state and scheduling information/CDM group of DMRS port/corresponding SRS resource set/power control parameter/power control parameter set/transmission occasion/copy/TB/transmission layer/DWRS port/frequency-domain resource of PUSCH. The frequency-domain resource corresponding to PUSCH has a correspondence relationship with scheduling information/CDM group of DMRS port/corresponding SRS resource set/transmission occasion/copy/TB/transmission layer/DWRS port/frequency-domain resource of PUSCH. Based on the correspondence relationship, the association relationship between the code word of PUSCH and the TCI state can be determined. Optionally, the correspondence relationship is predefined, or configured/indicated by the base station.

For each of the above solutions, optionally, the scheduling information includes one or more of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, PUSCH transmission corresponds to the first scheduling information and the second scheduling information, and the antenna port corresponding to the first scheduling information and the antenna port corresponding to the second scheduling information respectively belong to different CDM groups.

For each of the above solutions, optionally, multiple TCI states indicated by the first TCI indication information/second TCI indication information correspond to the same scheduling information. For example, the first TCI indication information indicates/the second TCI indication information indicates two TCI states, a scheduling signaling of PUSCH includes a TPMI/SRI field, and then the UE determines the precoding matrix and/or transmission layer number of PUSCH based on the TPMI/SRI field, and transmits the PUSCH in both beam directions indicated by the two TCI states based on the precoding matrix and/or the transmission layer number. For example, the UE uses the first panel to transmit PUSCH in the beam direction indicated by the first one of TCI states, and uses the second panel to transmit PUSCH in the beam direction indicated by the second one of TCI states. The precoding corresponding to the two panels is the same.

Optionally, a transmission mode of PUSCH is: one DMRS port of PUSCH is associated with multiple TCI states indicated by the TCI indication information. For example, the UE transmits PUSCH simultaneously on the same DMRS port through multiple panels, and each panel is associated with one piece of TCI indication information. For each panel, the UE transmits PUSCH by using one or more of a transmission beam corresponding to the TCI state associated with the panel, scheduling information associated with the panel/precoding corresponding to the scheduling information corresponding to the TCI state, and transmission power corresponding to the power control parameter associated with the panel.

Optionally, a transmission mode of PUSCH is: one transmission occasion/copy/frequency-domain resource/TB of PUSCH is associated with one TCI state indicated by the TCI indication information, at the same moment, multiple transmission occasions/copies/TBs of PUSCH are transmitted simultaneously on one or more frequency domain resources; or, at the same moment, one transmission occasion/copy/TB of PUSCH is transmitted simultaneously on multiple frequency domain resources. Optionally, for each transmission occasion/copy/TB/frequency-domain resource, the UE transmits the PUSCH by using one or more of the following: a transmission beam corresponding to the TCI state associated with the transmission occasion/copy/TB/frequency domain resource, the scheduling information associated with the transmission occasion/copy/TB/frequency domain resource/the precoding corresponding to the scheduling information corresponding to the TCI state, and the transmission power corresponding to the power control parameter associated with the transmission occasion/copy/TB/frequency domain resource.

For example, one panel of the UE corresponds to one transmission occasion/copy/TB. For each panel, the UE transmits PUSCH by using one or more of a transmission beam corresponding to the TCI state associated with the panel, scheduling information associated with the panel/precoding corresponding to the scheduling information corresponding to the TCI state, and transmission power corresponding to the power control parameter associated with the panel.

Optionally, different transmission occasions/copies/TB correspond to the same transmission layer and the same DMRS port. Optionally, the UE uses the same DMRS port on different panels to transmit the same layer of PUSCH.

Optionally, different transmission occasions/copies/TB correspond to the same transmission layer and different DMRS ports. Optionally, different DMRS ports mean that any DMRS port corresponds to only one transmission occasion/copy/TB. Optionally, the UE uses different DMRS ports on different panels to transmit the same layer of PUSCH.

Optionally, different transmission occasions/copies/TB correspond to different transmission layers. Optionally, different transmission layers mean that any transmission layer corresponds to only one transmission occasion/copy/TB. Optionally, the UE uses different panels to transmit different layers of PUSCH.

Optionally, different transmission occasions/copies/TB correspond to the same time-frequency resource and different transmission layers.

Optionally, different transmission occasions/copies/TB correspond to different frequency-domain resources. Optionally, the different frequency-domain resources do not overlap with each other. Optionally, the UE uses different panels in different frequency-domain resources to transmit the PUSCH.

Optionally, different transmission occasions/copies/TB correspond to the same transmission layer identifier, the same DMRS port identifier, and different frequency-domain resources. For example, the UE uses the first panel in the first frequency-domain resource to transmit the first layer of PUSCH corresponding to the first DMRS port, and uses the second panel in the second frequency-domain resource to transmit the second layer of PUSCH corresponding to the second DMRS port.

Optionally, different transmission occasions/copies/TB correspond to the same time-frequency resource. For example, the UE uses the same time-frequency resource to perform transmission on multiple panels simultaneously.

Optionally, DMRS ports corresponding to different transmission occasions/copies/TB belong to different CDM groups. Optionally, different CDM groups mean that any CDM group corresponds to only one transmission occasion/copy/TB. For example, the UE uses different panels to transmit PUSCH data corresponding to different DMRS CDM groups.

Optionally, a corresponding RV version is configured for the transmission occasion/copy/TB corresponding to each TCI state.

Optionally, the transmission occasions/copies/TB corresponding to different panels correspond to the same RV.

Optionally, the transmission occasions/copies/TB corresponding to different panels correspond to different RVs.

Optionally, any two transmission occasions/copies/TB of PUSCH are associated with different TCI states.

Optionally, the TCI indication information indicates a first-TCI state and a second-TCI state. Even-numbered transmission occasion/copy/TB/frequency-domain resource is associated with the first-TCI state, and odd-numbered transmission occasion/copy/TB/frequency-domain resource is associated with the second-TCI state.

Optionally, the TCI indication information indicates a first-TCI state and a second-TCI state, multiple transmission occasions/copies/TB of the PUSCH are grouped in pairs, and the even-numbered group of transmission occasions/copies/TB is associated with the first-TCI state, the odd-numbered group of transmission occasions/copies/TB is associated with the second-TCI state.

Optionally, the TCI indication information indicates a first-TCI state and a second-TCI state, the first half of the multiple transmission occasions/copies/TB/frequency-domain resources of PUSCH is associated with the first-TCI state, and the second half of the multiple transmission occasions/copies/TB/frequency-domain resources of PUSCH is associated with the second-TCI state.

### Embodiment 2

The first TCI indication information sent by the base station is received, and the first TCI indication information indicates one or two TCI states.

DCI for scheduling PDSCH is received, and the DCI corresponds to one PUCCH resource.

When the first TCI indication information indicates one TCI state, the PUCCH resources are used for transmission based on the TCI state.

The UE determines a transmission power of the PUCCH resource based on a power control parameter corresponding to the TCI state, uses the transmission power and the beam corresponding to the TCI state to transmit the PUCCH.

When the first TCI indication information indicates two TCI states (first-TCI state and second-TCI state), the PDCCH resources are used for transmission based on the two TCI states. DMRS port corresponding to the PUCCH resource is associated with two TCI states.

The UE determines a first transmission power based on the power control parameter corresponding to the first-TCI state, and determines a second transmission power based on the power control parameter corresponding to the second-TCI state. The UE uses the first transmission power and the first-TCI state to transmit PUCCH on the first panel, and the UE uses the second transmission power and the second-TCI state to transmit the PUCCH on the second panel.

### Embodiment 3

First TCI indication information sent by a base station is received, and the first TCI indication information indicates one or more TCI states.

DCI for scheduling PDSCH is received, and the DCI corresponds to one PUCCH resource.

Second TCI indication information sent by the base station is received, and the second TCI indication information further indicates indicated TCI state corresponding to the PUCCH resource from the TCI state indicated by the first TCI indication information. Optionally, the second TCI indication information is carried in the DCI corresponding to the PUCCH resource.

Optionally, the first TCI indication information indicates two TCI states. A correspondence relationship between codepoint of the second TCI indication information and the TCI state indicated by the first TCI indication information is as follows:

| Codepoint | TCI state(s) |
|---|---|
| 00 | First indicated TCI state |
| 01 | Second indicated TCI state |
| 10 | First indicated TCI state, second indicated TCI state |
| 11 | Reserved |

The first indicated TCI state is a first indicated TCI state, and second indicated TCI state is a second indicated TCI state.

That is, when the second TCI indication information indicates 00, the PUCCH resource is associated with one TCI state, and the panel corresponding to the first-TCI state is used to transmit the PUCCH. When the second TCI indication information indicates 10, the PUCCH resource is associated with two TCI states, and PUCCH is transmitted by using the beam corresponding to the first-TCI state on the first panel, and PUCCH is transmitted by using the beam corresponding to the second-TCI state on the second panel.

Optionally, different TCI states correspond to different frequency-domain resources. Still as in the above example, optionally, the UE uses the first panel in the first frequency-domain resource to perform transmission on the PUCCH resource according to the beam corresponding to the first-TCI state; the UE uses the second panel in the second frequency-domain resource to perform transmission on the PUCCH resource according to the beam corresponding to the second-TCI state.

In the signal transmission method described in the embodiment of the present disclosure, a network device transmits at least one first-TCI state for beam indication to UE, and combined with a first correspondence relationship between the first-TCI state and UE capability, and/or a second correspondence relationship between the first-TCI state and transmission-related information corresponding to a first signal, at least one first-TCI state can correspond to different UE capabilities and/or transmission-related information. By using the correspondence relationship, beams can be indicated for different panels and/or TRPs to ensure simultaneous transmission of multiple panels and/or multiple TRPs.

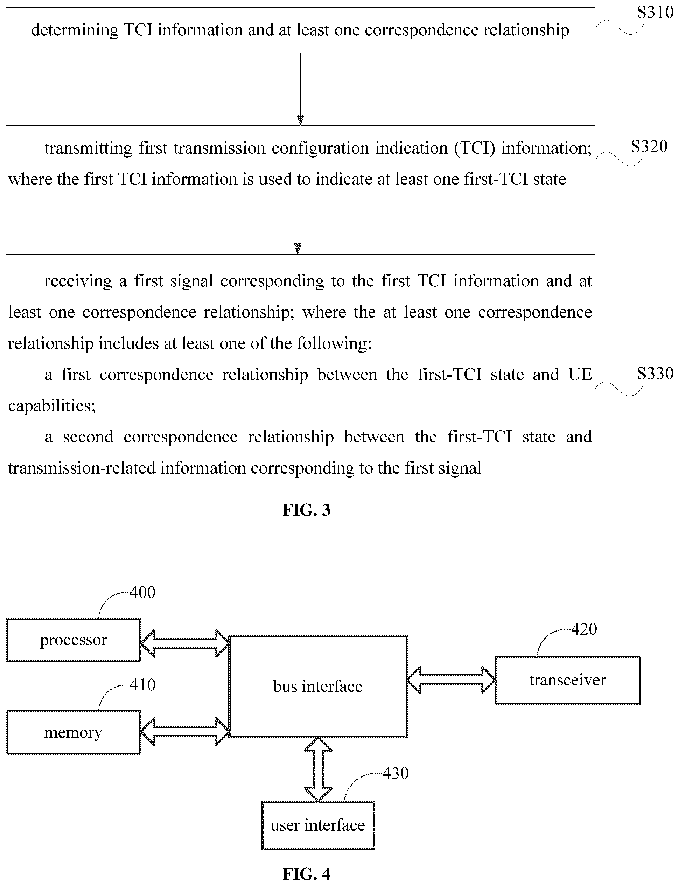

One embodiment of the present disclosure further provides a signal transmission method. Optionally, the signal transmission method is applied to a network device. As shown in FIG. 3, the method includes:
S310: determining TCI information and at least one correspondence relationship;
S320: transmitting first transmission configuration indication (TCI) information; where the first TCI information is used to indicate at least one first-TCI state;
S330: receiving a first signal corresponding to the first TCI information and at least one correspondence relationship; where the at least one correspondence relationship includes at least one of the following:
   a first correspondence relationship between the first-TCI state and UE capabilities;
   a second correspondence relationship between the first-TCI state and transmission-related information corresponding to the first signal.

By using the signal transmission method according to the embodiment of the present disclosure, according to at least one first-TCI state transmitted by the network device in combination with the at least one correspondence relationship, the UE can determine UE capability and/or transmission-related information corresponding to all or part of TCI states in the at least one first-TCI state; then, based on the UE capability and/or transmission-related information, transmission parameters corresponding to each panel and/or TRP can be determined, thereby achieving simultaneous transmission of multiple panels (single TRP or multiple TRPs).

The transmission parameters include but are not limited to one or more of the following: precoding matrix, time-domain resource, frequency-domain resource, spatial filter parameter (or transmission beam), transmission layer number, Demodulation Reference Signal (DMRS) port.

Optionally, when the transmission-related information does not include a transmission occasion, the transmission-related information has an association relationship with the transmission occasion of the first signal. The transmitting a first signal according to the first TCI information and at least one correspondence relationship, includes: determining transmission-related information and TCI state corresponding to each transmission occasion of the first signal according to the first TCI information and the at least one correspondence relationship and the association relationship; and transmitting the first signal at each transmission occasion according to the transmission-related information and TCI state.

By using this implementation, based on the first TCI information and at least one correspondence relationship, it can also determine how many TCI states the transmission of the first signal corresponds to; based on the number of TCI states, it is determined whether it is one or a combination of single-panel transmission, multi-panel transmission, single-TRP transmission, multi-TRP transmission, thereby achieving switching between single panel and multi-panel, switching between single TRP and multi-TRP, etc.

Optionally, in the signal transmission method, when the TCI information indicates at least two first-TCI states, the receiving a first signal corresponding to the TCI information and the at least one correspondence relationship, include:
in a same time unit, receiving a first signal corresponding to the at least two first-TCI states and the at least one correspondence relationship.

Optionally, the signal transmission method further includes:
transmitting the at least one correspondence relationship to the UE through one or more of the following information:
first indication information;
resource set indication information;
TCI state configuration information;
TCI codepoint configuration information;
network device configuration information.

Optionally, in the signal transmission method, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that a second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, in the signal transmission method, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

Optionally, the signal transmission method further includes:
transmitting first indication information;
where the first indication information is used to indicate at least one of the following information:
   at least one second-TCI state; where the at least one second-TCI state is a TCI state of the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and UE capability.

Optionally, the correspondence relationship between the at least one second-TCI state and the second indication field in the scheduling signaling corresponding to the first signal includes one or more of the following:
correspondence relationship between part of the second-TCI state of the at least one second-TCI state and part of indication field of the second indication field in the scheduling signaling corresponding to the first signal;
correspondence relationship between part of the second-TCI state of the at least one second-TCI state and all indication fields of the second indication field in the scheduling signaling corresponding to the first signal;
correspondence relationship between all second-TCI states of the at least one second-TCI state and all indication fields of the second indication field in the scheduling signaling corresponding to the first signal;
correspondence relationship between all the second-TCI states of the at least one second-TCI state and part of indication fields of the second indication field in the scheduling signaling corresponding to the first signal.

Optionally, in the signal transmission method, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
relationship between the at least one second-TCI state determined based on the first indication information and the transmission-related information corresponding to the first signal;
relationship between the at least one second-TCI state determined based on the first indication information and the second indication field;
relationship between the at least one second TCI state determined based on the first indication information and the first indication field in the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

Optionally, in the signal transmission method, if the at least one correspondence relationship includes a second correspondence relationship and the transmission-related information includes resource sets, the second correspondence relationship includes:
M resource sets in the resource sets correspond to the at least one first-TCI state in a one-to-one manner; M is an integer greater than or equal to 1; where the resource set is a resource set whose usage type corresponds to transmission mode of the first signal.

Optionally, the signal transmission method further includes:
transmitting resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the signal transmission method, when the resource set indication information indicates the third correspondence relationship, the third correspondence relationship includes:
the resource set corresponding to transmission of the first signal has a one-to-one correspondence with the second indication field in the scheduling signaling corresponding to the first signal; where the first indication field is a designated field in the second indication field, and the second indication field is a field for indicating first transmission-related information in the scheduling signaling corresponding to the first signal.

Optionally, in the signal transmission method, when the resource set indication information indicates the resource set corresponding to transmission of the first signal in the M resource sets, the number of indicated resource sets corresponding to transmission of the first signal is less than or equal to X;
where M is an integer greater than 1, X is less than M, and the value of X is determined based on one of the following information:
predefined information;
UE capability;
network device's indication information.

Optionally, in the signal transmission method, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, in the signal transmission method, the transmission-related information includes one or more of scheduling information, power control parameter, resource set, transmission occasion, transmission repetition, transmission layer, transport block (TB), antenna port, frequency-domain resource and code word.

Optionally, in the signal transmission method, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, in the signal transmission method, the transmission-related information is one of a transmission occasion, a transmission repetition, a transport block and a transmission layer; when the first signal corresponds to multiple pieces of transmission-related information, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the signal transmission method, the transmission-related information includes an antenna port, and when the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups.

Optionally, the signal transmission method further includes:
transmitting port indication information, where the port indication information is used to indicate an antenna port corresponding to the first signal.

Optionally, in the signal transmission method, the transmission-related information includes a frequency-domain resource, when the first signal is mapped to multiple groups of frequency-domain resources, the second correspondence relationship includes:
each group of frequency-domain resources to which the first signal is mapped corresponds to one first-TCI state.

Optionally, in the signal transmission method, the transmission-related information includes code words; when the first signal includes multiple code words, the second correspondence relationship includes:
each code word of the first signal corresponds to one first-TCI state, respectively.

Optionally, in the signal transmission method, the second correspondence relationship further includes:
multiple groups of scheduling information corresponding to transmission of the first signal correspond to multiple code words of the first signal in a one-to-one manner.

Optionally, in the signal transmission method, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

Optionally, in the signal transmission method, when the transmission-related information includes power control parameters, the second correspondence relationship includes:
each first-TCI state indicated by the first TCI information corresponds to a group of power control parameters.

Optionally, in the signal transmission method, a transmission power of the first signal on the corresponding first target transmission parameter is determined according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

Optionally, in the signal transmission method, the at least one correspondence relationship further includes:
each TCI state indicated by the first TCI information is associated with a reference signal used to indicate spatial relationship.

The method further includes:
determining spatial filter of the first signal on the corresponding second target transmission parameter, according to a reference signal corresponding to the TCI state associated with a second target transmission parameter of the first signal;
where the second target transmission parameter include transmission timing and/or frequency-domain resource.

Optionally, in the signal transmission method, the receiving the first signal corresponding to the TCI information and the at least one correspondence relationship includes:
receiving the first signal corresponding to the TCI information and the at least one correspondence relationship in at least one of the following ways:
according to the first TCI information and at least one correspondence relationship, transmitting the first signal in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

Optionally, in the signal transmission method, the first-TCI state is a TCI state used for uplink transmission, and/or a TCI state corresponding to transmission of the first signal.

It is to be noted that the specific implementation description of the signal transmission method described in the embodiments of the present disclosure when applied to the UE can be applied to the network device, which will not be described in detail here.

Another embodiment of the present disclosure further provides a user equipment (UE), as shown in FIG. 4, including a memory 410, a transceiver 420 and a processor 400.

The memory 410 is used to store a computer program. The transceiver 420 is used to send and receive data under the control of the processor. The processor 400 is used to read the computer program in the memory and perform the following operations:
receiving a transmission configuration indication (TCI) information; where the first TCI information is used to indicate at least one first-TCI state;
transmitting a first signal according to the first TCI information and at least one correspondence relationship;
where the at least one correspondence relationship includes at least one of the following:
   a first correspondence relationship between the first-TCI state and UE capabilities;
   a second correspondence relationship between the first-TCI state and transmission-related information corresponding to the first signal.

Optionally, in the UE, when the TCI information indicates at least two first-TCI states, the transmitting the first signal according to the TCI information and at least one correspondence relationship includes:
in a same time unit, transmitting the first signal according to the at least two first-TCI states and the at least one correspondence relationship.

Optionally, in the UE, the method further includes:
determining the at least one correspondence relationship based on predefined information or one or more of the following information sent by the network device:
first indication information;
resource set indication information;
TCI state configuration information;
TCI codepoint configuration information;
network device configuration information.

Optionally, in the UE, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that the second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, in the UE, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

Optionally, in the UE, the processor 400 is further used to perform:
receiving first indication information;
where the first indication information is used to indicate at least one of the following information:
   at least one second-TCI state; where the at least one second-TCI state is a TCI state of the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and UE capability.

Optionally, in the UE, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

Optionally, in the UE, when the at least one correspondence relationship includes the second correspondence relationship and the transmission-related information includes at least one resource set, the second correspondence relationship includes:

M resource sets in the at least one resource set correspond to the at least one first-TCI state in a one-to-one manner; M is an integer greater than or equal to 1; where the resource set is a resource set whose usage type corresponds to transmission mode of the first signal.

Optionally, in the UE, the method further includes:
receiving resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the UE, when the resource set indication information indicates the third correspondence relationship, the third correspondence relationship includes:
the resource set corresponding to transmission of the first signal has a one-to-one correspondence with the second indication field in the scheduling signaling corresponding to the first signal.

Optionally, in the UE, when the resource set indication information indicates resource sets corresponding to transmission of the first signal among the M resource sets, the number of resource sets corresponding to the transmission of the first signal, indicated by the resource set indication information, is less than or equal to X;
where M is an integer greater than 1, X is less than M, and the value of X is determined based on one of the following information:
predefined information;
UE capabilities;
network device's indication information.

Optionally, in the UE, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, in the UE, the transmission-related information includes one or more of scheduling information, power control parameter, resource set, transmission occasion, transmission repetition, transmission layer, transport block (TB), antenna port, frequency-domain resource and code word.

Optionally, in the UE, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, in the UE, the first signal corresponds to multiple pieces of transmission-related information; the multiple pieces of transmission-related information are divided into multiple groups of transmission-related information. When the transmission-related information includes at least one of a transmission occasion, a transmission repetition, a transport block and a transmission layer, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the UE, the first signal corresponds to multiple pieces of transmission-related information, and the transmission-related information includes an antenna port. When the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups.

Optionally, in the UE, the processor 400 is further used to perform:
receiving port indication information sent by the network device, where the port indication information is used to indicate an antenna port corresponding to the first signal.

Optionally, in the UE, the first signal corresponds to multiple pieces of transmission-related information, and the transmission-related information includes a frequency-domain resource; when the first signal is mapped to multiple groups of frequency-domain resources, the second correspondence relationship includes:
each group of frequency-domain resources to which the first signal is mapped corresponds to one first-TCI state.

Optionally, in the UE, the first signal corresponds to multiple pieces of transmission-related information, and the transmission-related information includes code words. When the first signal includes multiple code words, the second correspondence relationship includes:
each code word of the first signal corresponds to one first-TCI state, respectively.

Optionally, in the UE, the second correspondence relationship further includes:
multiple groups of scheduling information corresponding to transmission of the first signal correspond to multiple code words of the first signal in a one-to-one manner.

Optionally, in the UE, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

Optionally, in the UE, the first signal corresponds to multiple pieces of transmission-related information; when the transmission-related information includes power control parameters, the second correspondence relationship includes:
each first-TCI state indicated by the first TCI information corresponds to a group of power control parameters.

Optionally, in the UE, the processor 400 is further used to perform:
determining a transmission power of the first signal on the corresponding first target transmission parameter according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

Optionally, in the UE, the at least one correspondence relationship further includes:
each TCI state indicated by the first TCI information is associated with a reference signal used to indicate spatial relationship.

The method further includes:
determining spatial filter of the first signal on the corresponding second target transmission parameter, according to a reference signal corresponding to the TCI state associated with a second target transmission parameter of the first signal;
where the second target transmission parameter include transmission timing and/or frequency-domain resource.

Optionally, in the UE, the transmitting the first signal according to the TCI information and the at least one correspondence relationship includes:
transmitting the first signal corresponding to the TCI information and the at least one correspondence relationship in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

In FIG. 4, a bus architecture may include any number of interconnected bus and bridge. Specifically, various circuits of one or more processors, which are represented by the processor 400, and one or more memories, which are represented by the memory 410, are linked together. The bus architecture may link various other circuits, such as a peripheral device, voltage regulator and a power management circuit together. These features are well known in this field; therefore, this disclosure does not make further description on these features. The bus interface provides an interface. The transceiver 420 may be multiple elements, including a transmitter and a receiver and provide units, which communicate with other devices on the transmission medium. The transmission medium includes radio channels, wired channels, optical cables, etc. For different UEs, a user interface 430 may be an interface that can be connected to external or internal devices. The connected devices include but are not limited to a small keyboard, a display, a speaker, a microphone, a joystick, etc.

The processor 400 is responsible for managing the bus architecture and the normal processing. The memory 410 may be used to store data used by the processor 400 for performing operations.

The processor 400 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

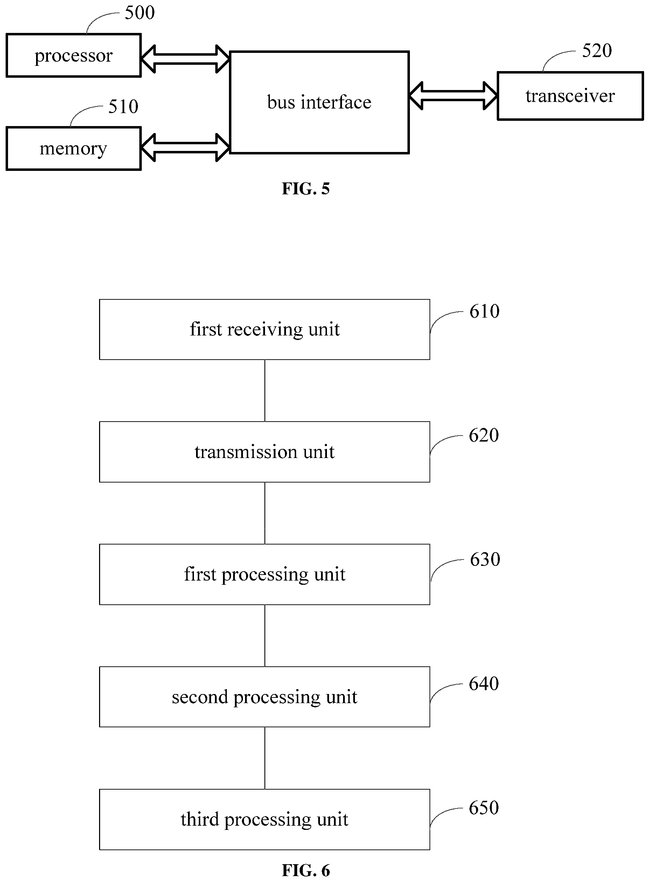

One embodiment of the present disclosure further provides a network device, as shown in FIG. 5, including a memory 510, a transceiver 520 and a processor 500.

The memory 510 is used to store a computer program. The transceiver 520 is used to send and receive data under the control of the processor. The processor 500 is used to read the computer program in the memory and perform the following operations:
determining TCI information and at least one correspondence relationship;
transmitting first transmission configuration indication (TCI) information; where the first TCI information is used to indicate at least one first-TCI state;
receiving a first signal corresponding to the first TCI information and at least one correspondence relationship; where the at least one correspondence relationship includes at least one of the following:
   a first correspondence relationship between the first-TCI state and UE capabilities;
   a second correspondence relationship between the first-TCI state and transmission-related information corresponding to the first signal.

Optionally, in the network device, when the TCI information indicates at least two first-TCI states, the receiving a first signal corresponding to the TCI information and the at least one correspondence relationship, include:
in a same time unit, receiving a first signal corresponding to the at least two first-TCI states and the at least one correspondence relationship.

Optionally, in the network device, the processor 500 is further used to perform:
transmitting the at least one correspondence relationship to the UE through one or more of the following information:
first indication information;
resource set indication information;
TCI state configuration information;
TCI codepoint configuration information;
network device configuration information.

Optionally, in the network device, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that a second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, in the network device, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

Optionally, in the network device, the processor 500 is further used to perform:
transmitting first indication information;
where the first indication information is used to indicate at least one of the following information:
   at least one second-TCI state; where the at least one second-TCI state is a TCI state of the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and UE capability.

Optionally, in the network device, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
relationship between the at least one second-TCI state determined based on the first indication information and the transmission-related information corresponding to the first signal;
relationship between the at least one second-TCI state determined based on the first indication information and the second indication field;
relationship between the at least one second TCI state determined based on the first indication information and the first indication field in the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

Optionally, in the network device, when the at least one correspondence relationship includes a second correspondence relationship and the transmission-related information includes resource sets, the second correspondence relationship includes:
M resource sets in the resource sets correspond to the at least one first-TCI state in a one-to-one manner; M is an integer greater than or equal to 1; where the resource set is a resource set whose usage type corresponds to transmission mode of the first signal.

Optionally, in the network device, the processor 500 is further used to perform:
transmitting resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the network device, when the resource set indication information indicates the third correspondence relationship, the third correspondence relationship includes:
the resource set corresponding to transmission of the first signal has a one-to-one correspondence with the second indication field in the scheduling signaling corresponding to the first signal.

Optionally, in the network device, when the resource set indication information indicates the resource set corresponding to transmission of the first signal in the M resource sets, the number of indicated resource sets corresponding to transmission of the first signal indicated by the resource set indication information, is less than or equal to X;
where M is an integer greater than 1, X is less than M, and the value of X is determined based on one of the following information:
predefined information;
UE capability;
network device's indication information.

Optionally, in the network device, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, in the network device, the transmission-related information includes one or more of scheduling information, power control parameter, resource set, transmission occasion, transmission repetition, transmission layer, transport block (TB), antenna port, frequency-domain resource and code word.

Optionally, in the network device, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, in the network device, the first signal corresponds to multiple pieces of transmission-related information, and the multiple pieces of transmission-related information are divided into multiple groups of transmission-related information; when the transmission-related information is one of a transmission occasion, a transmission repetition, a transport block and a transmission layer, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the network device, the first signal corresponds to multiple pieces of transmission-related information; the transmission-related information includes an antenna port; and when the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups.

Optionally, in the network device, the processor 500 is further used to perform:
transmitting port indication information, where the port indication information is used to indicate an antenna port corresponding to the first signal.

Optionally, in the network device, the first signal corresponds to multiple pieces of transmission-related information; the transmission-related information includes a frequency-domain resource, when the first signal is mapped to multiple groups of frequency-domain resources, the second correspondence relationship includes:
each group of frequency-domain resources to which the first signal is mapped corresponds to one first-TCI state.

Optionally, in the network device, the first signal corresponds to multiple pieces of transmission-related information; the transmission-related information includes code words; when the first signal includes multiple code words, the second correspondence relationship includes:
each code word of the first signal corresponds to one first-TCI state, respectively.

Optionally, in the network device, the second correspondence relationship further includes:
multiple groups of scheduling information corresponding to transmission of the first signal correspond to multiple code words of the first signal in a one-to-one manner.

Optionally, in the network device, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

Optionally, in the network device, the first signal corresponds to multiple pieces of transmission-related information; when the transmission-related information includes power control parameters, the second correspondence relationship includes:
each first-TCI state indicated by the first TCI information corresponds to a group of power control parameters.

Optionally, in the network device, the processor 500 is further used to perform:
determining a transmission power of the first signal on the corresponding first target transmission parameter according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

Optionally, in the network device, the at least one correspondence relationship further includes:
each TCI state indicated by the first TCI information is associated with a reference signal used to indicate spatial relationship.

The processor 500 is further used to perform:
determining spatial filter of the first signal on the corresponding second target transmission parameter, according to a reference signal corresponding to the TCI state associated with a second target transmission parameter of the first signal;
where the second target transmission parameter include transmission timing and/or frequency-domain resource.

Optionally, in the network device, the receiving the first signal corresponding to the TCI information and the at least one correspondence relationship includes:
receiving the first signal corresponding to the TCI information and the at least one correspondence relationship in at least one of the following ways:
according to the first TCI information and at least one correspondence relationship, transmitting the first signal in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

In FIG. 5, a bus architecture may include any number of interconnected bus and bridge. Specifically, various circuits of one or more processors, which are represented by the processor 500, and one or more memories, which are represented by the memory 510, are linked together. The bus architecture may link various other circuits, such as a peripheral device, voltage regulator and a power management circuit together. These features are well known in this field; therefore, this disclosure does not make further description on these features. The bus interface provides an interface. The transceiver 520 may be multiple elements, including a transmitter and a receiver and provide units, which communicate with other devices on the transmission medium. The transmission medium includes radio channels, wired channels, optical cables, etc. The processor 500 is responsible for managing the bus architecture and the normal processing. The memory 510 may be used to store data used by the processor 500 for performing operations.

The processor 500 may be a central processing unit (CPU), an application specific integrated circuit (ASIC), a field-programmable gate array (FPGA) or a complex programmable logic device (CPLD). The processor may also adopt multi-core architecture.

One embodiment of the present disclosure further provides a signal transmission device. As shown in FIG. 6, the device includes:
a first receiving unit 610 used to receive g a transmission configuration indication (TCI) information; where the first TCI information is used to indicate at least one first-TCI state;
a transmission unit 620 used to transmit a first signal according to the first TCI information and at least one correspondence relationship;
where the at least one correspondence relationship includes at least one of the following:
a first correspondence relationship between the first-TCI state and UE capabilities;
a second correspondence relationship between the first-TCI state and transmission-related information corresponding to the first signal.

Optionally, in the signal transmission device, when the TCI information indicates at least two first-TCI states, the transmitting the first signal according to the TCI information and at least one correspondence relationship includes:
in a same time unit, transmitting, by the transmission unit 620, the first signal according to the at least two first-TCI states and the at least one correspondence relationship.

Optionally, the signal transmission device further includes:
a first processing unit 630 used to determine the at least one correspondence relationship based on predefined information or one or more of the following information sent by the network device:
first indication information;
resource set indication information;
TCI state configuration information;
TCI codepoint configuration information;
network device configuration information.

Optionally, in the signal transmission device, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that the second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, in the signal transmission device, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

Optionally, in the signal transmission device, the first receiving unit 610 is further used to perform:
receiving first indication information;
where the first indication information is used to indicate at least one of the following information:
   at least one second-TCI state; where the at least one second-TCI state is a TCI state of the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and UE capability.

Optionally, in the signal transmission device, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

Optionally, in the signal transmission device, when the at least one correspondence relationship includes the second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; where the resource set is a resource set whose usage type corresponds to transmission mode of the first signal.

Optionally, in the signal transmission device, the first receiving unit 610 is further used to perform:
receiving resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the signal transmission device, when the resource set indication information indicates the third correspondence relationship, the third correspondence relationship includes:
the resource set corresponding to transmission of the first signal has a one-to-one correspondence with the second indication field in the scheduling signaling corresponding to the first signal.

Optionally, in the signal transmission device, when the resource set indication information indicates resource sets corresponding to transmission of the first signal among the M resource sets, the number of resource sets corresponding to the transmission of the first signal, indicated by the resource set indication information, is less than or equal to X;
where M is an integer greater than 1, X is less than M, and the value of X is determined based on one of the following information:
predefined information;
UE capabilities;
network device's indication information.

Optionally, in the signal transmission device, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, in the signal transmission device, the transmission-related information includes one or more of scheduling information, power control parameter, resource set, transmission occasion, transmission repetition, transmission layer, transport block (TB), antenna port, frequency-domain resource and code word.

Optionally, in the signal transmission device, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, in the signal transmission device, the first signal corresponds to multiple pieces of transmission-related information; the multiple pieces of transmission-related information are divided into multiple groups of transmission-related information. When the transmission-related information includes at least one of a transmission occasion, a transmission repetition, a transport block and a transmission layer, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the signal transmission device, the first signal corresponds to multiple pieces of transmission-related information, and the transmission-related information includes an antenna port. When the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups.

Optionally, in the signal transmission device, the first receiving unit 610 is further used to perform:
receiving port indication information sent by the network device, where the port indication information is used to indicate an antenna port corresponding to the first signal.

Optionally, in the signal transmission device, the first signal corresponds to multiple pieces of transmission-related information, and the transmission-related information includes a frequency-domain resource; when the first signal is mapped to multiple groups of frequency-domain resources, the second correspondence relationship includes:
each group of frequency-domain resources to which the first signal is mapped corresponds to one first-TCI state.

Optionally, in the signal transmission device, the first signal corresponds to multiple pieces of transmission-related information, and the transmission-related information includes code words. When the first signal includes multiple code words, the second correspondence relationship includes:
each code word of the first signal corresponds to one first-TCI state, respectively.

Optionally, in the signal transmission device, the second correspondence relationship further includes:
multiple groups of scheduling information corresponding to transmission of the first signal correspond to multiple code words of the first signal in a one-to-one manner.

Optionally, in the signal transmission device, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

Optionally, in the signal transmission device, the first signal corresponds to multiple pieces of transmission-related information; when the transmission-related information includes power control parameters, the second correspondence relationship includes:
each first-TCI state indicated by the first TCI information corresponds to a group of power control parameters.

Optionally, the signal transmission device further includes:
a second processing unit 640 used to determine a transmission power of the first signal on the corresponding first target transmission parameter according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

Optionally, in the signal transmission device, the at least one correspondence relationship further includes:
each TCI state indicated by the first TCI information is associated with a reference signal used to indicate spatial relationship.

The device further includes:
a third processing unit 650 used to determine spatial filter of the first signal on the corresponding second target transmission parameter, according to a reference signal corresponding to the TCI state associated with a second target transmission parameter of the first signal;
where the second target transmission parameter include transmission timing and/or frequency-domain resource.

Optionally, in the signal transmission device, when transmitting the first signal according to the TCI information and at least one correspondence relationship, the transmission unit 620 is used to perform:
transmitting the first signal according to the TCI information and the at least one correspondence relationship in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

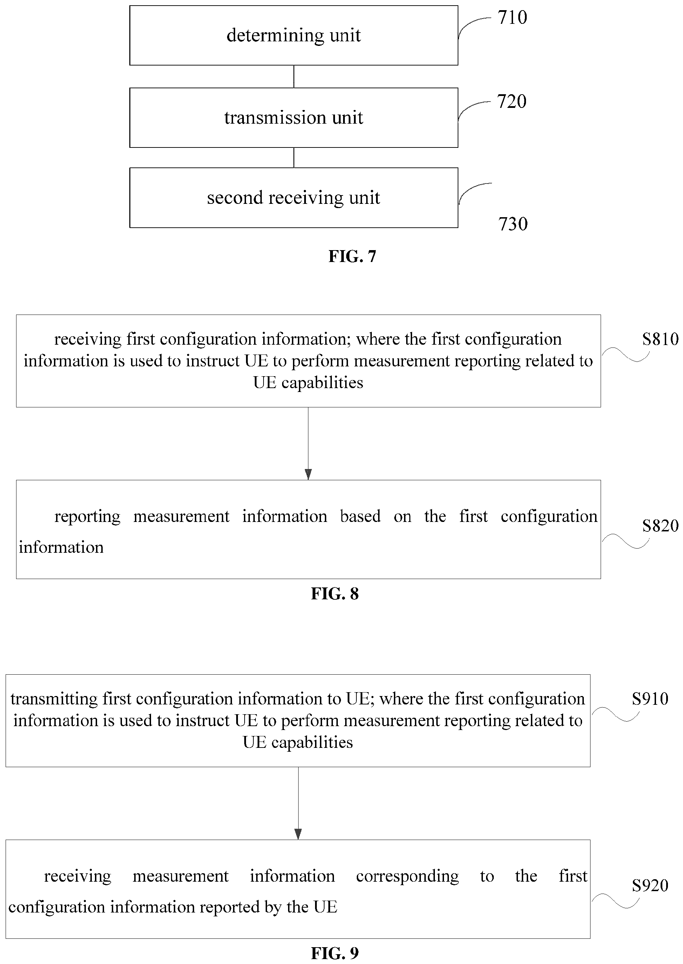

One embodiment of the present disclosure further provides a signal transmission device. As shown in FIG. 7, the device includes:
a determining unit 710 used to determine TCI information and at least one correspondence relationship;
a transmission unit 720 used to transmit first transmission configuration indication (TCI) information; where the first TCI information is used to indicate at least one first-TCI state;
a second receiving unit 730 used to receive a first signal corresponding to the first TCI information and at least one correspondence relationship; where the at least one correspondence relationship includes at least one of the following:
   a first correspondence relationship between the first-TCI state and UE capabilities;
   a second correspondence relationship between the first-TCI state and transmission-related information corresponding to the first signal.

Optionally, in the signal transmission device, when the TCI information indicates at least two first-TCI states, when receiving a first signal corresponding to the TCI information and the at least one correspondence relationship, the second receiving unit 730 is used to perform:
in a same time unit, receiving a first signal corresponding to the at least two first-TCI states and the at least one correspondence relationship.

Optionally, in the signal transmission device, the transmission unit 720 is further used to perform:
transmitting the at least one correspondence relationship to the UE through one or more of the following information:
first indication information;
resource set indication information;
TCI state configuration information;
TCI codepoint configuration information;
network device configuration information.

Optionally, in the signal transmission device, in case that the first condition is satisfied, the transmission-related information corresponding to the first signal includes first transmission-related information indicated by a first indication field; where the first indication field is a designated field in a second indication field; the first condition includes one or more of the following: the number of the at least one first-TCI state is one; the scheduling signaling corresponding to the first signal includes one second indication field;
and/or,
in case that a second condition is satisfied, the transmission-related information corresponding to the first signal includes first transmission-related information indicated by a second indication field; where the second condition includes one or more of the following: the number of at least one first-TCI states is N, N is an integer greater than 1; the scheduling signaling corresponding to the first signal includes N second indication fields, and N is an integer greater than 1;
where the first transmission-related information is one or more pieces of information in the transmission-related information; the second indication field is a field for indicating the first transmission-related information in the scheduling signaling corresponding to the first signal.

Optionally, in the signal transmission device, the second correspondence relationship includes at least one of the following:
the at least one first-TCI state corresponds to the transmission-related information in a one-to-one manner;
in case that the first condition is satisfied, the at least one first-TCI state corresponds to first transmission-related information indicated by a first indication field in a second indication field; where the second indication field is a field for indicating the first transmission-related information in the scheduling signaling corresponding to the first signal; the first indication field is a designated field in the second indication field; the first condition includes one or more of the following: the number of at least one first-TCI state is one; the scheduling signaling corresponding to the first signal includes one such second indication field;
in case that the second condition is satisfied, the at least one first-TCI state corresponds to the first transmission-related information in a one-to-one manner, or the at least one first-TCI state corresponds to the first transmission-related information indicated by the second indication field in a one-to-one manner; where the second indication field is a field for indicating the first transmission-related information in the scheduling signaling corresponding to the first signal; the second condition includes one or more of the following: the number of the at least one first-TCI state is N, and N is an integer greater than 1; the scheduling signaling corresponding to the first signal includes N second indication fields, and N is an integer greater than 1.

Optionally, in the signal transmission device, the transmission unit 720 is further used to perform:
transmitting first indication information;
where the first indication information is used to indicate at least one of the following information:
   at least one second-TCI state; where the at least one second-TCI state is a TCI state of the at least one first-TCI state;
   correspondence relationship between the at least one second-TCI state and transmission-related information;
   a field for indicating first transmission-related information in the scheduling signaling corresponding to the first signal;
   correspondence relationship between the at least one second-TCI state and the second indication field in the scheduling signaling corresponding to the first signal, where the second indication field is a field for indicating first transmission-related information in the scheduling signaling corresponding to the first signal;
   correspondence relationship between the at least one second-TCI state and UE capability.

Optionally, in the signal transmission device, the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
relationship between the at least one second-TCI state determined based on the first indication information and the transmission-related information corresponding to the first signal;
relationship between the at least one second-TCI state determined based on the first indication information and the second indication field;
relationship between the at least one second TCI state determined based on the first indication information and the first indication field in the second indication field;
in case that the first condition is satisfied, the at least one second-TCI state corresponds to the first transmission-related information indicated by the first indication field; the first condition includes one or more of the following: the number of at least one second-TCI state is one; the scheduling signaling corresponding to the first signal includes one such second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the second condition includes one or more of the following: the number of the at least one second-TCI state is N, and N is an integer greater than 1; the scheduling signaling corresponding to the first signal includes N second indication fields, where N is an integer greater than 1.

Optionally, in the signal transmission device, when the at least one correspondence relationship includes a second correspondence relationship and the transmission-related information includes resource sets, the second correspondence relationship includes:
M resource sets in the resource sets correspond to the at least one first-TCI state in a one-to-one manner; M is an integer greater than or equal to 1; where the resource set is a resource set whose usage type corresponds to transmission mode of the first signal.

Optionally, in the signal transmission device, the transmission unit 720 is further used to perform:
transmitting resource set indication information; where the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and the second indication field in the scheduling signaling corresponding to the first signal, where the second indication field is a field used to indicate transmission-related information;
fourth correspondence relationship between scheduling information corresponding to the first signal and one or more first-TCI states in the at least one first-TCI state;
fifth correspondence relationship between a resource set and a field corresponding to the scheduling information corresponding to transmission of the first signal in the scheduling signaling of the first signal.

Optionally, in the signal transmission device, when the resource set indication information indicates the third correspondence relationship, the third correspondence relationship includes:
the resource set corresponding to transmission of the first signal has a one-to-one correspondence with the second indication field in the scheduling signaling corresponding to the first signal.

Optionally, in the signal transmission device, when the resource set indication information indicates the resource set corresponding to transmission of the first signal in the M resource sets, the number of indicated resource sets corresponding to transmission of the first signal indicated by the resource set indication information, is less than or equal to X;
where M is an integer greater than 1, X is less than M, and the value of X is determined based on one of the following information:
predefined information;
UE capability;
network device's indication information.

Optionally, in the signal transmission device, when the resource set indication information indicates the resource set corresponding to transmission of the first signal in M resource sets, the transmission resource set corresponding to transmission of the first signal indicted by the resource set indication information has an association relationship with at least one of the following information:
at least one TCI state in the at least one first-TCI state;
UE capability;
antenna panel of UE.

Optionally, in the signal transmission device, the transmission-related information includes one or more of scheduling information, power control parameter, resource set, transmission occasion, transmission repetition, transmission layer, transport block (TB), antenna port, frequency-domain resource and code word.

Optionally, in the signal transmission device, the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

Optionally, in the signal transmission device, the first signal corresponds to multiple pieces of transmission-related information, and the multiple pieces of transmission-related information are divided into multiple groups of transmission-related information; when the transmission-related information is one of a transmission occasion, a transmission repetition, a transport block and a transmission layer, the second correspondence relationship includes at least one of the following:
each group of transmission-related information corresponding to the first signal corresponds to one of the first-TCI states;
each transmission-related information corresponding to the first signal corresponds to one of the first-TCI states.

Optionally, in the signal transmission device, the first signal corresponds to multiple pieces of transmission-related information; the transmission-related information includes an antenna port; and when the first signal corresponds to multiple antenna ports, the second correspondence relationship includes at least one of the following:
each group of antenna ports corresponding to the first signal corresponds to one of the first-TCI states, respectively;
each antenna port corresponding to the first signal corresponds to one first-TCI state, respectively;
in the multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal, and other scheduling information other than the first scheduling information corresponds to one antenna port CDM group in all antenna port CDM groups.

Optionally, in the signal transmission device, the transmission unit 720 is further used to perform:
transmitting port indication information, where the port indication information is used to indicate an antenna port corresponding to the first signal.

Optionally, in the signal transmission device, the first signal corresponds to multiple pieces of transmission-related information; the transmission-related information includes a frequency-domain resource, when the first signal is mapped to multiple groups of frequency-domain resources, the second correspondence relationship includes:
each group of frequency-domain resources to which the first signal is mapped corresponds to one first-TCI state.

Optionally, in the signal transmission device, the second correspondence relationship further includes:
multiple groups of scheduling information corresponding to transmission of the first signal correspond to multiple code words of the first signal in a one-to-one manner.

Optionally, in the signal transmission device, the at least one correspondence relationship further includes:
when the first signal corresponds to one or more first target transmission parameters, all first target transmission parameters of the first signal are associated with the same scheduling information;
where the first target transmission parameter includes at least one of a transmission occasion, a transmission repetition, a transport block, a frequency-domain resource, a transmission layer, an antenna port and a code word.

Optionally, in the signal transmission device, the first signal corresponds to multiple pieces of transmission-related information; when the transmission-related information includes power control parameters, the second correspondence relationship includes:
each first-TCI state indicated by the first TCI information corresponds to a group of power control parameters.

Optionally, in the signal transmission device, the determining unit 710 is further used to perform:
determining a transmission power of the first signal on the corresponding first target transmission parameter according to a power control parameter corresponding to the TCI state associated with the first target transmission parameter of the first signal;
where the first target transmission parameter includes at least one of a transmission occasion, a transmission repetition, a transport block, a frequency-domain resource, a transmission layer, an antenna port and a code word.

Optionally, in the signal transmission device, the at least one correspondence relationship further includes:
each TCI state indicated by the first TCI information is associated with a reference signal used to indicate spatial relationship.

The determining unit 710 is further used to perform:
determining spatial filter of the first signal on the corresponding second target transmission parameter, according to a reference signal corresponding to the TCI state associated with a second target transmission parameter of the first signal;
where the second target transmission parameter include transmission timing and/or frequency-domain resource.

Optionally, in the signal transmission device, the receiving the first signal corresponding to the TCI information and the at least one correspondence relationship includes:
receiving the first signal corresponding to the TCI information and the at least one correspondence relationship in at least one of the following ways:
according to the first TCI information and at least one correspondence relationship, transmitting the first signal in at least one of the following ways:
one DMRS antenna port of the first signal is associated with multiple first-TCI states;
different first-TCI states correspond to the same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

### Embodiment 2

In simultaneous transmission of multiple panels, in order to facilitate the network side to obtain uplink transmission related beam (TCI state or spatial relationship) information so as to provide an appropriate beam indication (i.e., determining the TCI indication information and/or the first indication information) for UE, beam measurement can be performed before the transmission starts. The beam measurement can be performed based on beam measurement of downlink channels.

One embodiment of the present disclosure further provides a signal transmission method. As shown in FIG. 8, the method includes:

S810: receiving first configuration information; where the first configuration information is used to instruct UE to perform measurement reporting related to UE capabilities;

S820: reporting measurement information based on the first configuration information.

Optionally, in the signal transmission method, the measurement information includes at least one piece of reference signal indication information; and the reporting the measurement information based on the first configuration information includes:
reporting P pieces of reference signal indication information based on the first configuration information; where the P pieces of reference signal indication information respectively correspond to different UE capabilities, and the P is an integer greater than 1.

Optionally, in the signal transmission method, the measurement information includes at least one group of reference signal indication information; and the reporting the measurement information based on the first configuration information includes:
reporting at least one group of reference signal indication information based on the first configuration information; where each group of reference signal indication information includes at least one piece of reference signal indication information, and different pieces of reference signal indication information in the same group corresponds to different UE capabilities.

Optionally, in the signal transmission method, the measurement information includes at least one piece of reference signal indication information; when CSI resource configuration of the UE includes multiple CSI-RS resource sets, the reporting the measurement information based on the first configuration information includes:
reporting at least one group of reference signal indication information based on the first configuration information; where different pieces of reference signal indication information in the same group corresponds to different UE capabilities, and different pieces of reference signal indication information in the same group corresponds to different CSI-RS resource sets.

Optionally, in the signal transmission method, the measurement information includes at least two pieces of reference signal indication information; and the reporting the measurement information based on the first configuration information includes:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

Optionally, in the signal transmission method, the measurement information includes at least two pieces of reference signal indication information; and the reporting the measurement information based on the first configuration information includes:
determining whether the measurement information includes UE capability corresponding to the reference signal indication information, based on the first configuration information;
reporting the measurement information according to a result of determining whether the measurement information includes UE capability corresponding to the reference signal indication information.

Optionally, in the signal transmission method, the reporting the measurement information according to a result of determining whether the UE capabilities corresponding to the at least two pieces of reference signal indication information are the same, includes:
indicating in the measurement information, whether the UE capabilities corresponding to the at least two pieces of reference signal indication information are the same.

Specifically, this can be accomplished by at least one of the following methods.

Method 1: the network side configures the UE to use a multi-panel related measurement reporting mechanism, for example, using RRC parameter groupBasedBeamReporting-18 or enhancedbeamreporting (which can also be other parameters, and are not limit to this) for configuration. After receiving high-level parameters, reference signals corresponding to at least one group of CRI and SSBRI reported by the UE can be received by UE at the same time. The first CRI or SSBRI in at least one group of CRI/SSBRI is associated with the first capability value index, and the second CRI or SSBRI is associated with the first capability value index. The first capability value index may be a capability value index corresponding to a smaller SRS port number. For example, the SRS port numbers corresponding to two capability value indexes are 2 and 4 respectively, then the first capability value may be the capability value index corresponding to the SRS port number of 2; the second capability value index may be the capability value index corresponding to a larger SRS port number.

In this case, the UE does not need to explicitly report correspondence relationship between the CRI/SSBRI and the capability value index, but only needs to perform reporting according to predefined rules. The reported group of CRI/SSBRI is associated with different capability value indexes, or corresponds to different capability value indexes (predefined rules).

In addition, the reported parameters configured by the network side do not need to include at least one of the following:
'cri-RSRP-Capability[Set]Index',
'ssb-Index-RSRP-Capability[Set]Index',
'cri-SINR-Capability[Set]Index' or
'ssb-Index-SINR-Capability[Set]Index'

In addition, the UE may also indicate in the measurement report that the first (or second) SRI/SSBRI in a group is associated with which capability value index. The capability value index corresponding to each CRI/SSBRI can also be carried when reporting.

### Method 1.1

In this method, in the group-based beam measurement reporting, the number of reported CRI/SSBRI groups can be one group, including 2 CRI/SSBRI, and corresponding L1-RSRP or L1-SINR. At this point, the two CRI/SSBRI are associated with different capability value indexes, indicating that the two measurement values are obtained via measuring by the UE using two different panels.

### Method 1.2

The number of reported CRI/SSBRI groups can also be greater than one group (such as N groups, N=1, 2, 3, 4, ... etc.), each group includes 2 CRI/SSBRI, and corresponding L1-RSRP or L1- SINR. At this point, the two CRI/SSBRIs in each group are associated with different capability value indexes, indicating that the two measurement values in one group are obtained via measuring by the UE using two different panels.

Optionally, the network side can also include 2 CSI resource sets in the configured CSI resource setting, corresponding to 2 different TRPs. Then a group of CRI/SSBRI reported by the UE can meet the following two conditions at the same time:
the two reported CRI/SSBRI are from two CSI resource sets respectively;
the two reported CRI/SSBRI are associated with different capability value indexes (that is, obtained via measuring with different capability value indexes).

### Method 1.3

Method 1.1 and Method 1.2 both involve UE reporting behavior when a certain high-level parameter (groupBasedBeamReporting-18 or enhancedbeamreporting) is configured. The network side can also jointly configure this high-level parameter and group-based beam measurement reporting in Rel-15 or Rel-17. For example, parameters enhancedbeamreporting and groupBasedBeamReporting-17 are jointly configured, indicating that the network side instructs the UE to perform multi-panel related measurement reporting based on group-based measurement reporting of Rel-15. The specific UE reporting method is the same as the method 1.1. For another example, the network side can also jointly configure parameters enhancedbeamreporting and groupBasedBeamReporting-17, indicating that the network side instructs the UE to perform multi-TRP and multi-panel related measurement reporting based on group-based measurement reporting of Rel-17. The specific UE reporting method is the same as the method 1.2.

Beneficial effects: through this method, the network side can obtain the measurement results of UE using different capability values (panel) for simultaneous measurement, and then can infer the optimal TCI state value or spatial relationship corresponding to uplink multi-panel simultaneous transmission based on the measurement results, which facilitates subsequent scheduling of UE to use appropriate TCI states or spatial relationships for uplink multi-panel simultaneous transmission.

Method 2: the network side configures UE to use the same capability value index for measurement reporting, or configures UE to use different capability value indexes for reporting.

When the network side configures the UE to perform group-based measurement reporting mechanism of Rel-15 or Rel-17 (such as configuring high-level parameter groupBasedBeamReporting-17 or groupBasedBeamReporting-17), the network side can also configure the UE to use the same capability value index for measurement reporting (such as parameter SameCapability[Set]Index), or configure the UE to use different capability value indexes for reporting (such as parameter DifferentCapability[Set]Index). That is, 2 CRI/SSBRI of one group is associated with the same ability value index, or associated with different ability value indexes. In this way, the network side can obtain the measurement results of the UE using the same panel or different panels through configuration, and then determines whether to subsequently instruct the UE to perform multi-panel simultaneous transmission.

The configuration may be a configuration for one measurement report, that is, each set of measurement values is associated with the same capability value index, or is associated with different capability value indexes. It can also be a configuration for each reporting group. For example, in the reported N group, the 2 CRI/SSBRI in the 1:N1 groups are associated with the same capability value index, and the 2 CRI/SSBRI in the N1+1:N2 groups are associated with different ability value indexes.

Method 3: when reporting, the UE reports that the CRI or SSBRI in this measurement report corresponds to the same capability value index or different capability value indexes.

Similar to Method 2, the UE reports whether the two CRI/SSBRI in each group of measurement results are associated with the same capability value index or with different capability value indexes. In addition, the UE can report whether the multiple groups of measurement values reported this time are associated with the same capability value index or with different capability value indexes; it can also report whether each group is associated with the same or different capability value indexes. For example, if a group of reported CRI/SSBRI is associated with the same capability value index, then '0' is reported; if a group of reported CRI/SSBRI is associated with different capability value indexes, then '1' is reported, and vice versa. Compared with reporting specific capability values, signaling overhead can be reduced.

In addition, the network side can also configure the UE to carry capability value index information when reporting, or configure the UE to use the same or different capability values for reporting; and then the UE determines that each group of measurement values corresponds to the same or different capability values, and then performs reporting.

Optionally, in Method 2 or Method 3, the network side can additionally configured the UE to perform capability value index-related reporting parameter, such as at least one of the following:
'cri-RSRP-Capability[Set]Index',
'ssb-Index-RSRP-Capability[Set]Index',
'cri-SINR-Capability[Set]Index' or
'ssb-Index-SINR-Capability[Set]Index'

That is, on the premise that the UE reports whether two CRI/SSBRIs in one group are associated with the same or different capability value indexes, the UE also reports a specific capability value index.

When the network side configures the UE or the UE determines to use the same capability value index for measurement reporting, it can also report only one capability value index for 2 CRI/SSBRI. Compared with Rel-17 in which each CRI/SSBRI carries its own capability value, reporting overhead can be reduced.

In this embodiment, optionally, the capability value index is a capability value index of the UE capability.

By using this implementation, after the network device receives the measurement report from the UE, the TCI information can be determined to ensure that the indicated at least one TCI state corresponds to different panels, thereby enabling the UE to perform multi-panel simultaneous transmission.

One embodiment of the present disclosure further provides a signal transmission method. As shown in FIG. 9, the method includes:
S910: transmitting first configuration information to UE; where the first configuration information is used to instruct UE to perform measurement reporting related to UE capabilities;
S920: receiving measurement information corresponding to the first configuration information reported by the UE.

Optionally, in the signal transmission method, the measurement information includes at least one piece of reference signal indication information; the method further includes:
when at least one piece of reference signal indication information included in the measurement information includes M pieces of at least one piece of reference signal indication information, the M pieces of reference signal indication information respectively correspond to different UE capabilities, and M is an integer greater than 1.

Optionally, in the signal transmission method, the measurement information includes at least one piece of reference signal indication information, and the method further includes:
when the measurement report is a group report, the measurement information includes at least one group of reference signal indication information; where each group of reference signal indication information includes at least one piece of reference signal indication information, and different pieces of reference signal indication information in the same group corresponds to different UE capabilities.

Optionally, in the signal transmission method, the measurement information includes at least one piece of reference signal indication information, and the method further includes:
when CSI resource configuration corresponding to reporting of the measurement information includes multiple CSI-RS resource sets and the measurement report is a group report, the measurement information includes at least one group of reference signal indication information; where different pieces of reference signal indication information in the same group corresponds to different UE capabilities, and different pieces of reference signal indication information in the same group corresponds to different CSI-RS resource sets.

Optionally, in the signal transmission method, the first configuration information includes a first configuration indication used to indicate whether the measurement information includes UE capability corresponding to the reference signal indication information.

Optionally, in the signal transmission method, the first configuration information includes a second configuration indication used to indicate that when the measurement information includes at least two pieces of reference signal indication information, whether UE capabilities corresponding to the at least two pieces of reference signal indication information are the same.

One embodiment of the present disclosure further provides a UE, including: a transceiver, a memory, a processor, and a program stored on the memory and executable on the processor. The processor is used to read the program in the memory to perform the following processes:
receiving first configuration information; where the first configuration information is used to instruct UE to perform measurement reporting related to UE capabilities;
reporting measurement information based on the first configuration information.

Optionally, in the UE, the measurement information includes at least one piece of reference signal indication information; and the reporting the measurement information based on the first configuration information includes:
reporting P pieces of reference signal indication information based on the first configuration information; where the P pieces of reference signal indication information respectively correspond to different UE capabilities, and the P is an integer greater than 1.

Optionally, in the UE, the measurement information includes at least one group of reference signal indication information; and the reporting the measurement information based on the first configuration information includes:
reporting at least one group of reference signal indication information based on the first configuration information; where each group of reference signal indication information includes at least one piece of reference signal indication information, and different pieces of reference signal indication information in the same group corresponds to different UE capabilities.

Optionally, in the UE, the measurement information includes at least one group of reference signal indication information; when CSI resource configuration corresponding to the reporting of the measurement information includes multiple CSI-RS resource sets, the reporting the measurement information based on the first configuration information includes:
reporting at least one group of reference signal indication information based on the first configuration information; where different pieces of reference signal indication information in the same group corresponds to different UE capabilities, and different pieces of reference signal indication information in the same group corresponds to different CSI-RS resource sets.

Optionally, in the UE, the measurement information includes at least two pieces of reference signal indication information; and the reporting the measurement information based on the first configuration information includes:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

Optionally, in the UE, the measurement information includes at least two pieces of reference signal indication information; and the reporting the measurement information based on the first configuration information includes:
determining whether the measurement information includes UE capability corresponding to the reference signal indication information, based on the first configuration information;
reporting the measurement information according to a result of determining whether the measurement information includes UE capability corresponding to the reference signal indication information.

Optionally, in the UE, the reporting the measurement information according to a result of determining whether the UE capabilities corresponding to the at least two pieces of reference signal indication information are the same, includes:
indicating in the measurement information, whether the UE capabilities corresponding to the at least two pieces of reference signal indication information are the same.

One embodiment of the present disclosure further provides a network device, including: a transceiver, a memory, a processor, and a program stored on the memory and executable on the processor. The processor is used to read the program in the memory to perform the following process:
transmitting first configuration information to UE; where the first configuration information is used to instruct UE to perform measurement reporting related to UE capabilities;
receiving measurement information corresponding to the first configuration information reported by the UE.

Optionally, in the network device, the measurement information includes at least one piece of reference signal indication information; the processor is further used to perform:
when at least one piece of reference signal indication information included in the measurement information includes M pieces of at least one piece of reference signal indication information, the M pieces of reference signal indication information respectively correspond to different UE capabilities, and M is an integer greater than 1.

Optionally, in the network device, the measurement information includes at least one piece of reference signal indication information; the processor is further used to perform:
when the measurement report is a group report, the measurement information includes at least one group of reference signal indication information; where each group of reference signal indication information includes at least one piece of reference signal indication information, and different pieces of reference signal indication information in the same group corresponds to different UE capabilities.

Optionally, in the network device, the measurement information includes at least one piece of reference signal indication information; the processor is further used to perform:
when CSI resource configuration corresponding to reporting of the measurement information includes multiple CSI-RS resource sets and the measurement report is a group report, the measurement information includes at least one group of reference signal indication information; where different pieces of reference signal indication information in the same group corresponds to different UE capabilities, and different pieces of reference signal indication information in the same group corresponds to different CSI-RS resource sets.

Optionally, in the network device, the first configuration information includes a first configuration indication used to indicate whether the measurement information includes UE capability corresponding to the reference signal indication information.

Optionally, in the network device, the first configuration information includes a second configuration indication used to indicate that when the measurement information includes at least two pieces of reference signal indication information, whether UE capabilities corresponding to the at least two pieces of reference signal indication information are the same.

One embodiment of the present disclosure further provides a signal transmission device including:
a first receiving unit used to receive first configuration information; where the first configuration information is used to instruct UE to perform measurement reporting related to UE capabilities;
a reporting unit used to report measurement information based on the first configuration information.

Optionally, in the signal transmission device, the measurement information includes at least one piece of reference signal indication information; and the reporting the measurement information based on the first configuration information includes:
reporting P pieces of reference signal indication information based on the first configuration information; where the P pieces of reference signal indication information respectively correspond to different UE capabilities, and the P is an integer greater than 1.

Optionally, in the signal transmission device, the measurement information includes at least one piece of reference signal indication information; and the reporting the measurement information based on the first configuration information includes:
dividing the at least one piece of reference signal indication information into multiple groups, and reporting at least one group of reference signal indication information based on the first configuration information; where each group of reference signal indication information includes at least one piece of reference signal indication information, and different pieces of reference signal indication information in the same group corresponds to different UE capabilities.

Optionally, in the signal transmission device, the measurement information includes at least one piece of reference signal indication information; when CSI resource configuration corresponding to reporting of the measurement information includes multiple CSI-RS resource sets, the reporting the measurement information based on the first configuration information includes:
dividing the at least one piece of reference signal indication information into multiple groups, and reporting at least one group of reference signal indication information based on the first configuration information; where different pieces of reference signal indication information in the same group corresponds to different UE capabilities, and different pieces of reference signal indication information in the same group corresponds to different CSI-RS resource sets.

Optionally, in the signal transmission device, the measurement information includes at least two pieces of reference signal indication information; and the reporting the measurement information based on the first configuration information includes:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

Optionally, in the signal transmission device, the measurement information includes at least two pieces of reference signal indication information; and the reporting the measurement information based on the first configuration information includes:
determining whether the measurement information includes UE capability corresponding to the reference signal indication information, based on the first configuration information;
reporting the measurement information according to a result of determining whether the measurement information includes UE capability corresponding to the reference signal indication information.

Optionally, in the signal transmission device, the reporting the measurement information according to a result of determining whether the UE capabilities corresponding to the at least two pieces of reference signal indication information are the same, includes:
indicating in the measurement information, whether the UE capabilities corresponding to the at least two pieces of reference signal indication information are the same.

One embodiment of the present disclosure further provides a signal transmission device, including:
a transmission unit used to transmit first configuration information to UE; where the first configuration information is used to instruct UE to perform measurement reporting related to UE capabilities;
a second receiving unit used to receive measurement information corresponding to the first configuration information reported by the UE.

Optionally, in the signal transmission device, the measurement information includes at least one piece of reference signal indication information;
when at least one piece of reference signal indication information included in the measurement information includes M pieces of at least one piece of reference signal indication information, the M pieces of reference signal indication information respectively correspond to different UE capabilities, and M is an integer greater than 1.

Optionally, in the signal transmission device, the measurement information includes at least one piece of reference signal indication information,
when the measurement report is a group report, the measurement information includes at least one group of reference signal indication information; where each group of reference signal indication information includes at least one piece of reference signal indication information, and different pieces of reference signal indication information in the same group corresponds to different UE capabilities.

Optionally, in the signal transmission device, the measurement information includes at least one piece of reference signal indication information;
when CSI resource configuration corresponding to reporting of the measurement information includes multiple CSI-RS resource sets and the measurement report is a group report, the measurement information includes at least one group of reference signal indication information; where different pieces of reference signal indication information in the same group corresponds to different UE capabilities, and different pieces of reference signal indication information in the same group corresponds to different CSI-RS resource sets.

Optionally, in the signal transmission device, the first configuration information includes a first configuration indication used to indicate whether the measurement information includes UE capability corresponding to the reference signal indication information.

Optionally, in the signal transmission device, the first configuration information includes a second configuration indication used to indicate that when the measurement information includes at least two pieces of reference signal indication information, whether UE capabilities corresponding to the at least two pieces of reference signal indication information are the same.

One embodiment of the present disclosure further provides a processor-readable storage medium, where the processor-readable storage medium stores a computer program thereon. The computer program is used to cause the processor to perform any one of the above signal transmission methods.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A signal transmission method, comprising:
receiving transmission configuration indication (TCI) information; wherein the TCI information is used to indicate at least one first-TCI state;
transmitting a first signal according to the first TCI information and at least one correspondence relationship;
wherein the at least one correspondence relationship includes at least one of the following:
a first correspondence relationship between the first-TCI state and user equipment (UE) capabilities;
a second correspondence relationship between the first-TCI state and transmission-related information corresponding to the first signal.

2. The method according to claim 1, wherein when the TCI information indicates at least two first-TCI states, the transmitting the first signal according to the TCI information and the at least one correspondence relationship, includes:
in a same time unit, transmitting the first signal according to the at least two first-TCI states and the at least one correspondence relationship.

3. The method according to claim 1 or 2, wherein the method further includes:
determining the at least one correspondence relationship based on predefined information or one or more of following information sent by the network device:
first indication information;
resource set indication information;
TCI state configuration information;
TCI codepoint configuration information;
network device configuration information.

4. The method according to any one of claims 1 to 3, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

5. The method according to any one of claims 1 to 4, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information, in a scheduling signaling corresponding to the first signal; the first indication field is a designated field in the second indication field; the first condition includes one or more of the following: the at least one first-TCI state includes one first-TCI state, the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information, in a scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

6. The method according to any one of claims 1 to 5, wherein the method further includes:
receiving first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information, in a scheduling signaling corresponding to the first signal;
correspondence relationship between the at least one second-TCI state and a second indication field in a scheduling signaling corresponding to the first signal; wherein the second indication field is a field for indicating first transmission-related information, in the scheduling signaling corresponding to the first signal;
correspondence relationship between the at least one second-TCI state and UE capabilities.

7. The method according to claim 6, wherein the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state, the scheduling signaling corresponding to the first signal includes one second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

8. The method according to any one of claims 1 to 7, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; wherein the resource set is a resource set whose usage type corresponds to transmission mode of the first signal.

9. The method according to claim 8, wherein the method further includes:
receiving resource set indication information; wherein the resource set indication information is used to indicate at least one of following information:
a resource set corresponding to transmission of the first signal, in the M resource sets;
a field for indicating scheduling information corresponding to transmission of the first signal, in the scheduling signaling corresponding to the first signal;
third correspondence relationship between a resource set corresponding to transmission of the first signal and a second indication field in the scheduling signaling corresponding to the first signal; wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal, in the scheduling signaling of the first signal.

10. The method according to claim 9, wherein the third correspondence relationship includes:
the resource set corresponding to transmission of the first signal corresponds to the second indication field in the scheduling signaling corresponding to the first signal in a one-to-one manner.

11. The method according to claim 9, wherein the number of resource sets corresponding to transmission of the first signal, indicated by the resource set indication information, is less than or equal to X;
wherein M is an integer greater than 1, X is less than M, and a value of X is determined based on one of the following information:
predefined information;
UE capabilities;
network device's indication information.

12. The method according to claim 9, wherein the transmission resource set corresponding to transmission of the first signal indicted by the resource set indication information has an association relationship with at least one of following information:
one or more TCI states in the at least one first-TCI state;
UE capabilities;
antenna panel of UE.

13. The method according to any one of claims 1 to 12, wherein the transmission-related information includes one or more of scheduling information, power control parameter, resource set, transmission occasion, transmission repetition, transmission layer, transport block (TB), antenna port, frequency-domain resource and code-word.

14. The method according to claim 13, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

15. The method according to any one of claims 1 to 7, wherein the first signal corresponds to multiple pieces of transmission-related information; the transmission-related information includes at least one of a transmission occasion, a transmission repetition, a transport block and a transmission layer; the second correspondence relationship includes at least one of the following:
the multiple pieces of transmission-related information include multiple groups of transmission-related information; each group of transmission-related information corresponding to the first signal corresponds to one of the first-TCI states, respectively;
each transmission-related information corresponding to the first signal corresponds to one of the first-TCI states, respectively.

16. The method according to any one of claims 1 to 7, wherein the first signal corresponds to multiple pieces of transmission-related information, and the transmission-related information includes an antenna port; the first signal corresponds to multiple antenna ports, the second correspondence relationship includes at least one of the following:
the multiple antenna ports are divided into multiple group of antenna ports; each group of antenna ports corresponding to the first signal corresponds to one of the first-TCI states, respectively;
each antenna port corresponding to the first signal corresponds to one of the first-TCI states, respectively;
in multiple antenna port code division multiplexing (CDM) groups corresponding to the first signal, each CDM group corresponds to one of the first-TCI states, respectively;
multiple antenna port CDM groups corresponding to the first signal correspond to multiple groups of scheduling information corresponding to transmission of the first signal in a one-to-one manner;
in multiple groups of scheduling information corresponding to transmission of the first signal, first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

17. The method according to claim 16, wherein the method further includes:
receiving port indication information sent by a network device, wherein the port indication information is used to indicate an antenna port corresponding to the first signal.

18. The method according to any one of claims 1 to 7, wherein the first signal corresponds to multiple pieces of transmission-related information, and the transmission-related information includes a frequency-domain resource; the first signal is mapped to multiple groups of frequency-domain resources, the second correspondence relationship includes:
each group of frequency-domain resources to which the first signal is mapped corresponds to one of first-TCI states, respectively.

19. The method according to any one of claims 1 to 7, wherein the first signal corresponds to multiple pieces of transmission-related information, and the transmission-related information includes code words; the first signal includes multiple code words, the second correspondence relationship includes:
each code word of the first signal corresponds to one of the first-TCI states, respectively.

20. The method according to claim 19, wherein the second correspondence relationship further includes:
multiple groups of scheduling information corresponding to transmission of the first signal correspond to multiple code words of the first signal in a one-to-one manner.

21. The method according to any one of claims 1 to 20, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

22. The method according to any one of claims 1 to 7, wherein the first signal corresponds to multiple pieces of transmission-related information; the transmission-related information includes power control parameters, the second correspondence relationship includes:
each first-TCI state indicated by the first TCI information corresponds to a group of power control parameters, respectively.

23. The method according to claim 22, wherein the method further includes:
determining a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

24. The method according to any one of claims 1 to 23, wherein the at least one correspondence relationship further includes:
each TCI state indicated by the TCI information is associated with a reference signal used to indicate spatial relationship, respectively;
wherein the method further includes:
determining spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

25. The method according to any one of claims 1 to 24, wherein the transmitting the first signal according to the TCI information and the at least one correspondence relationship, includes:
transmitting the first signal according to the TCI information and the at least one correspondence relationship, in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

26. A signal transmission method, comprising:
determining transmission configuration indication (TCI) information and at least one correspondence relationship;
transmitting first TCI information; wherein the first TCI information is used to indicate at least one first-TCI state;
receiving a first signal corresponding to the first TCI information and the at least one correspondence relationship; wherein the at least one correspondence relationship includes at least one of the following:
a first correspondence relationship between the first-TCI state and UE capabilities;
a second correspondence relationship between the first-TCI state and transmission-related information corresponding to the first signal.

27. The method according to claim 26, wherein when the TCI information indicates at least two first-TCI states; the receiving a first signal corresponding to the TCI information and the at least one correspondence relationship, include:
in a same time unit, receiving the first signal corresponding to the at least two first-TCI states and the at least one correspondence relationship.

28. The method according to claim 26 or 27, wherein the method further includes:
transmitting the at least one correspondence relationship to UE through one or more of the following information:
first indication information;
resource set indication information;
TCI state configuration information;
TCI codepoint configuration information;
network device configuration information.

29. The method according to any one of claims 26 to 28, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

30. The method according to any one of claims 26 to 29, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information in a scheduling signaling corresponding to the first signal; the first indication field is a designated field in the second indication field; the first condition includes one or more of the following: the at least one first-TCI state includes one first-TCI state; the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information in the scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

31. The method according to any one of claims 26 to 30, wherein the method further includes:
transmitting first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information in the scheduling signaling corresponding to the first signal;
correspondence relationship between the at least one second-TCI state and the second indication field in the scheduling signaling corresponding to the first signal, wherein the second indication field is a field for indicating first transmission-related information in the scheduling signaling corresponding to the first signal;
correspondence relationship between the at least one second-TCI state and UE capabilities.

32. The method according to claim 31, wherein the second correspondence relationship includes at least one of the following:
the at least one second-TCI state corresponds, in a one-to-one manner, to first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second TCI state and the first indication field in the second indication field;
correspondence relationship between the at least one second-TCI state and the second indication field;
in case that a first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state; the scheduling signaling corresponding to the first signal includes one second indication field;
in case that a second condition is satisfied, the at least one second-TCI state corresponds to first transmission-related information in a one-to-one manner, or the at least one second-TCI state corresponds to first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

33. The method according to any one of claims 26 to 32, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1;
wherein the resource set is a resource set whose usage type corresponds to transmission mode of the first signal.

34. The method according to claim 33, wherein the method further includes:
transmitting resource set indication information; wherein the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and a second indication field in the scheduling signaling corresponding to the first signal, wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal in the scheduling signaling of the first signal.

35. The method according to claim 34, wherein the third correspondence relationship includes:
the resource set corresponding to transmission of the first signal corresponds to the second indication field in the scheduling signaling corresponding to the first signal in a one-to-one manner.

36. The method according to claim 34, wherein the number of resource sets corresponding to transmission of the first signal indicated by the resource set indication information, is less than or equal to X;
wherein M is an integer greater than 1, X is less than M, and the value of X is determined based on one of the following information:
predefined information;
UE capabilities;
network device's indication information.

37. The method according to claim 34, wherein the transmission resource set corresponding to transmission of the first signal indicted by the resource set indication information has an association relationship with at least one of the following information:
at least one TCI state in the at least one first-TCI state;
UE capability;
antenna panel of UE.

38. The method according to any one of claims 26 to 37, wherein the transmission-related information includes one or more of scheduling information, power control parameter, resource set, transmission occasion, transmission repetition, transmission layer, transport block (TB), antenna port, frequency-domain resource and code word.

39. The method according to claim 38, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

40. The method according to any one of claims 26 to 32, wherein the first signal corresponds to multiple pieces of transmission-related information, and the transmission-related information is one of a transmission occasion, a transmission repetition, a transport block and a transmission layer, the second correspondence relationship includes at least one of the following:
the multiple pieces of transmission-related information are divided into multiple groups of transmission-related information; each group of transmission-related information corresponding to the first signal corresponds to one of the first-TCI states, respectively;
each transmission-related information corresponding to the first signal corresponds to one of the first-TCI states, respectively.

41. The method according to any one of claims 26 to 32, wherein the first signal corresponds to multiple pieces of transmission-related information; the transmission-related information includes an antenna port; and the first signal corresponds to multiple antenna ports, the second correspondence relationship includes at least one of the following:
the multiple antenna ports are divided into multiple groups of antenna ports; each group of antenna ports corresponding to the first signal corresponds to one of the first-TCI states, respectively;
each antenna port corresponding to the first signal corresponds to one first-TCI state, respectively;
in multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

42. The method according to claim 41, wherein the method further includes:
transmitting port indication information, where the port indication information is used to indicate an antenna port corresponding to the first signal.

43. The method according to any one of claims 26 to 32, wherein the first signal corresponds to multiple pieces of transmission-related information; the transmission-related information includes a frequency-domain resource, the first signal is mapped to multiple groups of frequency-domain resources, the second correspondence relationship includes:
each group of frequency-domain resources to which the first signal is mapped corresponds to one of the first-TCI states, respectively.

44. The method according to any one of claims 26 to 32, wherein the first signal corresponds to multiple pieces of transmission-related information; the transmission-related information includes code words; the first signal includes multiple code words, the second correspondence relationship includes:
each code word of the first signal corresponds to one first-TCI state, respectively.

45. The method according to claim 44, wherein the second correspondence relationship further includes:
multiple groups of scheduling information corresponding to transmission of the first signal correspond to multiple code words of the first signal in a one-to-one manner.

46. The method according to any one of claims 26 to 45, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

47. The method according to any one of claims 26 to 32, wherein the first signal corresponds to multiple pieces of transmission-related information; the transmission-related information includes power control parameters, the second correspondence relationship includes:
each first-TCI state indicated by the first TCI information corresponds to a group of power control parameters, respectively.

48. The method according to claim 47, wherein the method further includes:
determining a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

49. The method according to any one of claims 26 to 48, wherein the at least one correspondence relationship further includes:
each TCI state indicated by the first TCI information is associated with a reference signal used to indicate spatial relationship, respectively;
wherein the method further includes:
determining spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

50. The method according to any one of claims 26 to 49, wherein the receiving the first signal corresponding to the TCI information and the at least one correspondence relationship, includes:
receiving the first signal corresponding to the TCI information and the at least one correspondence relationship in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

51. A signal transmission method, comprising:
receiving first configuration information; wherein the first configuration information is used to instruct UE to perform measurement reporting related to UE capabilities;
reporting measurement information based on the first configuration information.

52. The method according to claim 51, wherein the measurement information includes at least one piece of reference signal indication information; and the reporting the measurement information based on the first configuration information, includes:
reporting P pieces of reference signal indication information based on the first configuration information; wherein the P pieces of reference signal indication information respectively correspond to different UE capabilities, and the P is an integer greater than 1.

53. The method according to claim 51, wherein the measurement information includes at least one group of reference signal indication information; and the reporting the measurement information based on the first configuration information, includes:
reporting at least one group of reference signal indication information based on the first configuration information; wherein each group of reference signal indication information includes at least one piece of reference signal indication information, and different pieces of reference signal indication information in the same group corresponds to different UE capabilities.

54. The method according to claim 51, wherein the measurement information includes at least one piece of reference signal indication information; when CSI resource configuration corresponding to reporting of the measurement information includes multiple CSI-RS resource sets, the reporting the measurement information based on the first configuration information includes:
reporting at least one group of reference signal indication information based on the first configuration information; wherein different pieces of reference signal indication information in the same group corresponds to different UE capabilities, and different pieces of reference signal indication information in the same group corresponds to different CSI-RS resource sets.

55. The method according to claim 51, wherein the measurement information includes at least two pieces of reference signal indication information; and the reporting the measurement information based on the first configuration information, includes:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

56. The method according to claim 51, wherein the measurement information includes at least two pieces of reference signal indication information; and the reporting the measurement information based on the first configuration information, includes:
determining whether the measurement information includes UE capability corresponding to the reference signal indication information, based on the first configuration information;
reporting the measurement information according to a result of determining whether the measurement information includes UE capability corresponding to the reference signal indication information.

57. The method according to claim 56, wherein the reporting the measurement information according to a result of determining whether the UE capabilities corresponding to the at least two pieces of reference signal indication information are the same, includes:
indicating in the measurement information, whether the UE capabilities corresponding to the at least two pieces of reference signal indication information are the same.

58. A signal transmission method, comprising:
transmitting first configuration information to UE; wherein the first configuration information is used to instruct the UE to perform measurement reporting related to UE capabilities;
receiving measurement information corresponding to the first configuration information reported by the UE.

59. The method according to claim 58, wherein the measurement information includes at least one piece of reference signal indication information; the method further includes:
when at least one piece of reference signal indication information included in the measurement information includes M pieces of at least one piece of reference signal indication information, the M pieces of reference signal indication information respectively correspond to different UE capabilities, and M is an integer greater than 1.

60. The method according to claim 58, wherein the measurement information includes at least one piece of reference signal indication information, and the method further includes:
when the measurement report is a group report, the measurement information includes at least one group of reference signal indication information; wherein each group of reference signal indication information includes at least one piece of reference signal indication information, and different pieces of reference signal indication information in the same group corresponds to different UE capabilities.

61. The method according to claim 58, wherein the measurement information includes at least one piece of reference signal indication information, and the method further includes:
when CSI resource configuration corresponding to reporting of the measurement information includes multiple CSI-RS resource sets and the measurement report is a group report, the measurement information includes at least one group of reference signal indication information; wherein different pieces of reference signal indication information in the same group corresponds to different UE capabilities, and different pieces of reference signal indication information in the same group corresponds to different CSI-RS resource sets.

62. The method according to claim 58, wherein the first configuration information includes a first configuration indication used to indicate whether the measurement information includes UE capability corresponding to the reference signal indication information.

63. The method according to claim 58, wherein the first configuration information includes a second configuration indication used to indicate that when the measurement information includes at least two pieces of reference signal indication information, whether UE capabilities corresponding to the at least two pieces of reference signal indication information are the same.

64. A user equipment (UE), comprising: a transceiver, a memory, a processor and a computer program stored on the memory and executable on the processor; wherein the processor is used to read the computer program in the memory and perform the following operations:
receiving transmission configuration indication (TCI) information; wherein the TCI information is used to indicate at least one first-TCI state;
transmitting a first signal according to the first TCI information and at least one correspondence relationship;
wherein the at least one correspondence relationship includes at least one of the following:
a first correspondence relationship between the first-TCI state and UE capabilities;
a second correspondence relationship between the first-TCI state and transmission-related information corresponding to the first signal.

65. The UE according to claim 64, wherein when the TCI information indicates at least two first-TCI states, the transmitting the first signal according to the TCI information and the at least one correspondence relationship, includes:
in a same time unit, transmitting the first signal according to the at least two first-TCI states and the at least one correspondence relationship.

66. The UE according to claim 64 or 65, wherein the processor is used to read the computer program in the memory and perform the following operations:
determining the at least one correspondence relationship based on predefined information or one or more of following information sent by the network device:
first indication information;
resource set indication information;
TCI state configuration information;
TCI codepoint configuration information;
network device configuration information.

67. The UE according to any one of claims 64 to 66, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

68. The UE according to any one of claims 64 to 67, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information, in a scheduling signaling corresponding to the first signal; the first indication field is a designated field in the second indication field; the first condition includes one or more of the following: the at least one first-TCI state includes one first-TCI state, the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information, in a scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

69. The UE according to any one of claims 64 to 68, wherein the processor is used to read the computer program in the memory and perform the following operations:
receiving first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information, in a scheduling signaling corresponding to the first signal;
correspondence relationship between the at least one second-TCI state and a second indication field in a scheduling signaling corresponding to the first signal;
wherein the second indication field is a field for indicating first transmission-related information, in the scheduling signaling corresponding to the first signal;
correspondence relationship between the at least one second-TCI state and UE capabilities.

70. The UE according to claim 69, wherein the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state, the scheduling signaling corresponding to the first signal includes one second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

71. The UE according to any one of claims 64 to 70, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; wherein the resource set is a resource set whose usage type corresponds to transmission mode of the first signal.

72. The UE according to claim 71, wherein the processor is used to read the computer program in the memory and perform the following operations:
receiving resource set indication information; wherein the resource set indication information is used to indicate at least one of following information:
a resource set corresponding to transmission of the first signal, in the M resource sets;
a field for indicating scheduling information corresponding to transmission of the first signal, in the scheduling signaling corresponding to the first signal;
third correspondence relationship between a resource set corresponding to transmission of the first signal and a second indication field in the scheduling signaling corresponding to the first signal; wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal, in the scheduling signaling of the first signal.

73. The UE according to claim 72, wherein the third correspondence relationship includes:
the resource set corresponding to transmission of the first signal corresponds to the second indication field in the scheduling signaling corresponding to the first signal in a one-to-one manner.

74. The UE according to claim 72, wherein the number of resource sets corresponding to transmission of the first signal, indicated by the resource set indication information, is less than or equal to X;
wherein M is an integer greater than 1, X is less than M, and a value of X is determined based on one of the following information:
predefined information;
UE capabilities;
network device's indication information.

75. The UE according to claim 72, wherein the transmission resource set corresponding to transmission of the first signal indicted by the resource set indication information has an association relationship with at least one of following information:
one or more TCI states in the at least one first-TCI state;
UE capabilities;
antenna panel of UE.

76. The UE according to any one of claims 64 to 75, wherein the transmission-related information includes one or more of scheduling information, power control parameter, resource set, transmission occasion, transmission repetition, transmission layer, transport block (TB), antenna port, frequency-domain resource and code word.

77. The UE according to claim 76, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

78. The UE according to any one of claims 64 to 70, wherein the first signal corresponds to multiple pieces of transmission-related information; the transmission-related information includes at least one of a transmission occasion, a transmission repetition, a transport block and a transmission layer; the second correspondence relationship includes at least one of the following:
the multiple pieces of transmission-related information include multiple groups of transmission-related information; each group of transmission-related information corresponding to the first signal corresponds to one of the first-TCI states, respectively;
each transmission-related information corresponding to the first signal corresponds to one of the first-TCI states, respectively.

79. The UE according to any one of claims 64 to 70, wherein the first signal corresponds to multiple pieces of transmission-related information, and the transmission-related information includes an antenna port; the first signal corresponds to multiple antenna ports, the second correspondence relationship includes at least one of the following:
the multiple antenna ports are divided into multiple group of antenna ports; each group of antenna ports corresponding to the first signal corresponds to one of the first-TCI states, respectively;
each antenna port corresponding to the first signal corresponds to one of the first-TCI states, respectively;
in multiple antenna port CDM groups corresponding to the first signal, each CDM group corresponds to one of the first-TCI states, respectively;
multiple antenna port CDM groups corresponding to the first signal correspond to multiple groups of scheduling information corresponding to transmission of the first signal in a one-to-one manner;
in multiple groups of scheduling information corresponding to transmission of the first signal, first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

80. The UE according to claim 79, wherein the processor is used to read the computer program in the memory and perform the following operations:
receiving port indication information sent by a network device, wherein the port indication information is used to indicate an antenna port corresponding to the first signal.

81. The UE according to any one of claims 64 to 70, wherein the first signal corresponds to multiple pieces of transmission-related information, and the transmission-related information includes a frequency-domain resource; the first signal is mapped to multiple groups of frequency-domain resources, the second correspondence relationship includes:
each group of frequency-domain resources to which the first signal is mapped corresponds to one of first-TCI states, respectively.

82. The UE according to any one of claims 64 to 70, wherein the first signal corresponds to multiple pieces of transmission-related information, and the transmission-related information includes code words; the first signal includes multiple code words, the second correspondence relationship includes:
each code word of the first signal corresponds to one of the first-TCI states, respectively.

83. The UE according to claim 82, wherein the second correspondence relationship further includes:
multiple groups of scheduling information corresponding to transmission of the first signal correspond to multiple code words of the first signal in a one-to-one manner.

84. The UE according to any one of claims 64 to 83, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

85. The UE according to any one of claims 64 to 70, wherein the first signal corresponds to multiple pieces of transmission-related information; the transmission-related information includes power control parameters, the second correspondence relationship includes:
each first-TCI state indicated by the first TCI information corresponds to a group of power control parameters.

86. The UE according to claim 85, wherein the processor is used to read the computer program in the memory and perform the following operations:
determining a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

87. The UE according to any one of claims 64 to 86, wherein the at least one correspondence relationship further includes:
each TCI state indicated by the TCI information is associated with a reference signal used to indicate spatial relationship, respectively;
wherein the method further includes:
determining spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

88. The UE according to any one of claims 64 to 87, wherein the transmitting the first signal according to the TCI information and the at least one correspondence relationship, includes:
transmitting the first signal according to the TCI information and the at least one correspondence relationship, in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

89. A network device, comprising: a transceiver, a memory, a processor and a computer program stored on the memory and executable on the processor; wherein the processor is used to read the computer program in the memory and perform the following operations:
determining transmission configuration indication (TCI) information and at least one correspondence relationship;
transmitting first TCI information; wherein the first TCI information is used to indicate at least one first-TCI state;
receiving a first signal corresponding to the first TCI information and the at least one correspondence relationship; wherein the at least one correspondence relationship includes at least one of the following:
a first correspondence relationship between the first-TCI state and UE capabilities;
a second correspondence relationship between the first-TCI state and transmission-related information corresponding to the first signal.

90. The network device according to claim 89, wherein when the TCI information indicates at least two first-TCI states; the receiving a first signal corresponding to the TCI information and the at least one correspondence relationship, include:
in a same time unit, receiving the first signal corresponding to the at least two first-TCI states and the at least one correspondence relationship.

91. The network device according to claim 89 or 90, wherein the processor is used to read the computer program in the memory and perform the following operations:
transmitting the at least one correspondence relationship to UE through one or more of the following information:
first indication information;
resource set indication information;
TCI state configuration information;
TCI codepoint configuration information;
network device configuration information.

92. The network device according to any one of claims 89 to 91, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

93. The network device according to any one of claims 89 to 92, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information in a scheduling signaling corresponding to the first signal; the first indication field is a designated field in the second indication field; the first condition includes one or more of the following: the at least one first-TCI state includes one first-TCI state; the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information in the scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

94. The network device according to any one of claims 89 to 93, wherein the processor is used to read the computer program in the memory and perform the following operations:
transmitting first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information in the scheduling signaling corresponding to the first signal;
correspondence relationship between the at least one second-TCI state and the second indication field in the scheduling signaling corresponding to the first signal, wherein the second indication field is a field for indicating first transmission-related information in the scheduling signaling corresponding to the first signal;
correspondence relationship between the at least one second-TCI state and UE capabilities.

95. The network device according to claim 94, wherein the second correspondence relationship includes at least one of the following:
the at least one second-TCI state corresponds, in a one-to-one manner, to first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second TCI state and the first indication field in the second indication field;
correspondence relationship between the at least one second-TCI state and the second indication field;
in case that a first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state;
the scheduling signaling corresponding to the first signal includes one second indication field;
in case that a second condition is satisfied, the at least one second-TCI state corresponds to first transmission-related information in a one-to-one manner, or the at least one second-TCI state corresponds to first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

96. The network device according to any one of claims 89 to 95, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; wherein the resource set is a resource set whose usage type corresponds to transmission mode of the first signal.

97. The network device according to claim 96, wherein the processor is used to read the computer program in the memory and perform the following operations:
transmitting resource set indication information; wherein the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and a second indication field in the scheduling signaling corresponding to the first signal, wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal in the scheduling signaling of the first signal.

98. The network device according to claim 97, wherein the third correspondence relationship includes:
the resource set corresponding to transmission of the first signal corresponds to the second indication field in the scheduling signaling corresponding to the first signal in a one-to-one manner.

99. The network device according to claim 97, wherein the number of resource sets corresponding to transmission of the first signal indicated by the resource set indication information, is less than or equal to X;
wherein M is an integer greater than 1, X is less than M, and the value of X is determined based on one of the following information:
predefined information;
UE capabilities;
network device's indication information.

100. The network device according to claim 97, wherein the transmission resource set corresponding to transmission of the first signal indicted by the resource set indication information has an association relationship with at least one of the following information:
at least one TCI state in the at least one first-TCI state;
UE capability;
antenna panel of UE.

101. The network device according to any one of claims 89 to 100, wherein the transmission-related information includes one or more of scheduling information, power control parameter, resource set, transmission occasion, transmission repetition, transmission layer, transport block (TB), antenna port, frequency-domain resource and code word.

102. The network device according to claim 101, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

103. The network device according to any one of claims 89 to 95, wherein the first signal corresponds to multiple pieces of transmission-related information, and the transmission-related information is one of a transmission occasion, a transmission repetition, a transport block and a transmission layer, the second correspondence relationship includes at least one of the following:
the multiple pieces of transmission-related information are divided into multiple groups of transmission-related information; each group of transmission-related information corresponding to the first signal corresponds to one of the first-TCI states, respectively;
each transmission-related information corresponding to the first signal corresponds to one of the first-TCI states, respectively.

104. The network device according to any one of claims 89 to 95, wherein the first signal corresponds to multiple pieces of transmission-related information; the transmission-related information includes an antenna port; and the first signal corresponds to multiple antenna ports, the second correspondence relationship includes at least one of the following:
the multiple antenna ports are divided into multiple groups of antenna ports; each group of antenna ports corresponding to the first signal corresponds to one of the first-TCI states, respectively;
each antenna port corresponding to the first signal corresponds to one first-TCI state, respectively;
in multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

105. The network device according to claim 104, wherein the processor is used to read the computer program in the memory and perform the following operations:
transmitting port indication information, where the port indication information is used to indicate an antenna port corresponding to the first signal.

106. The network device according to any one of claims 89 to 95, wherein the first signal corresponds to multiple pieces of transmission-related information; the transmission-related information includes a frequency-domain resource, the first signal is mapped to multiple groups of frequency-domain resources, the second correspondence relationship includes:
each group of frequency-domain resources to which the first signal is mapped corresponds to one of the first-TCI states, respectively.

107. The network device according to any one of claims 89 to 95, wherein the first signal corresponds to multiple pieces of transmission-related information; the transmission-related information includes code words; the first signal includes multiple code words, the second correspondence relationship includes:
each code word of the first signal corresponds to one first-TCI state, respectively.

108. The network device according to claim 107, wherein the second correspondence relationship further includes:
multiple groups of scheduling information corresponding to transmission of the first signal correspond to multiple code words of the first signal in a one-to-one manner.

109. The network device according to any one of claims 89 to 108, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

110. The network device according to any one of claims 89 to 95, wherein the first signal corresponds to multiple pieces of transmission-related information; the transmission-related information includes power control parameters, the second correspondence relationship includes:
each first-TCI state indicated by the first TCI information corresponds to a group of power control parameters, respectively.

111. The network device according to claim 110, wherein the processor is used to read the computer program in the memory and perform the following operations:
determining a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

112. The network device according to any one of claims 89 to 111, wherein the at least one correspondence relationship further includes:
each TCI state indicated by the first TCI information is associated with a reference signal used to indicate spatial relationship, respectively;
wherein the method further includes:
determining spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

113. The network device according to any one of claims 89 to 112, wherein the receiving the first signal corresponding to the TCI information and the at least one correspondence relationship, includes:
receiving the first signal corresponding to the TCI information and the at least one correspondence relationship in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states

114. A signal transmission device, comprising:
a first receiving unit configured to receive transmission configuration indication (TCI) information; wherein the TCI information is used to indicate at least one first-TCI state;
a transmission unit configured to transmit a first signal according to the first TCI information and at least one correspondence relationship;
wherein the at least one correspondence relationship includes at least one of the following:
a first correspondence relationship between the first-TCI state and UE capabilities;
a second correspondence relationship between the first-TCI state and transmission-related information corresponding to the first signal.

115. The device according to claim 114, wherein when the TCI information indicates at least two first-TCI states, the transmission unit is configured to:
in a same time unit, transmit the first signal according to the at least two first-TCI states and the at least one correspondence relationship.

116. The device according to claim 114 or 115, wherein the device further includes:
a first processing unit configured to determine the at least one correspondence relationship based on predefined information or one or more of following information sent by the network device:
first indication information;
resource set indication information;
TCI state configuration information;
TCI codepoint configuration information;
network device configuration information.

117. The device according to any one of claims 114 to 117, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

118. The device according to any one of claims 114 to 117, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information, in a scheduling signaling corresponding to the first signal; the first indication field is a designated field in the second indication field; the first condition includes one or more of the following: the at least one first-TCI state includes one first-TCI state, the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information, in a scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

119. The device according to any one of claims 113 to 118, wherein the first receiving unit is further configured to:
receive first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information, in a scheduling signaling corresponding to the first signal;
correspondence relationship between the at least one second-TCI state and a second indication field in a scheduling signaling corresponding to the first signal; wherein the second indication field is a field for indicating first transmission-related information, in the scheduling signaling corresponding to the first signal;
correspondence relationship between the at least one second-TCI state and UE capabilities.

120. The device according to claim 119, wherein the second correspondence relationship includes at least one of the following:
the at least one second-TCI state corresponds, in a one-to-one manner, to the first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second-TCI state and the first indication field in the second indication field;
correspondence relationship between the at least one second-TCI state and the second indication field;
in case that the first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state, the scheduling signaling corresponding to the first signal includes one second indication field;
in case that the second condition is satisfied, the at least one second-TCI state corresponds to the first transmission-related information in a one-to-one manner, or the at least one second-TCI state corresponds to the first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

121. The device according to any one of claims 114 to 120, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; wherein the resource set is a resource set whose usage type corresponds to transmission mode of the first signal.

122. The device according to claim 121, wherein the first receiving unit is further configured to:
receive resource set indication information; wherein the resource set indication information is used to indicate at least one of following information:
a resource set corresponding to transmission of the first signal, in the M resource sets;
a field for indicating scheduling information corresponding to transmission of the first signal, in the scheduling signaling corresponding to the first signal;
third correspondence relationship between a resource set corresponding to transmission of the first signal and a second indication field in the scheduling signaling corresponding to the first signal; wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal, in the scheduling signaling of the first signal.

123. The device according to claim 121, wherein the third correspondence relationship includes:
the resource set corresponding to transmission of the first signal corresponds to the second indication field in the scheduling signaling corresponding to the first signal in a one-to-one manner.

124. The device according to claim 122, wherein the number of resource sets corresponding to transmission of the first signal, indicated by the resource set indication information, is less than or equal to X;
wherein M is an integer greater than 1, X is less than M, and a value of X is determined based on one of the following information:
predefined information;
UE capabilities;
network device's indication information.

125. The device according to claim 122, wherein the transmission resource set corresponding to transmission of the first signal indicted by the resource set indication information has an association relationship with at least one of following information:
one or more TCI states in the at least one first-TCI state;
UE capabilities;
antenna panel of UE.

126. The device according to any one of claims 114 to 125, wherein the transmission-related information includes one or more of scheduling information, power control parameter, resource set, transmission occasion, transmission repetition, transmission layer, transport block (TB), antenna port, frequency-domain resource and code word.

127. The device according to claim 126, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

128. The device according to any one of claims 114 to 120, wherein the first signal corresponds to multiple pieces of transmission-related information; the transmission-related information includes at least one of a transmission occasion, a transmission repetition, a transport block and a transmission layer; the second correspondence relationship includes at least one of the following:
the multiple pieces of transmission-related information include multiple groups of transmission-related information; each group of transmission-related information corresponding to the first signal corresponds to one of the first-TCI states, respectively;
each transmission-related information corresponding to the first signal corresponds to one of the first-TCI states, respectively.

129. The device according to any one of claims 114 to 120, wherein the first signal corresponds to multiple pieces of transmission-related information, and the transmission-related information includes an antenna port; the first signal corresponds to multiple antenna ports, the second correspondence relationship includes at least one of the following:
the multiple antenna ports are divided into multiple group of antenna ports; each group of antenna ports corresponding to the first signal corresponds to one of the first-TCI states, respectively;
each antenna port corresponding to the first signal corresponds to one of the first-TCI states, respectively;
in multiple antenna port CDM groups corresponding to the first signal, each CDM group corresponds to one of the first-TCI states, respectively;
multiple antenna port CDM groups corresponding to the first signal correspond to multiple groups of scheduling information corresponding to transmission of the first signal in a one-to-one manner;
in multiple groups of scheduling information corresponding to transmission of the first signal, first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

130. The device according to claim 129, wherein the first receiving unit is further configured to:
receive port indication information sent by a network device, wherein the port indication information is used to indicate an antenna port corresponding to the first signal.

131. The device according to any one of claims 114 to 120, wherein the first signal corresponds to multiple pieces of transmission-related information, and the transmission-related information includes a frequency-domain resource; the first signal is mapped to multiple groups of frequency-domain resources, the second correspondence relationship includes:
each group of frequency-domain resources to which the first signal is mapped corresponds to one of first-TCI states, respectively.

132. The device according to any one of claims 114 to 120, wherein the first signal corresponds to multiple pieces of transmission-related information, and the transmission-related information includes code words; the first signal includes multiple code words, the second correspondence relationship includes:
each code word of the first signal corresponds to one of the first-TCI states, respectively.

133. The device according to claim 122, wherein the second correspondence relationship further includes:
multiple groups of scheduling information corresponding to transmission of the first signal correspond to multiple code words of the first signal in a one-to-one manner.

134. The device according to any one of claims 114 to 133, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

135. The device according to any one of claims 114 to 133, wherein the first signal corresponds to multiple pieces of transmission-related information; the transmission-related information includes power control parameters, the second correspondence relationship includes:
each first-TCI state indicated by the first TCI information corresponds to a group of power control parameters.

136. The device according to claim 135, wherein the device further includes:
a second processing unit configured to determine a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

137. The device according to any one of claims 114 to 136, wherein the at least one correspondence relationship further includes:
each TCI state indicated by the TCI information is associated with a reference signal used to indicate spatial relationship, respectively;
wherein the device further includes:
a third processing unit configured to determine spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

138. The device according to any one of claims 114 to 137, wherein the transmitting the first signal according to the TCI information and the at least one correspondence relationship, includes:
transmitting the first signal according to the TCI information and the at least one correspondence relationship, in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

139. A signal transmission device, comprising:
a determining unit configured to determine transmission configuration indication (TCI) information and at least one correspondence relationship;
a transmission unit configured to transmit first TCI information; wherein the first TCI information is used to indicate at least one first-TCI state;
a second receiving unit configured to receive a first signal corresponding to the first TCI information and the at least one correspondence relationship; wherein the at least one correspondence relationship includes at least one of the following:
a first correspondence relationship between the first-TCI state and UE capabilities;
a second correspondence relationship between the first-TCI state and transmission-related information corresponding to the first signal.

140. The device according to claim 139, wherein when the TCI information indicates at least two first-TCI states; the receiving a first signal corresponding to the TCI information and the at least one correspondence relationship, include:
in a same time unit, receiving the first signal corresponding to the at least two first-TCI states and the at least one correspondence relationship.

141. The device according to claim 139 or 140, wherein the transmission unit is further configured to:
transmit the at least one correspondence relationship to UE through one or more of the following information:
first indication information;
resource set indication information;
TCI state configuration information;
TCI codepoint configuration information;
network device configuration information.

142. The device according to any one of claims 139 to 141, wherein
in case that a first condition is satisfied, the transmission-related information corresponding to the first signal includes first transmission-related information indicated by a first indication field; wherein the first indication field is a designated field in a second indication field; the first condition includes one or more of the following: the at least one first-TCI state includes one first-TCI state, scheduling signaling corresponding to the first signal includes one second indication field;
and/or,
in case that a second condition is satisfied, the transmission-related information corresponding to the first signal includes first transmission-related information indicated by a second indication field; wherein the second condition includes one or more of the following: the at least one first-TCI state includes N first-TCI states and N is an integer greater than 1, scheduling signaling corresponding to the first signal includes N second indication fields and N is an integer greater than 1;
wherein the first transmission-related information is one or more pieces of information in the transmission-related information; the second indication field is a field for indicating the first transmission-related information, in the scheduling signaling corresponding to the first signal.

143. The device according to any one of claims 139 to 142, wherein the second correspondence relationship includes at least one of the following:
the at least one first-TCI state corresponds to the transmission-related information in a one-to-one manner;
in case that a first condition is satisfied, the at least one first-TCI state corresponds to first transmission-related information indicated by a first indication field in a second indication field; wherein the second indication field is a field for indicating the first transmission-related information in a scheduling signaling corresponding to the first signal; the first indication field is a designated field in the second indication field; the first condition includes one or more of the following: the at least one first-TCI state includes one first-TCI state; the scheduling signaling corresponding to the first signal includes one second indication field;
in case that a second condition is satisfied, the at least one first-TCI state corresponds to first transmission-related information in a one-to-one manner, or the at least one first-TCI state corresponds to first transmission-related information indicated by a second indication field in a one-to-one manner; wherein the second indication field is a field for indicating the first transmission-related information in the scheduling signaling corresponding to the first signal; the second condition includes one or more of the following: the at least one first-TCI state includes N first-TCI states and N is an integer greater than 1, the scheduling signaling corresponding to the first signal includes N second indication fields and N is an integer greater than 1.

144. The device according to any one of claims 139 to 143, wherein the transmission unit is further configured to:
transmit first indication information;
wherein the first indication information is used to indicate at least one of the following information:
at least one second-TCI state; wherein the at least one second-TCI state includes part or all TCI states of the at least one first-TCI state;
correspondence relationship between the at least one second-TCI state and the transmission-related information;
a field for indicating first transmission-related information in the scheduling signaling corresponding to the first signal;
correspondence relationship between the at least one second-TCI state and the second indication field in the scheduling signaling corresponding to the first signal, wherein the second indication field is a field for indicating first transmission-related information in the scheduling signaling corresponding to the first signal;
correspondence relationship between the at least one second-TCI state and UE capabilities.

145. The device according to claim 144, wherein the second correspondence relationship includes at least one of the following:
the at least one second-TCI state corresponds, in a one-to-one manner, to first transmission-related information corresponding to the first signal, and the first transmission-related information is one or more pieces of information in the transmission-related information;
the at least one second-TCI state corresponds, in a one-to-one manner, the transmission-related information corresponding to the first signal;
correspondence relationship between the at least one second TCI state and the first indication field in the second indication field;
correspondence relationship between the at least one second-TCI state and the second indication field;
in case that a first condition is satisfied, the at least one second-TCI state corresponds to the first transmission-related information indicated by the first indication field; the first transmission-related information is one or more pieces of information in the transmission-related information; the first condition includes one or more of the following: the at least one second-TCI state includes one second-TCI state; the scheduling signaling corresponding to the first signal includes one second indication field;
in case that a second condition is satisfied, the at least one second-TCI state corresponds to first transmission-related information in a one-to-one manner, or the at least one second-TCI state corresponds to first transmission-related information indicated by the second indication field in a one-to-one manner; the first transmission-related information is one or more pieces of information in the transmission-related information; the second condition includes one or more of the following: the at least one second-TCI state includes N second-TCI states and N is an integer greater than 1, the scheduling signaling corresponding to the first signal includes N second indication fields and N is an integer greater than 1.

146. The device according to any one of claims 139 to 145, wherein the at least one correspondence relationship includes a second correspondence relationship and the transmission-related information includes at least one resource set, the second correspondence relationship includes:
M resource sets in the at least one resource set correspond to the at least one first-TCI state in a one-to-one manner; M is an integer greater than or equal to 1; wherein the resource set is a resource set whose usage type corresponds to transmission mode of the first signal.

147. The device according to claim 146, wherein the transmission unit is further configured to:
transmit resource set indication information; wherein the resource set indication information is used to indicate at least one of the following information:
a resource set corresponding to transmission of the first signal, in the M resource sets;
a field for indicating scheduling information corresponding to transmission of the first signal, in scheduling signaling corresponding to the first signal;
third correspondence relationship between a resource set corresponding to transmission of the first signal and a second indication field in the scheduling signaling corresponding to the first signal, wherein the second indication field is a field used to indicate the transmission-related information;
fourth correspondence relationship between scheduling information corresponding to the first signal and one or more first-TCI states in the at least one first-TCI state;
fifth correspondence relationship between a resource set and a field corresponding to scheduling information which is corresponding to transmission of the first signal in the scheduling signaling of the first signal.

148. The device according to claim 147, wherein the third correspondence relationship includes:
the resource set corresponding to transmission of the first signal corresponds to the second indication field in the scheduling signaling corresponding to the first signal in a one-to-one manner.

149. The device according to claim 147, wherein the number of resource sets corresponding to transmission of the first signal indicated by the resource set indication information, is less than or equal to X;
wherein M is an integer greater than 1, X is less than M, and the value of X is determined based on one of the following information:
predefined information;
UE capabilities;
network device's indication information.

150. The device according to claim 147, wherein the transmission resource set corresponding to transmission of the first signal indicted by the resource set indication information has an association relationship with at least one of the following information:
at least one TCI state in the at least one first-TCI state;
UE capability;
antenna panel of UE.

151. The device according to any one of claims 139 to 150, wherein the transmission-related information includes one or more of scheduling information, power control parameter, resource set, transmission occasion, transmission repetition, transmission layer, transport block (TB), antenna port, frequency-domain resource and code word.

152. The device according to claim 151, wherein the scheduling information includes at least one of the following:
precoding indication and/or layer number indication information;
resource set indication information;
modulation and coding scheme (MCS);
antenna port information;
time-domain resource allocation information;
frequency-domain resource allocation information;
redundancy version (RV) indication information.

153. The device according to any one of claims 139 to 145, wherein the first signal corresponds to multiple pieces of transmission-related information, and the transmission-related information is one of a transmission occasion, a transmission repetition, a transport block and a transmission layer, the second correspondence relationship includes at least one of the following:
the multiple pieces of transmission-related information are divided into multiple groups of transmission-related information; each group of transmission-related information corresponding to the first signal corresponds to one of the first-TCI states, respectively;
each transmission-related information corresponding to the first signal corresponds to one of the first-TCI states, respectively.

154. The device according to any one of claims 139 to 145, wherein the first signal corresponds to multiple pieces of transmission-related information; the transmission-related information includes an antenna port; and the first signal corresponds to multiple antenna ports, the second correspondence relationship includes at least one of the following:
the multiple antenna ports are divided into multiple groups of antenna ports; each group of antenna ports corresponding to the first signal corresponds to one of the first-TCI states, respectively;
each antenna port corresponding to the first signal corresponds to one first-TCI state, respectively;
in multiple antenna port CDM groups corresponding to the first signal, each CDM group corresponds to one of the first-TCI states;
multiple antenna port CDM groups corresponding to the first signal correspond to multiple groups of scheduling information corresponding to the transmission of the first signal in a one-to-one manner;
in multiple groups of scheduling information corresponding to transmission of the first signal, a first scheduling information corresponds to all antenna port CDM groups corresponding to the first signal; and other scheduling information other than the first scheduling information in the multiple groups of scheduling information, corresponds to one antenna port CDM group in all antenna port CDM groups, respectively.

155. The device according to claim 154, wherein the transmission unit is further configured to:
transmit port indication information, where the port indication information is used to indicate an antenna port corresponding to the first signal.

156. The device according to any one of claims 139 to 145, wherein the first signal corresponds to multiple pieces of transmission-related information; the transmission-related information includes a frequency-domain resource, the first signal is mapped to multiple groups of frequency-domain resources, the second correspondence relationship includes:
each group of frequency-domain resources to which the first signal is mapped corresponds to one of the first-TCI states, respectively.

157. The device according to any one of claims 139 to 145, wherein the first signal corresponds to multiple pieces of transmission-related information; the transmission-related information includes code words; the first signal includes multiple code words, the second correspondence relationship includes:
each code word of the first signal corresponds to one first-TCI state, respectively.

158. The device according to claim 157, wherein the second correspondence relationship further includes:
multiple groups of scheduling information corresponding to transmission of the first signal correspond to multiple code words of the first signal in a one-to-one manner.

159. The device according to any one of claims 139 to 158, wherein the at least one correspondence relationship further includes:
the first signal corresponds to one or more first target transmission parameters, all first target transmission parameters of the first signal are associated with same scheduling information;
wherein the first target transmission parameter includes at least one of a transmission occasion, a transmission repetition, a transport block, a frequency-domain resource, a transmission layer, an antenna port and a code word.

160. The device according to any one of claims 139 to 145, wherein the first signal corresponds to multiple pieces of transmission-related information; the transmission-related information includes power control parameters, the second correspondence relationship includes:
each first-TCI state indicated by the first TCI information corresponds to a group of power control parameters, respectively.

161. The device according to claim 160, wherein the determining unit is further configured to:
determine a transmission power of the first signal on a corresponding first target transmission parameter according to a power control parameter corresponding to the TCI state associated with the first target transmission parameter of the first signal;
wherein the first target transmission parameter includes at least one of a transmission occasion, a transmission repetition, a transport block, a frequency-domain resource, a transmission layer, an antenna port and a code word.

162. The device according to any one of claims 139 to 161, wherein the at least one correspondence relationship further includes:
each TCI state indicated by the first TCI information is associated with a reference signal used to indicate spatial relationship, respectively;
wherein the determining unit is further configured to:
determining spatial filter of the first signal on a corresponding second target transmission parameter, according to a reference signal corresponding to the TCI state associated with the second target transmission parameter of the first signal;
wherein the second target transmission parameter include transmission timing and/or frequency-domain resource.

163. The device according to any one of claims 139 to 162, wherein the receiving the first signal corresponding to the TCI information and the at least one correspondence relationship, includes:
receiving the first signal corresponding to the TCI information and the at least one correspondence relationship in at least one of the following ways:
one DMRS antenna port of the first signal is associated with multiple first-TCI states;
different first-TCI states correspond to same time-domain resources and different transmission layers of the first signal;
different first-TCI states correspond to different frequency-domain resources of the first signal;
different first-TCI states correspond to different scheduling information of the first signal;
at least one of different transmission occasions, transmission repetitions and transport blocks of the first signal respectively correspond to different first-TCI states.

164. A user equipment (UE), comprising: a transceiver, a memory, a processor and a computer program stored on the memory and executable on the processor; wherein the processor is used to read the computer program in the memory and perform the following operations:
receiving first configuration information; wherein the first configuration information is used to instruct UE to perform measurement reporting related to UE capabilities;
reporting measurement information based on the first configuration information.

165. The UE according to claim 164, wherein the measurement information includes at least one piece of reference signal indication information; and when reporting the measurement information based on the first configuration information, the processor is configured to perform:
reporting P pieces of reference signal indication information based on the first configuration information; wherein the P pieces of reference signal indication information respectively correspond to different UE capabilities, and the P is an integer greater than 1.

166. The UE according to claim 164, wherein the measurement information includes at least one group of reference signal indication information; and when reporting the measurement information based on the first configuration information, the processor is configured to perform:
reporting at least one group of reference signal indication information based on the first configuration information; wherein each group of reference signal indication information includes at least one piece of reference signal indication information, and different pieces of reference signal indication information in the same group corresponds to different UE capabilities.

167. The UE according to claim 164, wherein the measurement information includes at least one piece of reference signal indication information; when CSI resource configuration corresponding to reporting of the measurement information includes multiple CSI-RS resource sets, when reporting the measurement information based on the first configuration information, the processor is configured to perform:
reporting at least one group of reference signal indication information based on the first configuration information; wherein different pieces of reference signal indication information in the same group corresponds to different UE capabilities, and different pieces of reference signal indication information in the same group corresponds to different CSI-RS resource sets.

168. The UE according to claim 164, wherein the measurement information includes at least two pieces of reference signal indication information; and when reporting the measurement information based on the first configuration information, the processor is configured to perform:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

169. The UE according to claim 164, wherein the measurement information includes at least two pieces of reference signal indication information; and when reporting the measurement information based on the first configuration information, the processor is configured to perform:
determining whether the measurement information includes UE capability corresponding to the reference signal indication information, based on the first configuration information;
reporting the measurement information according to a result of determining whether the measurement information includes UE capability corresponding to the reference signal indication information.

170. The UE according to claim 169, wherein when reporting the measurement information according to a result of determining whether the UE capabilities corresponding to the at least two pieces of reference signal indication information are the same, the processor is configured to perform:
indicating in the measurement information, whether the UE capabilities corresponding to the at least two pieces of reference signal indication information are the same.

171. A network device, comprising: a transceiver, a memory, a processor and a computer program stored on the memory and executable on the processor; wherein the processor is used to read the computer program in the memory and perform the following operations:
transmitting first configuration information to UE; wherein the first configuration information is used to instruct the UE to perform measurement reporting related to UE capabilities;
receiving measurement information corresponding to the first configuration information reported by the UE.

172. The network device according to claim 171, wherein the measurement information includes at least one piece of reference signal indication information; the processor is used to read the computer program in the memory and perform the following operations:
when at least one piece of reference signal indication information included in the measurement information includes M pieces of at least one piece of reference signal indication information, the M pieces of reference signal indication information respectively correspond to different UE capabilities, and M is an integer greater than 1.

173. The network device according to claim 171, wherein the measurement information includes at least one piece of reference signal indication information, and the processor is used to read the computer program in the memory and perform the following operations:
when the measurement report is a group report, the measurement information includes at least one group of reference signal indication information; wherein each group of reference signal indication information includes at least one piece of reference signal indication information, and different pieces of reference signal indication information in the same group corresponds to different UE capabilities.

174. The network device according to claim 171, wherein the measurement information includes at least one piece of reference signal indication information, and the processor is used to read the computer program in the memory and perform the following operations:
when CSI resource configuration corresponding to reporting of the measurement information includes multiple CSI-RS resource sets and the measurement report is a group report, the measurement information includes at least one group of reference signal indication information; wherein different pieces of reference signal indication information in the same group corresponds to different UE capabilities, and different pieces of reference signal indication information in the same group corresponds to different CSI-RS resource sets.

175. The network device according to claim 171, wherein the first configuration information includes a first configuration indication used to indicate whether the measurement information includes UE capability corresponding to the reference signal indication information.

176. The network device according to claim 171, wherein the first configuration information includes a second configuration indication used to indicate that when the measurement information includes at least two pieces of reference signal indication information, whether UE capabilities corresponding to the at least two pieces of reference signal indication information are the same.

177. A signal transmission device, comprising:
a first receiving unit configured to receive first configuration information; wherein the first configuration information is used to instruct UE to perform measurement reporting related to UE capabilities;
a reporting unit configured to report measurement information based on the first configuration information.

178. The device according to claim 177, wherein the measurement information includes at least one piece of reference signal indication information; and the reporting the measurement information based on the first configuration information, includes:
reporting P pieces of reference signal indication information based on the first configuration information; wherein the P pieces of reference signal indication information respectively correspond to different UE capabilities, and the P is an integer greater than 1.

179. The device according to claim 177, wherein the measurement information includes at least one group of reference signal indication information; and the reporting the measurement information based on the first configuration information, includes:
reporting at least one group of reference signal indication information based on the first configuration information; wherein each group of reference signal indication information includes at least one piece of reference signal indication information, and different pieces of reference signal indication information in the same group corresponds to different UE capabilities.

180. The device according to claim 177, wherein the measurement information includes at least one piece of reference signal indication information; when CSI resource configuration corresponding to reporting of the measurement information includes multiple CSI-RS resource sets, the reporting the measurement information based on the first configuration information includes:
reporting at least one group of reference signal indication information based on the first configuration information; wherein different pieces of reference signal indication information in the same group corresponds to different UE capabilities, and different pieces of reference signal indication information in the same group corresponds to different CSI-RS resource sets.

181. The device according to claim 177, wherein the measurement information includes at least two pieces of reference signal indication information; and the reporting the measurement information based on the first configuration information, includes:
based on the first configuration information, determining whether UE capabilities corresponding to the at least two pieces of reference signal indication information are the same;
reporting the measurement information according to a result of determining whether the UE capabilities corresponding to the at least two pieces of reference signal indication information are the same.

182. The device according to claim 177, wherein the measurement information includes at least two pieces of reference signal indication information; and the reporting the measurement information based on the first configuration information, includes:
determining whether the measurement information includes UE capability corresponding to the reference signal indication information, based on the first configuration information;
reporting the measurement information according to a result of determining whether the measurement information includes UE capability corresponding to the reference signal indication information.

183. The device according to claim 182, wherein the reporting the measurement information according to a result of determining whether the UE capabilities corresponding to the at least two pieces of reference signal indication information are the same, includes:
indicating in the measurement information, whether the UE capabilities corresponding to the at least two pieces of reference signal indication information are the same.

184. A signal transmission device, comprising:
a transmission unit configured to transmit first configuration information to UE; wherein the first configuration information is used to instruct the UE to perform measurement reporting related to UE capabilities;
a second receiving unit configured to receive measurement information corresponding to the first configuration information reported by the UE.

185. The device according to claim 184, wherein the measurement information includes at least one piece of reference signal indication information; when at least one piece of reference signal indication information included in the measurement information includes M pieces of at least one piece of reference signal indication information, the M pieces of reference signal indication information respectively correspond to different UE capabilities, and M is an integer greater than 1.

186. The device according to claim 184, wherein the measurement information includes at least one piece of reference signal indication information; when the measurement report is a group report, the measurement information includes at least one group of reference signal indication information; wherein each group of reference signal indication information includes at least one piece of reference signal indication information, and different pieces of reference signal indication information in the same group corresponds to different UE capabilities.

187. The device according to claim 184, wherein the measurement information includes at least one piece of reference signal indication information;
when CSI resource configuration corresponding to reporting of the measurement information includes multiple CSI-RS resource sets and the measurement report is a group report, the measurement information includes at least one group of reference signal indication information; wherein different pieces of reference signal indication information in the same group corresponds to different UE capabilities, and different pieces of reference signal indication information in the same group corresponds to different CSI-RS resource sets.

188. The device according to claim 184, wherein the first configuration information includes a first configuration indication used to indicate whether the measurement information includes UE capability corresponding to the reference signal indication information.

189. The device according to claim 184, wherein the first configuration information includes a second configuration indication used to indicate that when the measurement information includes at least two pieces of reference signal indication information, whether UE capabilities corresponding to the at least two pieces of reference signal indication information are the same.

190. A processor-readable storage medium, comprising: a computer program stored thereon; wherein the computer program is used to cause a processor to perform the signal transmission method described in any one of claims 1 to 63.
